# EUROPEAN PATENT APPLICATION

(11) **EP 4 442 435 A1**
(43) Date of publication of application: **09.10.2024**
(21) Application number: 22921674.2
(22) Date of filing: 07.12.2022
(51) Int. Cl.: B29C 64/321, B29C 64/255

(54) **MATERIAL SUPPLY MECHANISM, TRAY ASSEMBLY, 3D PRINTER AND 3D PRINTING METHOD**

(30) Priority: 20.01.2022 CN 202210065928; 20.01.2022 CN 202210065932; 20.01.2022 CN 202210066731; 20.01.2022 CN 202210065929; 20.01.2022 CN 202220160879 U; 20.01.2022 CN 202220160214 U; 20.10.2022 CN 202211286645; 20.10.2022 CN 202211286724; 24.11.2022 CN 202223134944 U
(71) Applicant: Guangzhou Heygears IMC. Inc, Guangzhou, Guangdong 510663 (CN)
(72) Inventor: LUO, Ming, Guangzhou, Guangdong 510663 (CN); ZENG, Weibin, Guangzhou, Guangdong 510663 (CN); XING, Yongfeng, Guangzhou, Guangdong 510663 (CN); WAN, Xin, Guangzhou, Guangdong 510663 (CN); QU, Yang, Guangzhou, Guangdong 510663 (CN); GUO, Yu, Guangzhou, Guangdong 510663 (CN); SU, Xiangru, Guangzhou, Guangdong 510663 (CN); WU, Gangqiang, Guangzhou, Guangdong 510663 (CN)
(74) Representative: Casalonga
(86) International application number: PCT/CN2022/137335
(87) International publication number: WO 2023/138250

(57) **Abstract**

Disclosed are a material supply mechanism, a tray assembly, a 3D printer and a 3D printing method. The material supply mechanism is configured to add a printing material to a tray of the 3D printer, and includes: a conveying assembly including a storage body and a conveying member, the storage body is internally provided with a storage cavity, the storage cavity is configured to store the printing material, and the conveying member is arranged in the storage cavity; a transmission assembly connected to the conveying member in a transmission manner and configured to drive the conveying member to move in the storage cavity when driven; and an output assembly connected to the storage body and configured to guide the printing material out into the tray. The present invention improves in the related art that it is inconvenient to add a printing material for a 3D printer.

## Description

### Cross-Reference to Related Disclosure

The present invention claims priorities to and the benefits of Chinese Patent Application No. 202210065928.2, filed with the China National Intellectual Property Administration (CNIPA) on January 20, 2022 and entitled "material supply mechanism, 3D printer and method for processing material", Chinese Patent Application No. 202210065932.9, filed with the China National Intellectual Property Administration (CNIPA) on January 20, 2022 and entitled "manufacturing method for 3D object, and consumable assembly", Chinese Patent Application No. 202210066731.0, filed with the China National Intellectual Property Administration (CNIPA) on January 20, 2022 and entitled "3D printer", Chinese Patent Application No. 202210065929.7, filed with the China National Intellectual Property Administration (CNIPA) on January 20, 2022 and entitled "light-curing printer", Chinese Patent Application No. 202220160879.6, filed with the China National Intellectual Property Administration (CNIPA) on January 20, 2022 and entitled "forming platform, forming platform connecting mechanism, and 3D printer", Chinese Patent Application No. 202220160214.5, filed with the China National Intellectual Property Administration (CNIPA) on January 20, 2022 and entitled "3D printing tray and 3D printer", Chinese Patent Application No. 202211286645.7, filed with the China National Intellectual Property Administration (CNIPA) on January 20, 2022 and entitled "forming platform for light-curing 3D printing apparatus, and manufacturing method therefor", Chinese Patent Application No. 202211286724.8, filed with the China National Intellectual Property Administration (CNIPA) on January 20, 2022 and entitled "forming platform for 3D printing apparatus, and manufacturing method therefor", and Chinese Patent Application No. 202223134944.7, filed with the China National Intellectual Property Administration (CNIPA) on January 20, 2022 and entitled "liquid level measurement apparatus and 3D printer", which are hereby incorporated by reference in their entireties.

### Technical Field

The present invention relates to the technical field of three-dimensional (3D) printing, and in particular to a material supply mechanism, a tray assembly, a 3D printer and a 3D printing method.

### Background

An existing photocuring three-dimensional (3D) printer includes a forming platform, a tray and a light source. The light source projects light onto the tray with a transparent bottom, such that a light-curable material between the forming platform and the bottom of the tray is polymerized into a cured sheet, and the cured sheet is adhered to the forming platform. The forming platform moves away from the bottom of the tray, and the light source interruptedly or uninterruptedly projects the light onto the bottom of the tray, such that the light-curable material is cured layer by layer, and the stacked cured sheet is ultimately formed into a 3D solid-state print.

Most of existing liquid adding methods for 3D printing are manual, which wastes manpower and inaccurately controls a liquid addition amount. Moreover, a peristaltic pump may be used by existing methods to add liquid. However, a mechanical structure corresponding to such a liquid adding method is complex, which expands an apparatus size, increases apparatus cost and later maintenance cost, and causes laborious material replacement.

As can be seen from the above, there is a challenge in the related art that it is inconvenient to add a printing material for a 3D printer.

### Summary

A main objective of the present invention is to provide a material supply mechanism, a tray assembly, a 3D printer and a 3D printing method, so as to improve in the related art that it is inconvenient to add a printing material for a 3D printer.

In order to achieve the above objective, the present invention provides a material supply mechanism. The material supply mechanism is configured to add a printing material to a tray of a 3D printer, and includes: a conveying assembly including a storage body and a conveying member, the storage body is internally provided with a storage cavity, the storage cavity is configured to store the printing material, and the conveying member is arranged in the storage cavity; a transmission assembly connected to the conveying member in a transmission manner and configured to drive the conveying member to move in the storage cavity when driven; and an output assembly connected to the storage body and configured to deliver the printing material into the tray; a liquid level measuring mechanism is arranged on the tray, the liquid level measuring mechanism is configured to measure an amount of the printing material in the tray, and the material supply mechanism is configured to convey or stop conveying the printing material into the tray according to a measurement result of the liquid level measuring mechanism.

The present invention further provides a material supply mechanism. The material supply mechanism is configured to add a printing material to a tray of a 3D printer, and includes: a conveying assembly including a storage cavity and a conveying member, the storage cavity is configured to store the printing material, and the conveying member is arranged in the storage cavity and is configured to rotate when driven, so as to stir the printing material; and an output assembly configured to selectively convey the printing material from the storage cavity to the tray or stop conveying the printing material.

The present invention further provides a material supply mechanism. The material supply mechanism is configured to add a printing material to a tray of a 3D printer, and includes: a conveying assembly including a storage cavity and a conveying member, the storage cavity is configured to store the printing material, and the conveying member is arranged in the storage cavity and is configured to rotate when driven, so as to stir the printing material; and an output assembly including a discharge channel and a switching member, the discharge channel is in communication with the tray and the storage cavity, and the switching member is located in the discharge channel and is configured to open the discharge channel under the condition of bearing a pressure applied by the printing material from the storage cavity that is greater than or equal to a preset pressure, so as to convey the printing material to the tray, and to close the discharge channel under a condition of bearing the pressure applied by the printing material that is less than the preset pressure.

The present invention further provides a tray assembly. The tray assembly includes a tray and the material supply mechanism described above, the material supply mechanism is detachably or non-detachably connected to the tray.

The present invention further provides a 3D printer. The 3D printer includes: a tray configured to store a printing material; and the material supply mechanism described above, and the material supply mechanism is connected to the tray and is configured to add the printing material into the tray; or, includes the tray assembly described above.

The present invention further provides a 3D printing method. The 3D printing method is applied to the material supply mechanism described above, or the tray assembly described above, or the 3D printer described above, the 3D printer includes a driving apparatus, and the driving apparatus is connected to the material supply mechanism; and the 3D printing method includes: receiving a supply instruction; controlling the driving apparatus to rotate forwards according to the supply instruction, so as to convey the printing material to the tray from the material supply mechanism; and/or receiving a stirring instruction; and controlling the driving apparatus to rotate reversely according to the stirring instruction, so as to stir the printing material in the material supply mechanism.

The present invention further provides a 3D printing method. The 3D printing method is applied to a 3D printer including the material supply mechanism described above, the 3D printer further includes a liquid level measuring mechanism; and the 3D printing method includes: receiving a signal sent by the liquid level measuring mechanism indicating that a liquid level of the printing material in the tray is lower than a preset liquid level; controlling the conveying member to rotate, and controlling the output assembly to convey the printing material from the storage cavity to the tray; receiving a signal sent by the liquid level measuring mechanism indicating that the liquid level of the printing material in the tray is equal to or higher than the preset liquid level; and controlling the output assembly to stop convey the printing material from the storage cavity to the tray.

The present invention further provides a 3D printing method. The 3D printing method is applied to a 3D printer including the material supply mechanism described above, and the 3D printing method includes: receiving a supply instruction; controlling the conveying member to rotate according to the supply instruction, so as to enable a pressure applied by the printing material to the switching member to be greater than or equal to a preset pressure, such that the switching member opens the discharge channel to convey the printing material to the tray; and/or receiving a stirring instruction; and controlling the conveying member to rotate according to the supply instruction, so as to enable the pressure applied by the printing material to the switching member to be less than the preset pressure, such that the switching member closes the discharge channel to stir the printing material.

According to the material supply mechanism according to the present invention, a part of the printing material is pre-stored by means of the storage body, and under a condition that the material supply mechanism is assembled to the 3D printer, the spiral conveying member is able to convey the printing material in the storage body to the tray by means of the output assembly in a manner of driving the spiral conveying member to rotate by means of the transmission assembly, thereby achieving the purpose of adding the printing material, and improving in the related art that a printing material is inconvenient to add.

Moreover, under a condition of arranging the switching member on the discharge member, the spiral conveying member presses the printing material to be conveyed towards the switching member in the process of conveying the printing material by the spiral conveying member, such that the printing material applies the pressure to the switching member, and under a condition of bearing the pressure applied by the printing material by the switching member that is greater than or equal to the preset pressure, the switching member is opened, thereby conveying the printing material. Correspondingly, the switching member is closed under a condition of bearing the pressure applied by the printing material to the switching member that is less than the preset pressure; and the spiral conveying member is not able to convey the printing material even if the spiral conveying member rotates when the switching member is closed, and in this case, the printing material is stirred, thereby preventing the printing material from precipitating. Therefore, the material supply mechanism according to the present invention is able to not only timely add the printing material to the tray, so as to improve convenience of adding the printing material, thereby improving in the related art that it is inconvenient to add a printing material, but also prevent the printing material from precipitating in the storage cavity.

### Brief Description of the Drawings

The accompanying drawings constituting a part of the description serve to provide a further understanding of the present invention, and the embodiments of the present invention and the description of the embodiments serve to explain the present invention and are not to be construed as unduly limiting the present invention. In the figures:
Fig. 1 is a schematic diagram of a 3D printer according to an embodiment of the present invention;
Fig. 2 is a partial schematic structural diagram of a 3D printer according to an embodiment of the present invention;
Fig. 3 is a schematic structural diagram of a material supply mechanism according to an embodiment of the present invention;
Fig. 4 is a schematic structural diagram of a material supply mechanism according to an embodiment of the present invention;
Fig. 5 is a schematic exploded structural diagram of a material supply mechanism according to an embodiment of the present invention;
Fig. 6 is a schematic exploded structural diagram of a locking member according to an embodiment of the present invention;
Fig. 7 is a partial view of a material supply mechanism in a first state according to an embodiment of the present invention;
Fig. 8 is a partial view of a locking assembly in a first state according to an embodiment of the present invention;
Fig. 9 is a partial view of a locking assembly in a second state according to an embodiment of the present invention;
Fig. 10 shows different positions of a first blocking portion in a first channel and a second channel according to an embodiment of the present invention;
Fig. 11 is a partial view of a material supply mechanism in a second state according to an embodiment of the present invention;
Fig. 12 is a partial view of a material supply mechanism in a third state according to an embodiment of the present invention;
Fig. 13 is a schematic enlarged structural diagram of a position B in Fig. 7;
Fig. 14 is a schematic structural diagram of a locking body according to an embodiment of the present invention;
Figs. 15-16 are other partial schematic structure diagrams of a of a 3D printer according to an embodiment of the present invention;
Fig. 17 is a schematic enlarged structural diagram of a position A in Fig. 14;
Fig. 18 is a partial schematic structure diagram of a 3D printer according to another embodiment of the present invention;
Fig. 19 is a schematic structural diagram of a material supply mechanism fitting with a tray according to another embodiment of the present invention;
Fig. 20 is a schematic structural diagram of a 3D printer according to an embodiment of the present invention;
Fig. 21 is a sectional view when a release film placed on a tray is tightened by a film tightening member arranged on a mounting seat according to an embodiment of the present invention;
Fig. 22 shows a tray moving towards a fixed position in a first direction and a mounting seat moving towards a preset position in a second direction according to an embodiment of the present invention;
Fig. 23 is a partial schematic structure diagram of a 3D printer according to an embodiment of the present invention;
Fig. 24 is a partial schematic structure diagram of a 3D printer according to another embodiment of the present invention;
Fig. 25 is a partial schematic structure diagram of a 3D printer when a tray is located at a fixed position according to an embodiment of the present invention;
Fig. 26 is a first partial schematic structure diagram of a 3D printer according to an embodiment of the present invention;
Fig. 27 is a second partial schematic structure diagram of a 3D printer according to an embodiment of the present invention;
Fig. 28 is an enlarged view of a position C in Fig. 27;
Fig. 29 is a schematic diagram of a pin unblocked in a clamping groove according to an embodiment of the present invention;
Fig. 30 shows movement of a pin after the pin enters a clamping groove and a concave surface abuts against a first protrusion according to an embodiment of the present invention;
Fig. 31 shows a pin cooperates with a clamping groove to lock a tray at a fixed position according to an embodiment of the present invention;
Fig. 32 shows a pin cooperates with a clamping groove to unlock a tray from a fixed position according to an embodiment of the present invention;
Fig. 33 is a schematic structural diagram of a 3D printer according to an embodiment of the present invention;
Fig. 34 is a schematic structural diagram of a first type of a platform connecting mechanism according to an embodiment of the present invention;
Fig. 35 is a schematic structural diagram of a second type of a platform connecting mechanism according to an embodiment of the present invention;
Fig. 36 is a sectional view of a platform connecting mechanism according to an embodiment of the present invention;
Fig. 37 is a schematic structural diagram of a forming platform from a first perspective according to an embodiment of the present invention;
Fig. 38 is a schematic structural diagram of a forming platform from a second perspective according to an embodiment of the present invention;
Fig. 39 is a schematic structural diagram of a first type of a limiting member according to an embodiment of the present invention;
Fig. 40 is a schematic structural diagram of a second type of a limiting member according to an embodiment of the present invention;
Fig. 41 is a schematic structural diagram of a third type of a limiting member according to an embodiment of the present invention;
Fig. 42 is a schematic diagram of a 3D printer when a tray and a forming platform are not mounted according to an embodiment of the present invention;
Fig. 43 is a schematic diagram of a 3D printer after a tray and a forming platform are mounted according to an embodiment of the present invention;
Fig. 44 is a schematic structural diagram of a tray according to an embodiment of the present invention;
Fig. 45 is a flow chart of a 3D printing method according to an embodiment of the present invention;
Fig. 46 is a schematic diagram of connection between a driving apparatus and a control unit according to an embodiment of the present invention;
Fig. 47 is a flow chart of a 3D printing method according to another embodiment of the present invention;
Fig. 48 is a step diagram of a 3D printing method according to an embodiment of the present invention;
Fig. 49 is a schematic diagram of a scene when S01 is performed in a 3D printing method according to an embodiment of the present invention;
Fig. 50 is a schematic structural diagram of connection between a forming platform and a 3D object when supports are provided according to an embodiment of the present invention;
Fig. 51 is a sub-step diagram of S02 in a 3D printing method according to an embodiment of the present invention;
Fig. 52 is a schematic diagram of a scene when S21 is performed in a 3D printing method according to an embodiment of the present invention;
Fig. 53 is a schematic diagram of a scene when S22 is performed in a 3D printing method according to an embodiment of the present invention;
Fig. 54 is a schematic diagram of a scene when S03 is performed in a 3D printing method according to an embodiment of the present invention;
Fig. 55 is a schematic diagram of a scene when the assembly in Fig. 50 performs S03;
Fig. 56 is an overall schematic structural diagram of a liquid level measuring mechanism in a 3D printer according to an embodiment of the present invention;
Fig. 57 is an overall schematic structural diagram of a liquid level measuring mechanism according to an embodiment of the present invention;
Fig. 58 is an overall schematic structural diagram of a liquid level measuring mechanism under a condition that two sensitive elements are provided according to an embodiment of the present invention;
Fig. 59 is a partial enlarged view of a measurement assembly in a liquid level measuring mechanism under a condition that two sensitive elements are provided according to an embodiment of the present invention;
Fig. 60 is a schematic structural diagram of a measurement assembly in a liquid level measuring mechanism under a condition that a plurality of sensitive elements are provided according to an embodiment of the present invention;
Fig. 61 is a schematic diagram of a coating used on a forming platform according to an embodiment of the present invention;
Fig. 62 is a schematic structural diagram of a forming platform of a 3D printer according to an embodiment of the present invention;
Fig. 63 shows a forming surface of the forming platform in Fig. 61;
Fig. 64 shows a back surface of the forming platform in Fig. 61; and
Fig. 65 is a sectional view of the forming platform in Fig. 64 along a line H-H.

The above figures include the following reference numerals:
10, 3D printer; 11, tray; 12, forming platform; 13, light source; 14, material supply mechanism; 15, rack; 16, mounting seat; 17, lifting mechanism; 18, film tightening member; 19, control unit; 20, driving apparatus; 21, centrifuging apparatus; 22, spraying apparatus; 23, rotating apparatus; 24, curing lamp; 25, supporting structure; 26, identifier; 27, release film; 100, conveying assembly; 110, storage body; 111, storage cavity; 120, conveying member; 121, transmission shaft; 122, conveying portion; 200, transmission assembly; 300, output assembly; 310, discharge member; 311, discharge channel; 320, switching member; 330, housing; 331, outlet; 340, locking assembly; 341, locking member; 3411, first blocking portion; 34111, first clamping groove; 34112, first sealing member; 3412, second blocking portion; 34121, second groove; 34122, second sealing member; 3413, connecting body; 3414, operation portion; 3415, snapping member; 34151, second connecting portion; 34152, snapping portion; 342, locking body; 3421, switchable cavity; 34211, first channel; 301, adjustable area; 302, flow guide area; 303, restriction portion; 34212, second channel; 304, first limiting portion; 305, second limiting portion; 34213, third channel; 3422, discharge cavity; 3423, guide-out portion; 34231, guide groove; 3424, engaging member; 34241, first connecting portion; 34242, engaging portion; 500, air inlet valve; 1000, 3D object;
600, stopper; 610, elastic member; 620, first positioning member; 630, second positioning member; 640, positioning groove; 641, bottom wall; 642, top wall; 643, connecting wall; 644, first leveling protrusion; 645, second leveling protrusion; 646, first positioning protrusion; 647, second positioning protrusion; 648, entering section; 649, locking section; 650, pin; 651, flat surface; 652, concave surface; 700, guiding part; 710, first sliding rail; 720, second sliding rail; 730, first sliding block, 740, second sliding block, a, first direction; b, second direction;
28, platform connecting mechanism; 101, platform body; 102, restricting portion; 103, connecting seat; 130, limiting member; 140, connecting member; 104, first sliding connecting portion; 105, second sliding connecting portion; 112, first positioning portion; 123, second positioning portion; 131, limiting block; 113, limiting groove; 132, elastic element; 133, elastic sheet; 134, first magnetic member; 135, second magnetic member; 136, third magnetic member;
29, shell; 291, light channel; 293, shielding member; 296, printing compartment; 297, window; 298, closing door; 30, environment adjusting apparatus; 299, electrical equipment compartment; 411, tray body; 415, cover body; 417, second fitting member; 422, first fitting member; 423, elastic supporting member;
124, through hole; 125, forming surface; 126, back surface; 802, measurement assembly; 8021, measurement chip; 8022, measurement component; and 803, processing assembly.

### Detailed Description of the Embodiments

It should be noted that embodiments in the present invention and features in the embodiments can be combined with one another if there is no conflict. The present invention will be described in detail below with reference to the accompanying drawings in conjunction with the embodiments.

It should be pointed out that all technical and scientific terms used in the present invention have the same meanings as commonly understood by those of ordinary skill in the art to which the present invention belongs unless otherwise indicated.

In the present invention, directional words used, such as "upper, lower, top, and bottom", are usually for the direction shown in the accompanying drawings, or for the component itself in the upright, vertical, or gravity direction, unless otherwise stated to the contrary; and similarly, for the convenience of understanding and description, "inside and outside" refers to the inside and outside relative to the contour of each component itself, but the above directional words are not intended to limit the present invention.

Apparently, the embodiments described above are merely some embodiments rather than all embodiments of the present invention. On the basis of the embodiments in the present invention, all other embodiments obtained by those of ordinary skill in the art without making creative efforts should fall within the scope of protection of the present invention.

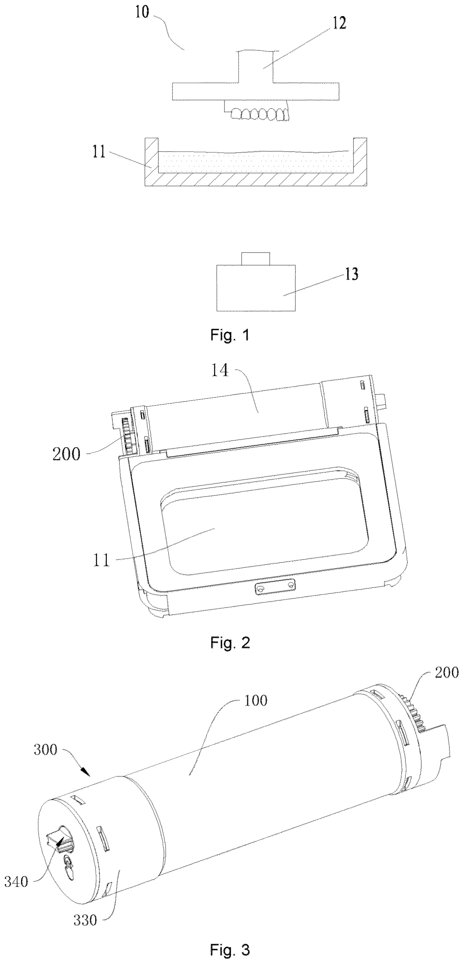

With reference to Fig. 1, the present invention provides a three-dimensional (3D) printer 10. The 3D printer 10 is configured to print and form a three-dimensional model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12, and a light source 13. The forming platform 12 is located on a top side of the tray 11. The tray 11 is configured to carry the printing material for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheet stacked on the forming platform 12 layer by layer is ultimately formed into the 3D object.

In a process of continuous printing by the 3D printer 10, the printing material in the tray 11 is continuously consumed. When the printing material in the tray 11 is consumed to a certain amount, the printing material needs to be added to the tray 11 to ensure effective 3D printing. However, in the related art, add of the printing material is usually executed manually. That is, the printing material is manually added to the tray 11 by an operator, which does not allow accurately and timely adding the printing material and accurately controlling an amount of the printing material required for adding. In addition, in the related art, the printing material is added to the tray 11 by means of a peristaltic pump, but a mechanical structure of the peristaltic pump is complex, such that an apparatus size is large, thereby increasing apparatus cost and later maintenance cost; and a material is also troublesome to replace. In other words, there is the technical chanllege in the related art that it is inconvenient to add the printing material to a tray 11. A material supply mechanism 14 is connected to the tray 11, and is configured to add the printing material to the tray 11.

When facing the above chanlleges, further, with reference to Figs. 1-4, the present invention provides a material supply mechanism 14 and a 3D printer 10 with the material supply mechanism 14.

The material supply mechanism 14 includes a conveying assembly 100, a transmission assembly 200 and an output assembly 300. The conveying assembly 100 is configured to store and convey the printing material, the transmission assembly 200 is connected to the conveying assembly 100, and the transmission assembly 200 is connected to a driving apparatus 20, such that power is transmitted to the conveying assembly 100 under a condition that the driving apparatus 20 operates, so as to provide the power for the conveying assembly 100 to convey the printing material. The output assembly 300 is connected to the conveying assembly 100, and the output assembly 300 is configured to guide the printing material conveyed by the conveying assembly 100 to the tray 11. It should be noted that the driving apparatus 20 connected to the transmission assembly 200 is an actuator on the 3D printer 10 that provides power. In other words, the transmission assembly 200 is able to be in transmission fit with the driving apparatus 20 on the 3D printer 10 under a condition that the material supply mechanism 14 is assembled to the 3D printer 10, such that power is provided for the conveying assembly 100. Certainly, an additional driving apparatus 20 is also able to be used and is connected to the transmission assembly 200 to provide power for the conveying assembly 100.

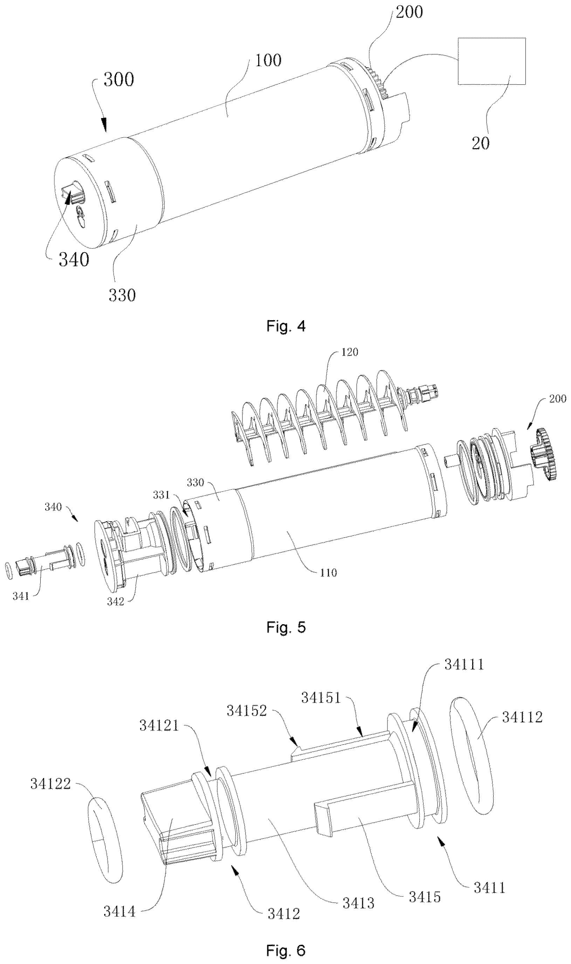

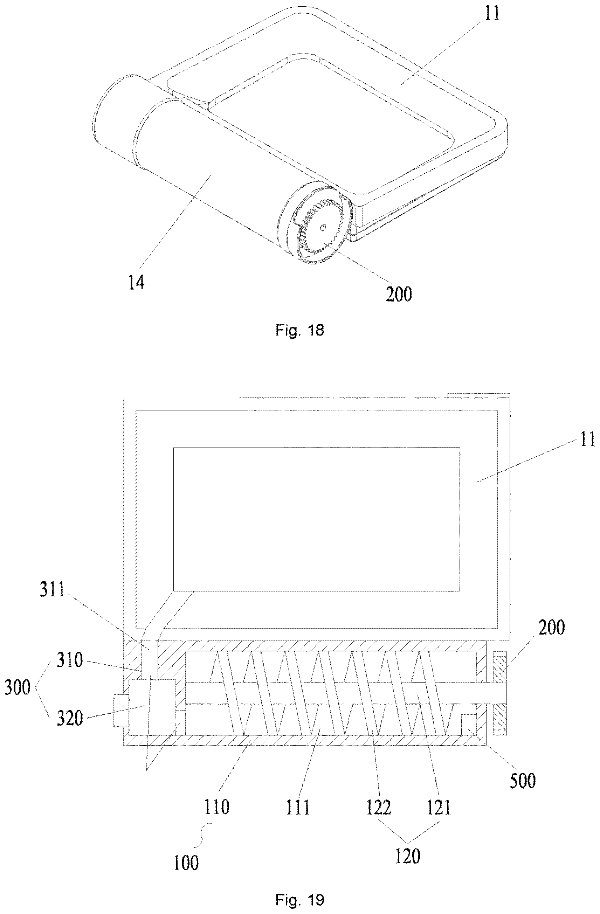

In some embodiments, with reference to Figs. 5 and 19, a conveying assembly 100 includes a storage body 110 and a conveying member 120. A storage cavity 111 is provided inside the storage body 110, and the storage cavity 111 is configured to pre-store the printing material. In a process of production of the material supply mechanism 14, a certain amount of printing material is pre-stored in the storage cavity 111, such that the material supply mechanism 14 is able to add the printing material to the tray 11 while the material supply mechanism 14 is assembled to the 3D printer 10. In addition, the conveying member 120 is rotatably arranged inside the storage cavity 111, and under a condition that the conveying member 120 rotates relative to the storage body 110, the conveying member 120 is able to convey the printing material to the tray 11, and further control a conveying amount of the printing material according to the number of times or progress of rotation, so as to quantitatively convey the printing material. The transmission assembly 200 is connected to the conveying member 120, and the transmission assembly 200 transmits power to the conveying member 120, so as to drive the conveying member 120 to rotate in the storage cavity 111.

In some embodiments, the storage body 110 is connected to the tray 11, such that the storage cavity 111 is conveniently in communication with an accommodating space inside the tray 11, thereby guiding the printing material into the tray 11 conveniently. It should be understood that in some other embodiments of the present invention, the material supply mechanism 14 is also connected to the tray 11 by means of other components. For example, components of the output assembly 300 are connected to the tray 11. For another example, components of the transmission assembly 200 are connected to the tray 11. In addition, in other embodiments of the present invention, the material supply mechanism 14 is detachably connected to the tray 11, thereby conveniently detaching the material supply mechanism 14 from the tray 11 for replacement. It should be understood that a part detachably connected to the tray 11 is the storage body 110 in the material supply mechanism 14, or a component of the output assembly 300, or a component of the transmission assembly 200. Certainly, connection between the material supply mechanism 14 and the tray 11 may also be a non-detachable connection, which is not specifically defined herein.

It should be further noted that the present invention further provides a tray assembly as shown in Fig. 2. The tray assembly includes the material supply mechanism 14 and the tray 11. Similarly, the material supply mechanism 14 is detachably connected or non-detachably connected to the tray 11. In an application scene, both the material supply mechanism 14 and the tray 11 are disposable. In this case, after the printing material in the material supply mechanism 14 is used up, the material supply mechanism 14 and the tray 11 are directly discarded together without later cleaning and maintenance. In another application scene, one of the material supply mechanism 14 and the tray 11 is disposable, and the other one of the material supply mechanism 14 and the tray 11 is reusable. In this case, connection between the material supply mechanism 14 and the tray 11 is configured as detachable connection, such that the material supply mechanism 14 is detached from the tray 11 after use of the disposable member is completed, so as to discard the disposable member. Further, in some embodiments, the tray assembly further includes a liquid level measuring mechanism configured to measure a liquid level of the printing material in the tray 11.

It should be noted that in a process of manufacturing the storage body 110, in order to conveniently pre-store a certain amount of the printing material into the storage cavity 111, a feeding port (not shown) in communication with the storage cavity 111 is provided on the storage body 110, and the printing material is added into the storage cavity 111 by means of the feeding port in a manufacturing process. Certainly, after a certain amount of the printing material is pre-stored into the storage cavity 111 by means of the feeding port, the feeding port is sealed, thereby achieving the purpose of pre-storing a certain amount of the printing material in the storage cavity 111, and further preventing the printing material from leaking out.

In some embodiments, with reference to Fig. 19, the conveying member 120 includes a transmission shaft 121 and a conveying portion 122, the conveying portion 122 is arranged on a periphery of the transmission shaft 121 along a spiral path. Moreover, one end of the transmission shaft 121 extends out of the storage body 110 to be connected to the transmission assembly 200. When the driving apparatus 20 drives the transmission assembly 200 to rotate, the transmission assembly 200 transmits power to the transmission shaft 121, and the transmission shaft 121 drives the conveying portion 122 to rotate. The printing material is conveyed in an axial direction of the transmission shaft 121 under a condition that the conveying portion 122 rotates. Further, an amount of the printing material to be conveyed is determined or limited according to the number of cycles or the number of turns of rotations of the conveying portion 122 arranged along the spiral path, so as to quantitatively convey the printing material.

It should be noted that in some embodiments, the driving apparatus 20 is configured to rotate forwards and reversely, and the conveying member 120 rotates forwards under a condition that the driving apparatus 20 rotates forwards; and the conveying member 120 rotates reversely under a condition that the driving apparatus 20 rotates reversely. In the embodiment of the present invention, the conveying member 120 conveys the printing material to the tray 11 under the condition that the conveying member 120 rotates forwards. Certainly, a conveying direction of the printing material when the conveying member 120 rotates forwards is opposite that of the printing material when the conveying member 120 rotates reversely.

On this basis, in some embodiments, the transmission assembly 200 is connected to the driving apparatus 20 in a transmission manner to achieve transmission fit between the transmission assembly 200 and the driving apparatus 20. Specifically, an end portion of the transmission shaft 121 extending out of the storage body 110 is connected to the driving apparatus 20 in a transmission manner.

In some embodiments, a gear is formed at the end portion of the transmission assembly 200 extending out of the storage body 110, and another gear adapted to the above gear is arranged on an output shaft of the driving apparatus 20, such that the driving apparatus 20 is in transmission fit with the transmission shaft 121 by means of fit between the gears. In other embodiments, the transmission assembly 200 is further connected to the driving apparatus 20 in a transmission manner by means of a worm gear, a gear, a gear ring, a belt pulley, etc.

In an embodiment, with reference to Figs. 2-5, 7 and 19, the output assembly 300 includes a housing 330 and a locking assembly 340. The housing 330 is connected to the storage body 110. It should be noted that the housing 330 is internally provided with an accommodating space for mounting the locking assembly 340, and the accommodating space is in communication with the storage cavity 111. The locking assembly 340 includes a locking body 342 and a locking member 341. The locking body 342 is arranged inside the housing 330, and the locking body 342 is provided with a discharge cavity 3422 and a switchable cavity 3421 that are in communication with each other. The discharge cavity 3422 is configured to guide the printing material out, and the switchable cavity 3421 is in communication with the storage cavity 111. The locking member 341 is movably arranged inside the switchable cavity 3421 to selectively open or close the switchable cavity 3421, so as to selectively establish or cut off communication between the switchable cavity 3421 and the discharge cavity 3422. When the locking member 341 moves in the switchable cavity 3421 to achieve the purpose of establishing communication of the switchable cavity 3421, the purpose of guiding the printing material out of the storage cavity 111 is achieved by means of the switchable cavity 3421 and the discharge cavity 3422. When the locking member 341 moves in the switchable cavity 3421 to close the switchable cavity 3421, conveying of the printing material is interrupted, thereby preventing the printing material from leaking out, and preventing the printing material from being mistakenly guided out due to misoperation of the material supply mechanism 14.

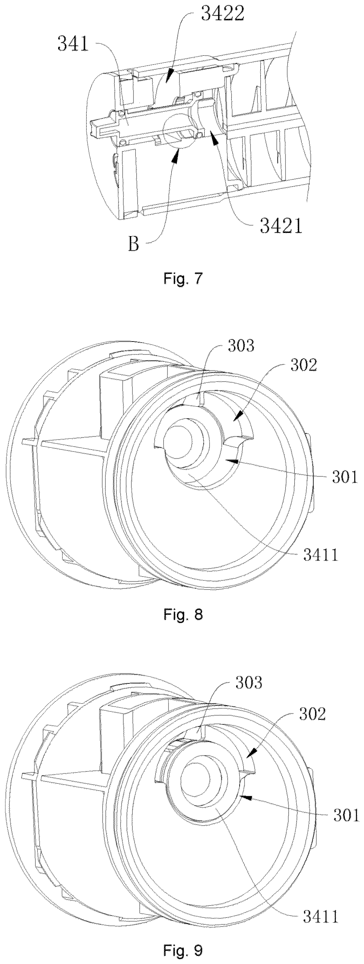

In some embodiments, with reference to Figs. 7-10, the switchable cavity 3421 includes a first channel 34211 and a second channel 34212 that are in communication with each other, an inner diameter of the first channel 34211 is greater than an inner diameter of the second channel 34212; and one of the first channel 34211 and the second channel 34212 is in communication with the discharge cavity 3422, and the other one of the first channel 34211 and the second channel34212 is in communication with the storage cavity 111. In other words, the printing material in the storage cavity 111 is conveyed to the discharge cavity 3422 through the first channel 34211 and the second channel 34212, such that the printing material is guided out of the material supply mechanism 14 via the discharge cavity 3422. In addition, with reference to Fig. 6, the locking member 341 is provided with a first blocking portion 3411, the first blocking portion 3411 is movably assembled into the switchable cavity 3421, and closes the second channel 34212 when at least partially entering the second channel 34212, and is configured to enter the first channel 34211 to establish communication between the first channel 34211 and the second channel 34212.

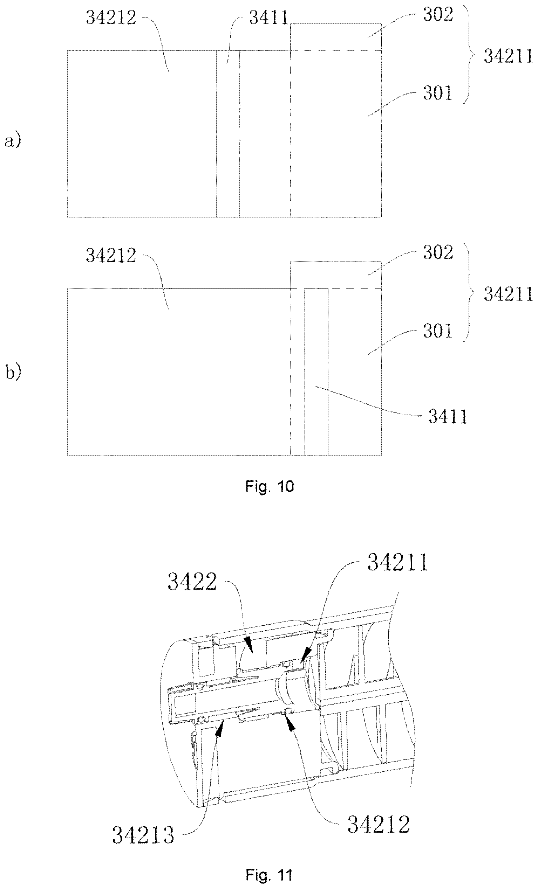

It should be noted that under the condition that the first blocking portion 3411 is located inside the second channel 34212, an outer peripheral edge of the first blocking portion 3411 is in contact with an inner peripheral wall of the second channel 34212, such that the purpose of closing the second channel 34212 is achieved, thereby closing the switchable cavity 3421. In this case, the printing material is not able to be transferred from the switchable cavity 3421 to the discharge cavity 3422, as shown in part a) of Fig. 10. On this basis, since the first channel 34211 has the inner diameter greater than that of the second channel 34212, a gap is formed between the outer peripheral edge of the first blocking portion 3411 and the inner peripheral wall of the first channel 34211 under a condition that the first blocking portion 3411 moves into the first channel 34211. Under a condition that the first blocking portion 3411 is completely separated from the second channel 34212, the first channel 34211 is in communication with the second channel 34212 by means of the gap formed between the outer peripheral edge of the first blocking portion 3411 and the inner peripheral wall of the first passage 34211, so as to open the switchable cavity 3421, as shown in part b) of Fig. 10. In this case, the printing material is transferred from the switchable cavity 3421 to the discharge cavity 3422.

In some embodiments, with reference to Fig. 6, in order to improve sealing performance of the first blocking portion 3411 when closing the second channel 34212, a periphery of the first blocking portion 3411 is provided with a first clamping groove 34111, and the first clamping groove 34111 is annularly provided. In addition, a first sealing member 34112 is arranged in the first clamping groove 34111, the first sealing member 34112 is annular, the first sealing member 34112 is inserted into the first clamping groove 34111, and an outer peripheral edge of the first sealing member 34112 may protrude from the first clamping groove 34111. Therefore, under a condition that the first blocking portion 3411 enters the second channel 34212, the first sealing member 34112 is pressed between the outer peripheral wall of the first clamping groove 34111 and the inner peripheral wall of the second channel 34212, thereby improving sealing performance between the first blocking portion 3411 and the inner peripheral wall of the second channel 34212, and ensuring that the first blocking portion 3411 closes the second channel 34212.

With reference to Figs. 8, 9 and 10, the first channel 34211 being in communication with the storage cavity 111, and the second channel 34212 being in communication with the discharge cavity 3422 will be described as an example. The first blocking portion 3411 may move in the switchable cavity 3421 in a reciprocating manner, so as to selectively enter the first channel 34211 or the second channel 34212. When the first blocking portion 3411 completely enters the first channel 34211, communication between the first channel 34211 and the second channel 34212 is established. When the first blocking portion 3411 at least partially enters the second channel 34212, the first blocking portion 3411 closes the second channel 34212.

In some embodiments, the first channel 34211 includes an adjustable area 301 and a flow guide area 302. The adjustable area 301 is located at one end of the second channel 34212 in an axial direction of the second channel 34212, and the adjustable area 301 has a diameter the same as the inner diameter of the second channel 34212. The flow guide area 302 is arranged around the adjustable area 301. The first blocking portion 3411 enters the adjustable area 301 under a condition that the first blocking portion 3411 moves out of the second channel 34212. In this case, the gap formed between the outer peripheral edge of the first blocking portion 3411 and the inner peripheral wall of the first channel 34211 defines the flow guide area 302. When the first blocking portion 3411 completely enters the adjustable area 301, the flow guide area 302 is in communication with the second channel 34212 by means of part of the adjustable area 301, so as to open the switchable cavity 3421.

The above adjustable area 301 has a diameter the same as the inner diameter of the second channel 34212, which indicates that an internal space of the adjustable area 301 has a shape the same as that of an internal space of the second channel 34212. In other words, the internal space of the second channel 34212 has the shape the same as that of the internal space of the adjustable area 301. That is, vertical projections of the second channel 34212 and the adjustable area 301 on a section of the second channel 34212 or the first channel 34211 coincide with each other, and both are adapted to the first blocking portion 3411.

It should be noted that the internal space of the flow guide area 302 is in communication with the internal space of the adjustable area 301, such that the flow guide area 302 and the adjustable area 301 are regarded as two spaces formed by dividing the same space. On this basis, a stepped structure is provided by the inner peripheral wall of the first channel 34211 and the inner peripheral wall of the second channel 34212.

It should be understood that the setting mode of the switchable cavity 3421 is formed in other modes. For example, the locking body 342 is provided with a channel for allowing the first blocking portion 3411 to move, and the channel has a shape adapted to an outer contour of the first blocking portion 3411, such that the outer peripheral edge of the first blocking portion 3411 abuts against the inner peripheral wall of the channel to close the channel when the first blocking portion 3411 slides in the channel. On the basis of the channel, a groove body is provided at one end of the channel close to the storage cavity 111, the internal space of the groove body is in communication with an internal space of the channel, and the groove body is provided in a radial direction of the channel.

In some embodiments, the flow guide area 302 is cambered. It should be noted that when a space enclosed by the first channel 34211 and the adjustable area 301 is substantially cylindrical, the flow guide area 302 is cambered around the adjustable area 301. That is, vertical projections of the second channel 34212 and the adjustable area 301 to a section of the second channel 34212 or the first channel 34211 coincide with each other, a vertical projection of the flow guide area 302 to the section of the first channel 34211 is externally connected to a vertical projection of the adjustable area 301 to the section of the first channel 34211, and is a non-concentric ring having an inner circle partially coinciding with an outer circle thereof. On this basis, the adjustable area 301 is provided with a partial peripheral wall, such that a positioning effect, a limiting effect and a guiding effect are provided for the first blocking portion 3411 by means of the inner peripheral wall of the movable area 301 under a condition that the first blocking portion 3411 moves into the adjustable area 301, thereby ensuring that the first blocking portion 3411 moves in the first channel 34211 and the second channel 34212 in a reciprocating manner. It should be understood that in some other embodiments of the present invention, the first channel 34211 and the adjustable area 301 also enclose a space of other shapes, such as a prism shape or an elliptic cylinder shape.

In some other embodiments, in order to prevent the first blocking portion 3411 from being separated from the adjustable area 301 and entering the flow guide area 302, the locking assembly 340 further includes a restriction portion 303 under a condition that the first blocking portion 3411 enters the first channel 34211, the restriction portion 303 is arranged in the flow guide area 302. The restriction portion 303 is connected to an inner peripheral wall of the flow guide area 302, or the restriction portion 303 is connected to the stepped structure formed by the first channel 34211 and the second channel 34212. The restriction portion 303 is configured to abut against an outer periphery of the first blocking portion 3411 when the first blocking portion 3411 enters the first channel 34211, so as to provide a restriction effect and a guiding effect for the first blocking portion 3411, restrict the first blocking portion 3411 in the adjustable area 301 to prevent the first blocking portion 3411 from falling into the flow guide area 302, and also provide the guiding effect for the first blocking portion 3411. On the basis of arrangement of the restriction portion 303, in some other embodiments, the flow guide area 302 may be shaped as annular, such that the flow guide area 302 surrounds the outer periphery of the adjustable area 301, such that a plurality of restriction portions 303 are arranged to prevent the first blocking portion 3411 from falling into the flow guide area 302, and ensure that the first blocking portion 3411 stably moves in the adjustable area 301.

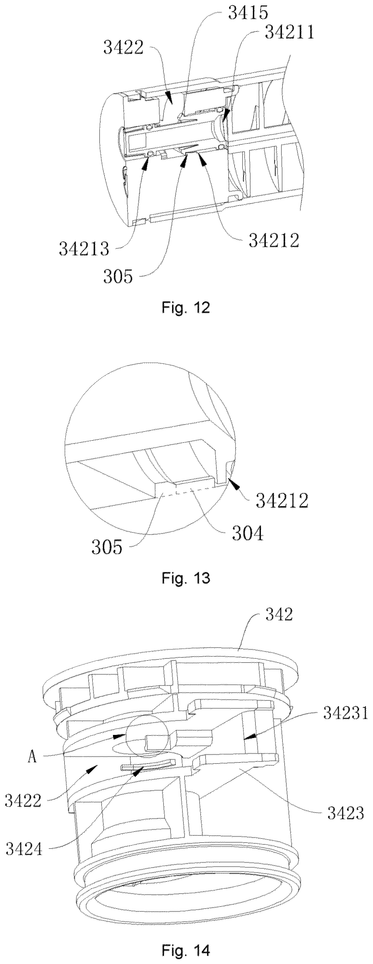

In an embodiment, with reference to Fig. 13, in order to prevent the first blocking portion 3411 from being separated from the switchable cavity 3421, the locking body 342 further includes a first limiting portion 304. The first limiting portion 304 protrudes into a second channel 34212 and is located at one end of the second channel 34212 away from the first channel 34211. The first limiting portion 304 is configured to abut against the first blocking portion 3411. In other words, after the first blocking portion 3411 moves from the first channel 34211 and enters the second channel 34212, the first blocking portion 3411 abuts against the first limiting portion 304 before the first blocking portion is separated from the second channel 34212, and stops the first blocking portion 3411 from continuing moving, so as to prevent the first blocking portion 3411 from being separated from the second channel 34212. The moving stroke of the first blocking portion 3411 is also shortened, such that the switchable cavity 3421 is conveniently opened or closed by means of the first blocking portion 3411.

In some embodiments, the first limiting portion 304 is annular. Thus, when the first blocking portion 3411 reaches to the first limiting portion 304, the first limiting portion 304 provides a full resisting effect on the first blocking portion 3411, so as to prevent a gap from being formed between the first blocking portion 3411 and the second channel 34212 due to deflection of the first blocking portion 3411. In other words, stability of fit between the first blocking portion 3411 and the second channel 34212 is ensured.

It should be understood that in other embodiments, the first limiting portion 304 also has other shapes. For example, the first limiting portion 304 is cambered. For another example, the first limiting portion 304 is configured as a plurality of protruding blocks protruding from a peripheral wall of the second channel 34212, the plurality of protruding blocks are spaced apart, and the plurality of protruding blocks form a ring shape.

With reference to Figs. 6, 11 and 12, the switchable cavity 3421 further includes a third channel 34213. The third channel 34213 is provided at one side of the locking body 342 away from the storage cavity 111, and one, in communication with the discharge cavity 3422, of the first channel 34211 and the second channel 34212 is in communication with the third channel 34213. It should be noted that under a condition that the first channel 34211 is in communication with the storage cavity 111, the third channel 34213 is in communication with the second channel 34212, and the third channel 34213 and the first channel 34211 are located at two ends of the second channel 34212 in the axial direction respectively. The locking member 341 is further provided with a second blocking portion 3412, and the second blocking portion 3412 is located at one end of the locking member 341 away from the first blocking portion 3411. The second blocking portion 3412 is in sliding fit with the third channel 34213 and is configured to close the third channel 34213. It should be noted that after the second blocking portion 3412 closes the third channel 34213, the printing material is not able to flow out at one side of the third channel 34213 away from the second channel 34212.

In some embodiments, with reference to Fig. 6, in order to improve sealing performance of the second blocking portion 3412 when closing the third channel 34213, a second groove 34121 is provided on an outer periphery of the second blocking portion 3412, and a second sealing member 34122 is arranged in the second groove 34121. The second sealing member 34122 is annular, and the second sealing member 34122 is inserted into the second groove 34121, and an outer peripheral edge of the second sealing member 34122 protrudes out of the second groove 34121. Under a condition that the second blocking portion 3412 is located inside the third channel 34213, the second sealing member 34122 is pressed between an outer peripheral wall of the second groove 34121 and an inner peripheral wall of the third channel 34213, thereby improving sealing performance between the second sealing member 34122 and a peripheral wall of the third channel 34213.

In the embodiment of the present invention, the locking member 341 includes the first blocking portion 3411, the second blocking portion 3412 and a connecting body 3413. The connecting body 3413 is columnar, and the first blocking portion 3411 and the second blocking portion 3412 are connected to two ends of the connecting body 3413 respectively. The connecting body 3413 has a radial size less than that of the second blocking portion 3412, and a gap is formed between the connecting body 3413 and the peripheral wall of the second channel 34212. Under a condition that communication between the first channel 34211 and the second channel 34212 is established, the printing material is guided into the discharge cavity 3422 from the gap formed between the connecting body 3413 and the peripheral wall of the second channel 34212.

In some embodiments, the third channel 34213 has an inner diameter less than that of a second channel 34212. Thus, the first blocking portion 3411 is further prevented from entering the third channel 34213. It should be understood that in other embodiments, the third channel 34213 also has an inner diameter greater than or equal to that of the second channel 34212.

In addition, in order to conveniently operate the locking member 341, in some embodiments, the locking member 341 further includes an operation portion 3414. The operation portion 3414 is connected to the connecting body 3413 and is located at one side of the second blocking portion 3412 away from the first blocking portion 3411, and the operating portion 3414 is exposed at one side of the locking body 342 away from the storage body 110. After an acting force is applied to the operation portion 3414, the first blocking portion 3411, the connecting body 3413 and the second blocking portion 3412 may be driven to move, such that communication of the switchable cavity 3421 is established or closed by means of the first blocking portion 3411. Since the second blocking portion 3412 is able to close the third channel 34213, the printing material is prevented from leaking out from the third channel 34213.

In some embodiments, the switchable cavity 3421 extends along a straight line, and the locking member 341 is configured to move in an extending direction of the switchable cavity 3421 to selectively establish or close communication of the switchable cavity 3421. In other words, extending directions of the first channel 34211, the second channel 34212 and the third channel 34213 are located on the same straight line, such that the first blocking portion 3411, the second blocking portion 3412 and the connecting body 3413 are conveniently driven to move by means of the operation portion 3414.

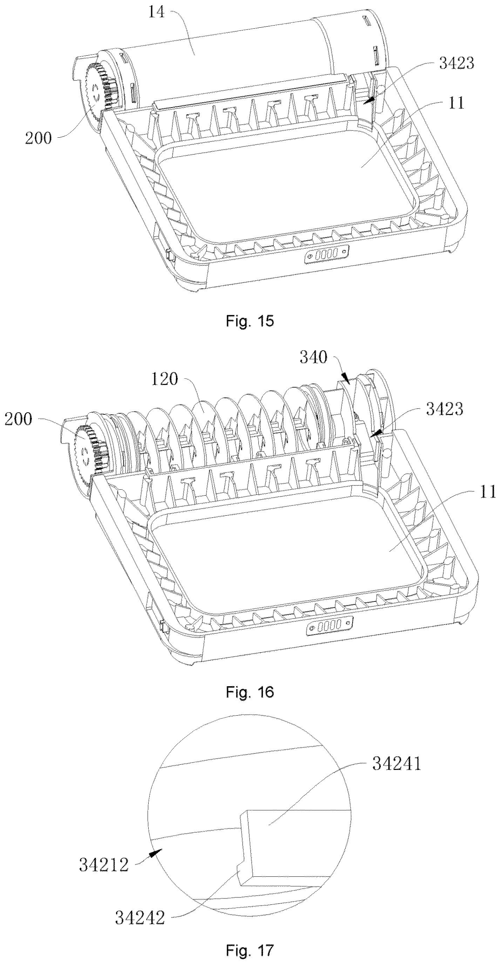

On this basis, with reference to Figs. 6, 12, 14 and 17, in order to prevent mistaken guide-out of the printing material caused by misoperation, the locking body 342 is provided with an engaging member 3424 in the discharge cavity 3422. A snapping member 3415 adapted to the engaging member 3424 is provided on the locking member 341. The snapping member 3415 is connected to the engaging member 3424 in a snap-fit manner to prevent the locking member 341 from opening the switchable cavity 3421. In addition, the locking member 341 may rotate, when the switchable cavity 3421 is closed, so as to connect the snapping member 3415 to the engaging member 3424 in a snap-fit manner, or release the snapping member 3415 from the engaging member 3424.

It should be noted that when the snapping member 3415 is connected to the engaging member 3424 in a snap-fit manner, even if a force in an extending direction of the switchable cavity 3421 is applied to the locking member 341, the locking member 341 is not able to move for opening the switchable cavity 3421 due to a restriction effect of a snap-fit connection of the snapping member 3415 and the engaging member 3424. The locking member 341 is able to establish or close communication of the switchable cavity 3421 by applying a force in the above manner after the snap-fit connection between the snapping member 3415 and the engaging member 3424 is released. Therefore, under a condition that the locking member 341 closes the switchable cavity 3421, movement of the locking member 341 may be limited by means of snap-fit of the snapping member 3415 and the engaging member 3424, thereby preventing the situation of mistaken guide-out of the printing material caused by misoperation of the locking member 341 and thus opening of the switchable cavity 3421.

In addition, rotation of the locking member 341 means that the locking member 341 rotates around an axis of the locking member 341 as a rotation central axis, such that the snapping member 3415 provided at a periphery of the locking member 341 rotates. In a process of rotation of the locking member 341, the first blocking portion 3411 and the second blocking portion 3412 rotate synchronously. In order to facilitate rotation of the first blocking portion 3411 and the second blocking portion 3412 along with the locking member 341, the first channel 34211, the adjustable area 301 and the third channel 34213 are substantially cylindrical.

Under a condition that the locking member 341 closes the switchable cavity 3421, the snapping member 3415 and the engaging member 3424 connect together in a snap-fit manner or release the snap-fit connection by means of rotation of the locking member 341. Under a condition that the locking member 341 open the switchable cavity 3421, the locking member 341 has moved by a certain distance in the extending direction of the switchable cavity 3421, such that the snapping member 3415 and the engaging member 3424 are spaced apart. In this case, the snapping member 3415 and the engaging member 3424 are not able to be connected in a snap-fit manner even if the locking member 341 rotates. In other words, when the switchable cavity 3421 is open and the printing material is supplied, the rotation of the locking member 341 and thus the rotation of the snapping member 3415 toward the engaging member 3424 will not close the switchable cavity 3421 or disturb supply of the printing material.

In some embodiments, the engaging member 3424 includes an engaging portion 34242 and a first connecting portion 34241. The first connecting portion 34241 extends in the extending direction of the switchable cavity 3421, one end of the first connecting portion 34241 is connected to an inner wall of the discharge cavity 3422, the other end of the first connecting portion 34241 is connected to the engaging portion 34242, and the engaging portion 34242 is arranged at an included angle relative to the first connecting portion 34241. The snapping member 3415 includes a snapping portion 34152 and a second connecting portion 34151. One end of the second connecting portion 34151 is connected to the connecting body 3413 of the locking member 341, the other end of the second connecting portion 34151 is connected to the snapping portion 34152, and the snapping portion 34152 is arranged at an included angle relative to the second connecting portion 34151. The snapping portion 34152 is configured to be connected to the engaging portion 34242 in a snap-fit manner. Specifically, an included angle structure formed between the snapping portion 34152 and the second connecting portion 34151 are restricted to an included angle structure formed between the engaging portion 34242 and the first connecting portion 34241 to achieve the snap-fit.

It should be understood that in other embodiments, setting of the first connecting portion 34241 is omitted, and the engaging portion 34242 directly protrudes on an inner peripheral wall of the second channel 34212. In addition, since the second channel 34212 is directly in communication with the discharge cavity 3422, a part of the second channel 34212 is also regarded as a part of the discharge cavity 3422, and on this basis, it is considered that the engaging member 3424 is arranged on the inner peripheral wall of the discharge cavity 3422.

It should be noted that the mode in which the locking member 341 rotates to connect the snapping member 3415 to the engaging member 3424 in a snap-fit manner is roughly as follows: the first blocking portion 3411 moves away from the first channel 34211, such that the first blocking portion 3411 abuts against the first limiting portion 304, and in a process of movement, the snapping portion 34152 passes over the engaging portion 34242 and moves to a position corresponding to a snap-fit space formed by the engaging portion 34242 and the first connecting portion 34241. Then, an acting force is applied to the operation portion 3414 to rotate the locking member 341, such that the snapping portion 34152 rotates into the snap-fit space, and in this case, the snapping portion 34152 is in snap-fit with the engaging portion 34242, such that the locking member 341 is entirely prevented from moving towards the first channel 34211 and opening the switchable cavity 3421, thereby achieving the purpose of "locking". When it is required to open the switchable cavity 3421, an acting force is applied to the operation portion 3414, such that the locking member 341 rotates as a whole, and the snapping portion 34152 rotates out of the snap-fit space, such that the snapping portion 34152 is removed from the engaging portion 34242. In this case, the locking member 341 is forced to move towards the first channel 34211 as a whole until the first blocking portion 3411 moves into the first channel 34211 to establish communication between the first channel 34211 and the second channel 34212, such that the printing material is guided out by means of the switchable cavity 3421 and the discharge cavity 3422. That is, the purpose of "unlocking" is accomplished.

Furthermore, with reference to Figs. 12 and 13, in order to prevent the conveying member 120 from being affected by an excessive movement distance of the locking member 341 towards the first channel 34211, in some embodiments, the locking body 342 further includes a second limiting portion 305, the second limiting portion 305 is arranged inside the switchable cavity 3421 and protrudes from an inner peripheral wall of the switchable cavity 3421. When the locking member 341 opens the switchable cavity 3421, the second limiting portion 305 is configured for abutting against the snapping member 3415 to limit movement of the locking member 341. The second limiting portion 305 is arranged on an inner peripheral wall of the second channel 34212, so as to abut against the snapping portion 34152 under a condition that the locking member 341 moves towards the first channel 34211 and communication between the first channel 34211 and the second channel 34212 is established, thereby preventing the locking member 341 from continuing moving away from the second channel 34212. It should be noted that setting of the second limiting portion 305 provides a positioning effect for the locking member 341. In other words, in a process that the locking member 341 moves towards the first channel 34211, whether the locking member 341 moves in place is determined according to whether the snapping portion 34152 abuts against the second limiting portion 305.

In some embodiments, the first limiting portion 304 and the second limiting portion 305 are the same structure. For example, the first limiting portion 304 and the second limiting portion 305 are integrally formed. Certainly, the first limiting portion 304 and the second limiting portion 305 are also arranged respectively.

In addition, with reference to Figs. 5, 14, 15 and 16, in order to conveniently guide the printing material out, in some embodiments, a guide-out portion 3423 protrudes from the locking body 342; the guide-out portion 3423 is provided with a guide groove 34231, and the guide groove 34231 is in communication with the discharge cavity 3422; the housing 330 is provided with an outlet 331; and the guide-out portion 3423 extends through the outlet 331 to the outside of the housing 330 to guide the printing material out. Under a condition that the printing material is conveyed from the storage cavity 111, through the switchable cavity 3421, to the discharge cavity 3422, the printing material is guided out by means of the guide groove 34231 of the guide-out portion 3423, so as to conveniently convey the printing material into the tray 11. In addition, the provision of the outlet 331 on the housing 330 conveniently corresponds to an inlet of the tray 11, thereby conveniently mounting the material supply mechanism 14.

In another embodiment, the setting mode of the output assembly 300 is also different. For example, with reference to Figs. 18 and 19, the output assembly 300 includes a discharge member 310 and a switching member 320. The discharge member 310 is connected to the storage body 110, and the discharge member 310 is further configured to connect to the tray 11, such that the discharge member 310 conveniently guides the printing material into the tray 11, so as to add the printing material. The discharge member 310 is provided with the discharge channel 311 in communication with the storage cavity 111. The printing material in the storage cavity 111 enters the discharge channel 311 to enter the tray 11 under a guiding effect of the discharge channel 311. Under a condition that the conveying member 120 rotates, the printing material in the storage cavity 111 enters the discharge channel 311 and is guided out to the tray 11 by means of the discharge channel 311, such that the printing material in the tray 11 is added. The switching member 320 is connected to the discharge member 310, the switching member 320 is arranged in the discharge channel 311, and the switching member 320 is configured to selectively open or close the discharge channel 311. The switching member 320 opens the discharge channel 311 when the printing material needs to be added, so as to guide the printing material into the tray 11 by means of the discharge channel 311. Certainly, the switching member 320 is able to close the discharge channel 311 when adding the printing material is not required.

In some embodiments, the mode that the discharge member 310 guides the printing material into the tray 11 is various. For example, as shown in Fig. 19, a guiding channel (not shown) is arranged on the tray 11, and the guiding channel is connected to a space of the tray 11 configured to carry the printing material; and the discharge channel 311 is in communication with the guiding channel under a condition that the storage body 110 is connected to the tray 11, such that the printing material is guided into the guiding channel by means of the discharge channel 311, and the purpose of adding the printing material to the tray 11 is achieved.

It should be noted that in some embodiments, the switching member 320 is a normally closed switch. In other words, in general, the switching member 320 closes a discharge channel 311, and in this case, the switching member 320 is at least partially located inside the discharge channel 311, so as to achieve the purpose of closing the discharge channel 311. On this basis, the switching member 320 makes contact with the printing material in the discharge channel 311 under a condition of closed switching member 320. Therefore, the conveying member 120 presses the printing material to enter the discharge channel 311 under a condition that the conveying member 120 rotates, such that the printing material applies a pressure to the switching member 320. In the present invention, the switching member 320 is able to selectively open or close the discharge channel 311 according to the pressure applied by the printing material. For example, in some embodiments, the switching member 320 opens the discharge channel 311 under a condition that the pressure applied by the printing material reaches a preset pressure, and the switching member 320 further closes the discharge channel 311 when the pressure applied by the printing material is less than the preset pressure. In some embodiments, the conveying member 120 conveys the printing material into the discharge channel 311 under a condition that the conveying member 120 rotates forwards.

It should be noted that under a condition that the printing material in the storage cavity 111 is sufficient, an acting force applied by the printing material to the switching member 320 depends on a rotation speed of the conveying member 120. Under a condition that the conveying member 120 rotates forwards, the higher a rotation speed of the conveying member 120 is, the greater a pressure applied by the printing material to the switching member 320 is. In addition, the printing material, when the conveying member 120 rotates reversely, has a conveying direction opposite that of the printing material when the conveying member 120 rotates forwards. In other words, the printing material is conveyed towards a direction away from the switching member 320 under the condition that the conveying member 120 rotates reversely. In this case, the printing material substantially applies no pressure to the switching member 320. In some embodiments, under a condition that the driving apparatus 20 rotates forwards at a preset operation speed, the driving apparatus 20 drives the conveying member 120 to rotate at the preset speed, and a pressure applied by the printing material to the switching member 320 is a preset pressure. In other words, under a condition that the driving apparatus 20 rotates forwards at the operation speed lower than the preset speed, the pressure applied by the printing material to the switching member 320 is less than the preset pressure. Certainly, the pressure applied by the printing material to the switching member 320 is less than the preset pressure under a condition that the driving apparatus 20 rotates reversely.

On the basis of the content described above, the mode in which the material supply mechanism 14 according to the present invention conveys the printing material is roughly as follows: when the printing material in the tray 11 needs to be added, the driving apparatus 20 is controlled to rotate forwards at an operation speed greater than or equal to the preset speed, such that the pressure applied by the printing material to the switching member 320 is greater than or equal to the preset pressure, and the switching member 320 opens the discharge channel 311, such that the purpose of conveying the printing material into the tray 11 by means of the discharge channel 311 is achieved, and the printing material is added into the tray 11. Under the condition that the printing material in the tray 11 is sufficient, i.e., under the condition that the printing material does not need to be added into the tray 11, the driving apparatus 20 is controlled to rotate forwards at an operation speed less than the preset speed, or the driving apparatus 20 is controlled to rotate reversely, such that the pressure applied by the printing material to the switching member 320 is less than the preset pressure, and the switching member 320 is able to automatically close the discharge channel 311, thereby stopping conveying the printing material into the tray 11. Certainly, under a condition that the switching member 320 is closed and the conveying member 120 keeps rotating, the conveying member 120 is able to stir the printing material in the storage cavity 111 by rotating, thereby prevent the printing material from standing in the storage cavity 111 for a long time to form precipitation.

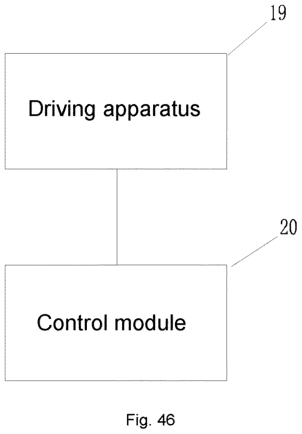

In addition, the 3D printer 10 further includes a liquid level measuring mechanism. The liquid level measuring mechanism is arranged inside the tray 11, and a liquid level of the printing material in the tray 11 is measured by means of the liquid level measuring mechanism. With reference to Fig. 46, the material supply mechanism 14, the tray assembly or the 3D printer 10 further includes a control unit 19. The control unit 19 is connected to the driving apparatus 20. In addition, the control unit 19 is further electrically connected to the liquid level measuring mechanism, and is configured to control operation of the driving apparatus 20 when the liquid level measuring mechanism measures that the liquid level of the printing material in the tray 11 is lower than a preset liquid level, so as to convey the printing material into the tray 11. In other words, the liquid level measuring mechanism monitors whether the printing material in the tray 11 is sufficient, and the liquid level measuring mechanism does not trigger the control unit 19 to control operation of the driving apparatus 20 under a condition that the printing material is sufficient. If the liquid level measuring mechanism measures that the printing material in the tray 11 is insufficient, the control unit 19 is triggered to control operation of the driving apparatus 20, thereby automatically and timely adding the printing material to the tray 11.

It should be noted that in some embodiments, at least part of a liquid level measuring mechanism is arranged inside an accommodating space of the tray 11. In other words, the liquid level measuring mechanism directly makes contact with the printing material, thereby measuring the liquid level of the printing material. It should be understood that in some other embodiments of the present invention, the liquid level measuring mechanism also measures the printing material in the tray 11 in other modes. For example, the liquid level measuring mechanism is arranged on an outer side of the tray 11, and the liquid level measuring mechanism monitors a liquid level of the printing material inside the tray 11 by scanning. The liquid level measuring mechanism described above scans the liquid level as follows: the tray 11 is made of a transparent material, in this case, even if the liquid level measuring mechanism is arranged on the outer side of the tray 11, the liquid level measuring mechanism also scans and monitors the liquid level of the printing material inside the tray 11. In some embodiments, the liquid level measuring mechanism is arranged at an opening of the accommodating space of the tray 11, such that the liquid level measuring mechanism scans from the opening of the accommodating space towards an interior of the accommodating space, thereby achieving the purpose of monitoring the liquid level of the printing material in the tray 11.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate the printing material, and the printing material is configured for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment may include a structure in the 3D printer in the embodiment described above, and may not not include the above structure, which is not defined herein.

Further, in the embodiment, the 3D printer 10 further includes the liquid level measuring mechanism. The liquid level measuring mechanism is provided to the tray 11, and a liquid level of the printing material in the tray 11 is measured by means of the liquid level measuring mechanism. In an embodiment, the 3D printer 10 further includes a control unit 19. The liquid level measuring mechanism is electrically connected to the control unit 19.

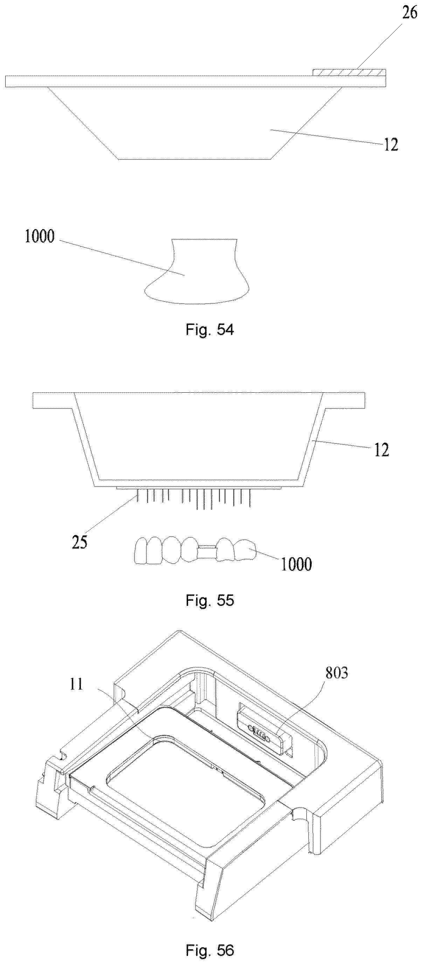

Specifically, in some embodiments, with reference to Figs. 56-60, the liquid level measuring mechanism includes a measurement assembly 802 and a processing assembly 803 that are detachably connected. The measurement assembly 802 is arranged on the tray 11 and extends into a liquid storage area of the tray 11, so as to cooperate with the processing assembly 803 to measure the liquid level of the printing material in the tray 11.

The liquid storage area of the tray 11 is configured for accommodating the printing material. As shown in Figs. 56-57, the processing assembly 803 is provided with a contact, to which a contact provided by the measurement assembly 802 matches, and they connect with each other by, such as, insertion or touch, so as to detachably connect and electrically connect the measurement assembly 802 to the processing assembly 803. Certainly, they can be connected by means of an elastic sheet, which is not defined herein.

Further, the measurement assembly 802 includes a corresponding measurement circuit (e.g., a measurement chip 8021) and a measurement component 8022. The measurement component 8022 is a special electronic element capable of acutely sensing certain physical, chemical or biological information and converting the information into electrical information, and is connected to the measurement chip 8021. An outer wall of the measurement chip is provided with the contact for connecting to the processing assembly 803, and the measurement component extends into the liquid storage area of the tray 801, so as to make contact with the printing material accommodated in the tray 11. The measurement assembly 802 includes one or more measurement components 8022, such as one, two, three and four, which is not defined herein.

It should be noted that when the liquid level measuring mechanism measures the liquid level of the printing material in the tray 11, a change of the liquid level of the printing material affects a medium between the measurement components in the measurement assembly 802. Specifically, the measurement component 8022 is a probe, and a change of the liquid level of the printing material affects a medium between the probes (that is, the medium is changed from air to the printing material, which results in a changed dielectric coefficient), thereby changing an equivalent capacitance of the probe, and the change of capacitance is converted into a change of direct current voltage by means of the measurement chip. Further, since the processing assembly 803 is detachably connected to the measurement assembly 802, and the processing assembly 803 is connected to the control unit 19, voltage converted by the measurement assembly 802 is acquisited by means of the control unit 19, and an actual liquid level height is reflected by means of the voltage, so as to complete measurement of a liquid level height of the printing material. Therefore, in a measurement process, the measurement assembly 802 directly makes contact with the printing material for measurement, and the processing assembly 803 connected to the measurement assembly 802 achieves subsequent processing.

Further, since the measurement assembly 802 is detachably connected to the processing assembly 803, the measurement assembly 802 is detached and replaced along with the tray 11 after each measurement is completed, so as to improve mutual contamination between different printing materials, and a user does not need to clean and maintain the measurement assembly 802, thereby greatly facilitating use by the user. In an application scene, the measurement component 8022 is a metal probe having relatively low cost, thereby bringing great convenience to the user without increasing much use cost. Further, the tray 11 is a disposable tray 11, and the measurement assembly 802 and the tray 11 are discarded together after use.

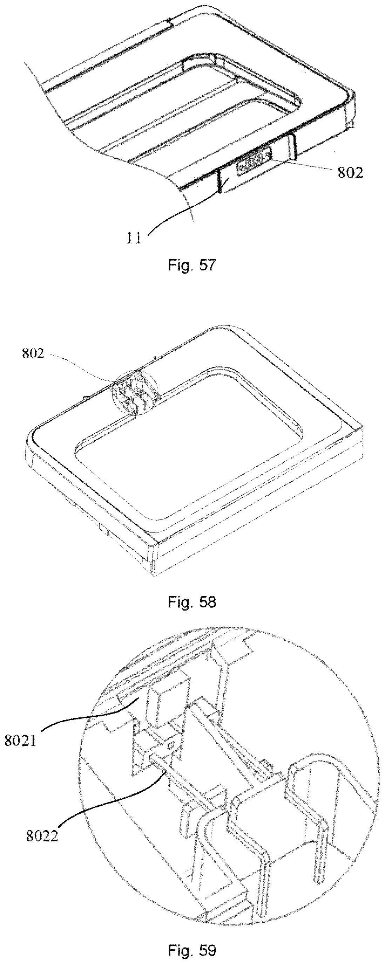

With reference to Figs. 58-60, in some embodiments, the measurement assembly 802 includes the measurement chip 8021 and a plurality of measurement components 8022.

The measurement chip 8021 is arranged on the tray 11 or other components of the 3D printer apart from the tray 11, and each of the plurality of measurement component 8022 is detachably connected or fixedly connected to the measurement chip 8021 after being mounted in place, and each of the plurality of measurement component 8022 extends into the liquid storage area of the tray 11. The measurement chip 8021 is configured to preliminarily process an electrical signal transmitted by the measurement component 8022.

The measurement chip 8021 is arranged in the tray 11. For example, the measurement chip 8021 is arranged on a side wall of the tray 11, as shown in Fig. 2.

Specifically, the side wall of the tray 11 is provided with an opening, and a 3D printer body is provided with a contact (at the processing assembly 803 as shown in Fig. 56), and the contact is connected to the processing assembly 803, which permits that the measurement chip 8021 is electrically connected to the processing assembly 803 after a contact of the measurement chip 8021 makes contact with the contact of the measurement chip.

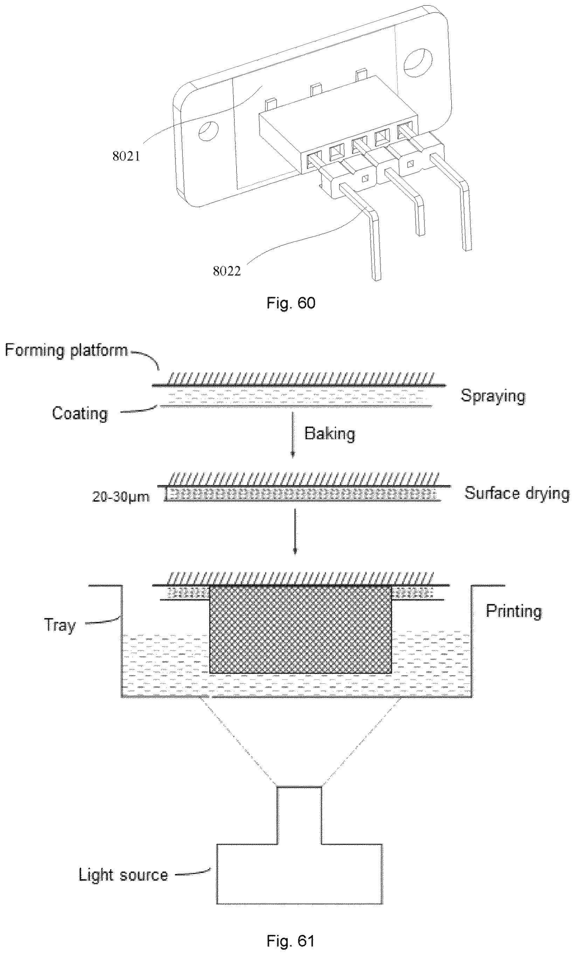

In an embodiment, the measurement component 8022 includes a probe. As shown in Figs. 59 and 60, each probe is provided with a bending portion, and the bending portion of each probe is vertical to an inner bottom wall of the tray 11, such that the bending portion of the probe makes contact with the printing material in the tray 11. In order to enable the probe to make contact with the printing material accommodated in the tray 11, the probe is also set as other structures, which is not defined herein.

In some embodiments, since each of the plurality of measurement component 8022 in a measurement assembly 802 is detachably connected or fixedly connected to a measurement chip 8021, when the measurement chip 8021 is arranged on other components of a 3D printer apart from the tray 11, the measurement component 8022 is detached from the measurement chip 8021 and replaced after each measurement is completed, or when the measurement chip 8021 is arranged on the tray 11, the measurement assembly 802 as a whole is detached from the processing assembly 803 and replaced.

Further, in order to avoid inaccurate measurement caused by the influence of a temperature, a material, etc. when the liquid level is measured by using the two measurement components 8022, a distance between one end of a third measurement component 8022 for making contact with the printing material and a bottom wall of the tray 11 is set to be equal to the highest liquid level value of the tray 11. When the liquid level rises and the printing material starts to cover the third measurement component 8022, equivalent capacitance formed by the measurement component 8022 is greatly changed. When the capacitance is greatly changed, it is indicated that the liquid level of the printing material has been increased to an upper limit level, and in this case, adding of the printing material may be stopped.

It should be understood that in other embodiments, arrangement of the liquid level measuring mechanism is also omitted.

As described above, according to the material supply mechanism 14 and the 3D printer 10 with the material supply mechanism 14 according to the present invention, a part of the printing material is pre-stored in the storage body 110, and the conveying member 120 conveys the printing material from the storage body 110 to the tray 11 by means of the discharge member 310 under a condition that the transmission assembly 200 drives the conveying member 120 to rotate, thereby achieving the purpose of adding the printing material. Certainly, the conveying member 120 presses the printing material to be conveyed towards the switching member 320 under the condition that the conveying member 120 conveys the printing material, such that the printing material applies a pressure to the switching member 320. Under a condition of a pressure applied by the printing material to the switching member 320 is greater than or equal to a preset pressure, the switching member 320 is opened to convey the printing material. Correspondingly, the switching member 320 is closed under a condition of the pressure applied by the printing material to the switching member 320 is less than the preset pressure; and the conveying member is not able to convey the printing material even if the conveying member 120 rotates under a condition that the switching member 320 is closed, and in this case, the printing material is stirred, thereby preventing the printing material from precipitating. Therefore, the material supply mechanism 14 according to the present invention can not only timely add the printing material to the tray 11, so as to improve convenience of adding the printing material, thereby improving in the related art that it is inconvenient to add the printing material, but also prevent the printing material from precipitating in the storage cavity 111.

In some embodiments, the switching member 320 is a one-way valve, and the printing material moves to the tray 11 from the storage cavity 111 under a condition that the switching member 320 opens the discharge channel 311. In other words, when the switching member 320 is opened, the printing material is able to move to the tray 11 from the storage cavity 111, but the printing material is not able to flow reversely to the storage cavity 111 from the tray 11. Thus, reverse flow of the printing material is prevented, and conveying efficiency of the printing material is improved. In addition, since the switching member 320 is the one-way valve, the printing material in the tray 11 is prevented from being guided out under the condition that the conveying member 120 rotates reversely.

In some embodiments, the discharge member 310 is connected to the storage body 110 and is located at one end of the storage cavity 111 in an axial direction, and correspondingly, the transmission assembly 200 is located at the other end of the storage cavity 111 in the axial direction, thereby facilitating arrangement of the transmission assembly 200 and connection to the driving apparatus 20. On this basis, with reference to Fig. 19, the material supply mechanism 14 further includes an air inlet valve 500. The air inlet valve 500 is arranged inside the storage cavity 111 and is located at one end of the storage cavity 111 away from the discharge member 310, and the air inlet valve 500 is configured to allow external air flow to enter the storage cavity 111. In other words, an air pressure in the storage cavity 111 is balanced by means of the air inlet valve 500, such that the air pressure in the storage cavity 111 is roughly in balance with an external atmospheric pressure, and the printing material in the storage cavity 111 is conveniently discharged.

In some embodiments, the air inlet valve 500 is a one-way valve. On this basis, the printing material is further prevented from leaking out of the air inlet valve 500 under a condition that the air pressure in the storage cavity 111 is balanced by means of the air inlet valve 500.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate the printing material, and the printing material is configured for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment may include components in the 3D printer in the embodiment described above, and may not include the above components, which is not defined herein.

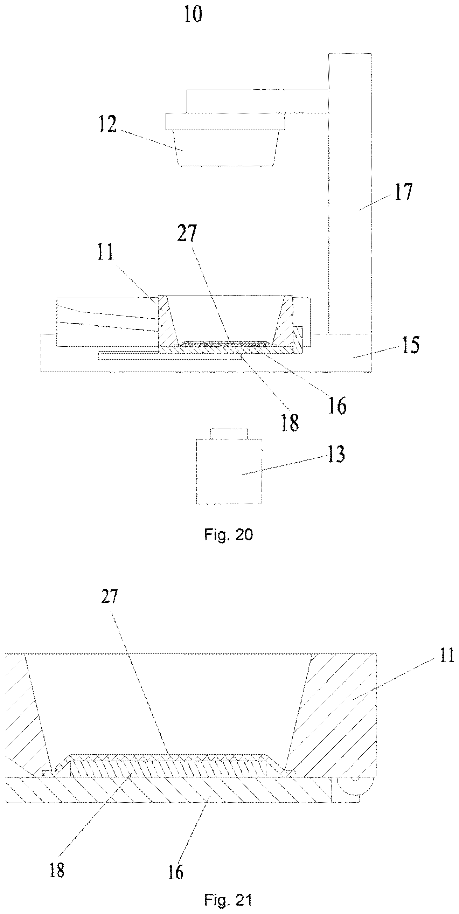

Further, with reference to Figs. 20, 21 and 22, in the embodiment, the 3D printer 10 further includes a rack 15, a mounting seat 16 and a film tightening member 18. The mounting seat 16 is mounted on the rack 15, and the film tightening member 18 is arranged on the mounting seat 16. The tray 11 includes a release film 27, and is configured to be movable relative to the rack 15 such that the release film 27 arranged on the tray 11 makes contact with and becomes tightened by the film tightening member 18 arranged on the mounting seat 16.

With reference to Fig. 20, the 3D printer 10 further includes a lifting mechanism 17. The lifting mechanism 17 is arranged on the rack 15, the forming platform 12 is arranged on the lifting mechanism 17, and the lifting mechanism 17 is configured to drive the forming platform 12 to approach or move away from the tray 11. When the lifting mechanism 17 drives the molding platform 12 to approach the tray 11, the printing material arranged in the tray 11 is located between the release film 27 and the forming platform 12, and cured and adhered to the forming platform 12 under irradiation of the light source 13. Then, the lifting mechanism 17 drives the forming platform 12 to move away from the tray 11. The light source 13 interruptedly or uninterruptedly projects the light source 13 towards a transparent bottom of the tray 11 while the lifting mechanism 17 drives the forming platform 12 to approach or move away from the tray 11, so as to achieve layer-by-layer curing.

The film tightening member 18 is selected according to requirements. For example, the film tightening member 18 is any of: a transparent plate member, an annular frame body, four protruding parts, two protruding strips oppositely arranged, a display screen. The film tightening member 18 is shaped and constructed in a manner that the release film 27 for the film tightening member 18 is jacked up by the film tightening member 18 and a jacked portion of the release film 27 is maintained in a flat state. Further, the mode in which the film tightening member 18 is arranged on the mounting seat 16 is selected according to requirements. In the embodiment, the film tightening member 18 is welded to the mounting seat 16. Certainly, in other embodiments, the film tightening member 18 is connected to the mounting seat 16 by means of a fastener such as a screw, or the film tightening member 18 is connected to the mounting seat 16 in a snap-fit manner, which is not specifically defined herein.

The light source 13 is also selected according to requirements. In an embodiment, the light source 13 is a liquid crystal display (LCD) light source unit, the film tightening member 18 arranged on the mounting seat 16 is an LCD display screen. In other embodiments, the light source 13 is further a laser light source for stereo lithography appearance (SLA) printing or a light source for a photocuring printing method for surface exposure. The light source for surface exposure includes, but not limited to, a digital light processing (DLP) light source unit, an LCD light source unit, a liquid crystal on silicon (LCOS) light source unit, an organic light emitting diode (OLED) light source unit, etc., which is not specifically defined herein.

A material of the release film 27 is selected according to requirements, and includes, but not limited to, polytetrafluoroethylene (PTFE), fluorinated ethylene propylene copolymer (FEP), polydimethylsiloxane (PDMS), perfluoropolyether (PFPE), polyethylene (PE), meltable polytetrafluoroethylene (PFA), polypropylene polymer (PP), methylpentene copolymer (PMP), ethylene-tetrafluoroethylene copolymer (ETFE), ultrahigh molecular weight polyethylene (UHMWP), etc.

With reference to Figs. 20-22, in the embodiment, the tray 11 is configured to be in sliding fit with the rack 15, and the tray 11 has a fixed position. While the tray 11 moves relative to the rack 15 in a first direction a, the release film 27 moves with the tray 11 in a direction towards the film tightening member 18, and when the tray 11 reaches the fixed position, the release film 27 makes contact with the film tightening member 18 and tightened by the film tightening member 18. In this way, when it is necessary to tension the release film 27, it is only necessary to move the tray 11 in the first direction "a" relative to the rack 15 such that the release film 27 is tightened by the film tightening member 18 when the tray 11 moves to the fixed position. Therefore, tightening the release film 27 is easy to operate. In an application scenario, the tray 11 needs to move to the fixed position in the first direction "a" relative to the rack 15 in a process of mounting the tray 11 on the rack 15, thereby simultaneously completing mounting and tightening of the release film 27.

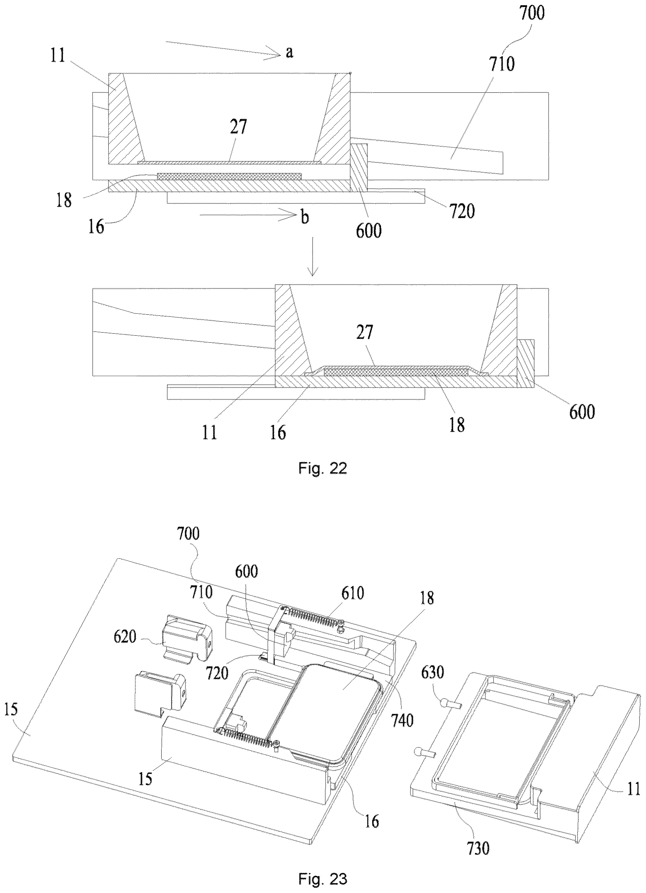

Further, with reference to Figs. 20 and 22, the mounting seat 16 is movably arranged on the rack 15, the mounting seat 16 is movable relative to the rack 15 in a second direction b, and the mounting seat 16 has a preset position. The first direction a is arranged at an included angle relative to the second direction b. A distance between the tray 11 and the mounting seat 16 is gradually reduced in a process of the tray 11 moves in the first direction a and the mounting seat 16 slides in the second direction b, such that a distance between the release film 27 arranged on the tray 11 and the film tightening member 18 assembled on the mounting seat 16 is gradually reduced in a vertical direction, i.e. a height direction of the tray 11. The release film 27 is able to make contact with the film tightening member 18 and tightened by the film tightening member 18 under a condition that the tray 11 is located at the fixed position and the mounting seat 16 is located at the preset position. In this way, before the tray 11 moves to the fixed position, the release film 27 and the film tightening member 18 are spaced apart in the vertical direction to prevent the release film 27 from being damaged due to friction. When the tray 11 moves to the fixed position and the mounting seat 16 moves to the preset position, the release film 27 makes contact with the film tightening member 18 and is tightened, thereby ensuring easy operability of tightening the release film 27.

It should be noted that the mounting seat 16 of the embodiment is slidably arranged on the rack 15. In other embodiments, the mounting seat 16 is further provided with rollers, such that the mounting seat 16 is movably arranged on the rack 15 by rolling of the rollers.

With reference to Figs. 22-24, the 3D printer 10 of the embodiment further includes a guiding part 700. The guiding part 700 is arranged on the rack 15. The tray 11 is in sliding fit with the guiding part 700. In this way, the tray 11 is guided to move stably and reliably relative to the rack 15.

The guiding part 700 is selected according to requirements. With reference to Figs. 20-24, in the embodiment, the guiding part 700 includes a first sliding rail 710. The first sliding rail 710 is arranged on the rack 15, the tray 11 is provided with a first sliding block 730, the first sliding rail 710 extends in the first direction a, and the first sliding block 730 is in sliding fit with the first sliding rail 710. The rack 15 is further provided with a second sliding rail 720, the mounting seat 16 is provided with a second sliding block 740, the second sliding rail 720 extends in the second direction b, and the second sliding block 740 is in sliding fit with the second sliding rail 720. In this way, when the first sliding block 730 slides in the first sliding rail 710 and the second sliding block 740 slides in the second sliding rail 720, the tray 11 moves in the first direction a, the mounting seat 16 moves in the second direction b, the distance between the tray 11 and the mounting seat 16 in the vertical direction is gradually reduced, and when the tray 11 reaches the fixed position and the mounting seat 16 reaches the preset position, the release film 27 makes contact with the film tightening member 18 and is tightened. In this way, stable sliding of the tray 11 and the mounting seat 16 is ensured, convenient and fast tightening operation of the release film 27 is further ensured, and the risk that the release film 27 is prone to damage is reduced.

It should be understood that in other embodiments, the guiding part 700 includes a first sliding block 730 arranged on the rack 15, and the tray 11 is provided with the first sliding rail 710. In other embodiments, the second sliding rail 720 is arranged on the mounting seat 16, and the second sliding block 740 is arranged on the rack 15, which is not defined herein.

Further, with reference to Figs. 20 and 22, the first direction a is an inclined direction, and the second direction b is a horizontal direction. In a process that the tray 11 moves in the first direction a and the mounting seat 16 moves in the second direction b, the tray 11 approaches the mounting seat 16 obliquely downwards. That is, a gap between the tray 11 and the mounting seat 16 is gradually reduced. When the tray 11 is located at the fixed position and the mounting seat 16 is located at the preset position, the film tightening member 18 arranged on the mounting seat 16 makes contact with the release film 27 arranged on the tray 11 and tensions the release film 27.

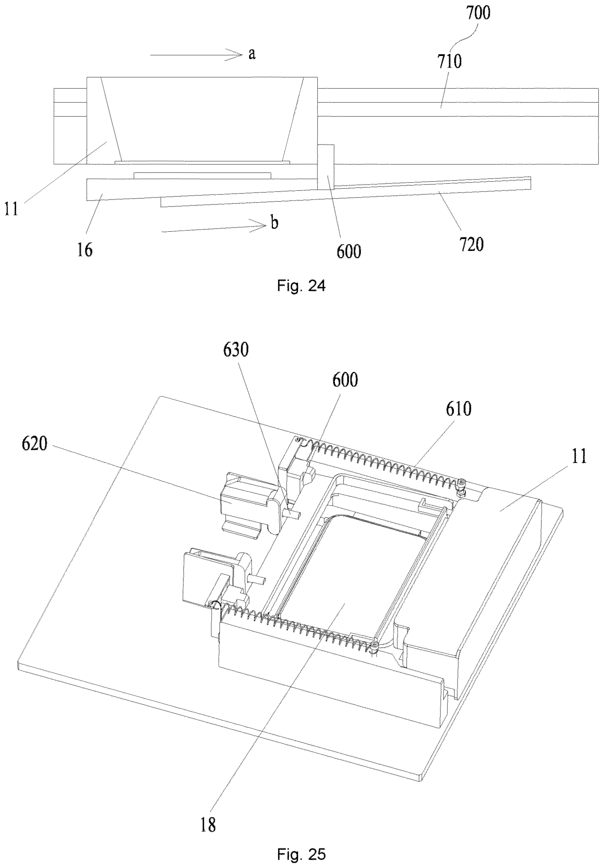

With reference to Fig. 24, in other embodiments, the first direction a is a horizontal direction, and the second direction b is an inclined direction. The mounting seat 16 approaches the tray 11 obliquely upwards in a process that the tray 11 moves in the first direction a and movement of the mounting seat 16 in the second direction b. That is, a gap between the tray 11 and the mounting seat 16 is gradually reduced. When the tray 11 is located at the fixed position and the mounting seat 16 is located at the preset position, the film tightening member 18 arranged on the mounting seat 16 makes contact with the release film 27 arranged on the tray 11 and tensions the release film 27.

With reference to Figs. 20-25, the 3D printer 10 further includes a stopper 600. The stopper 600 is connected to the mounting seat 16. In a process that the tray 11 moves in the first direction a, one end of the tray 11 is able to abut against the stopper 600 and push the stopper 600 and the mounting seat 16 to move synchronously. In this way, when the tray 11 and the mounting seat 16 move synchronously by means of the stopper 600, it is ensured that the release film 27 is able to make reliably contact with and is tightened by the film tightening member 18 when the tray 11 reaches the fixed position and the mounting seat 16 reaches the preset position.

In other embodiments, the stopper 600 is connected to the tray 11, and in a process that the tray 11 moves in the first direction a, the tray 11 drives the stopper 600 to move synchronously, and the stopper 600 drives the mounting seat 16 to move synchronously.

In some embodiments, the rack 15 is further provided with a third sliding rail, and the stopper 600 is in sliding fit with the third sliding rail. That is, when the tray 11 abuts against the stopper 600 and further pushes the stopper 600, the stopper 600 slides along the third sliding rail.

The stopper 600 is selected according to requirements. For example, the stopper is a stop block, a baffle, a stopper rod, which is not specifically defined herein.

In some embodiments, the mounting seat 16 is connected to the stopper 600, by means of a connection including, but not limited to, magnet-magnet connection, magnet-metal connection, such that when the tray 11 is desired to be withdrawn from the fixed position and drives the stopper 600 to move, the stopper 600 reliably drives the mounting seat 16 to be withdrawn from the preset position.

With reference to Figs. 23 and 25, the 3D printer 10 further includes an elastic member 610. The elastic member 610 is configured to always apply a force to the mounting seat 16 in a direction opposite the second direction b when the mounting seat 16 is located at the preset position or in a process of movement towards the preset position in the second direction b, such that the mounting seat 16 has a tendency to move away from the preset position. A position at which the elastic member 610 is arranged is selected according to requirements. In the embodiment, the elastic member 610 is arranged between the mounting seat 16 and the rack 15. In this way, when the tray 11 withdraws from the fixed position in the direction opposite the first direction a, the mounting seat 16 withdraws from the preset position in the direction opposite the second direction b under an elastic force of the elastic member 610 such that the mounting seat 16 is automatically restored.

Further, two ends of the elastic member 610 are connected to the rack 15 and the second sliding block 740 respectively. Certainly, in other embodiments, two ends of the elastic member 610 are connected to the rack 15 and the mounting seat 16 respectively.

It should be noted that the elastic member 610 may be a spring, an elastic rubber strip, etc., which is not specifically defined herein.

In other embodiments, the elastic member 610 is further arranged between the stopper 600 and the rack 15 and is configured to enable the mounting seat 16 to have a tendency to move in a direction opposite the second direction b and to withdraw from the preset position. In this way, the stopper 600 is pushed by using the elastic force of the elastic member 610, such that the mounting seat 16 moves in a direction of withdrawing from the preset position while the tray 11 moves in a direction of withdrawing from the fixed position.

In other embodiments, no elastic member 610 is arranged, and the rack 15 is provided with a slope such that the mounting seat 16 withdraws from the preset position along the slope under the action of gravity of the mounting seat 16. It should be noted that the mounting seat 16 is able to continue to slide along the slope in the second direction b or in a direction opposite the second direction b to withdraw from the preset position.

In other embodiments, the stopper 600 is connected to the tray 11. When the tray 11 moves in the direction opposite the first direction a to enable the tray 11 to withdraw from the fixed position, the tray 11 drives the stopper 600 to move synchronously, such that the stopper 600 drives the mounting seat 16 to withdraw from the preset position in the direction opposite the second direction b. Further, the stopper 600 and the tray 11 are connected by means of a magnet-magnet connection, a magnet-metal connection, etc., or the tray 11 is slidably connected to the stopper 600, and the tray 11 is movable in the vertical direction relative to the stopper 600, which is not specifically defined herein.

With reference to Figs. 23 and 25, the 3D printer 10 further includes a first positioning member 620. The first positioning member 620 is arranged on the rack 15. The tray 11 is provided with a second positioning member 630. Under a condition that the tray 11 moves to the fixed position, the second positioning member 630 is in fit with the first positioning member 620 to lock the tray 11 to the fixed position. Thus, the elastic force of the elastic member 610 is resisted by using fit between the first positioning member 620 and the second positioning member 630, thereby preventing the tray 11 from accidentally withdrawing from the fixed position and the mounting seat 16 from accidentally withdrawing from the preset position.

The first positioning member 620 is selected according to requirements. For example, the first positioning member 620 is a push-type rebounder, and the second positioning member 630 is a touch member arranged at an upstream end of the tray 11 and configured for fiting with the push-type rebounder. When the tray 11 moves to the fixed position, the touch member is in fit with the push-type rebounder. That is, the touch member is inserted into the push-type rebounder to lock the tray 11 in place. When the tray 11 needs to be detached, pressing the tray 11 to allow the push-type bouncer to unlock the touch member. Alternatively, the first positioning member 620 is a nut arranged on the rack 15, and the second positioning member 630 is a pin arranged on the tray 11. When the tray 11 moves to the fixed position, the pin is in fit with the nut by means of a thread to lock the tray 11 at the fixed position.

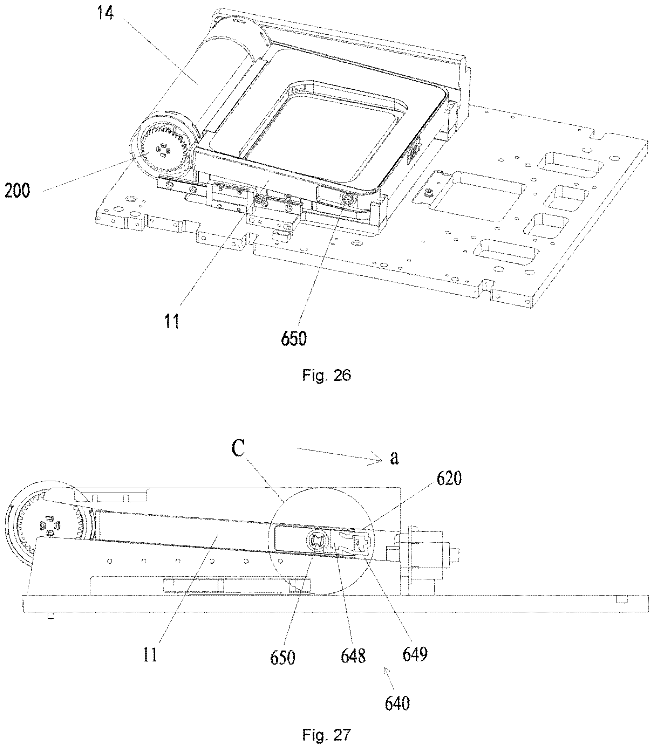

With reference to Figs. 26-29, in the embodiment, the first positioning member 620 is provided with a positioning groove 640, and has a bottom wall 641 and a top wall 642 that define the positioning groove 640 and are oppositely distributed, and a connecting wall 643 connected between the bottom wall 641 and the top wall 642. The bottom wall 641 is provided with a first leveling protrusion 644 and a second leveling protrusion 645, the connecting wall 643 is provided with a first positioning protrusion 646, and the top wall 642 is provided with a second positioning protrusion 647. The positioning groove 640 includes an entering section 648 and a locking section 649 that are in communication with each other. The first leveling protrusion 644 and the second leveling protrusion 645 are sequentially arranged in the entering section 648 in a direction of the entering section 648 pointing to the locking section 649, the first positioning protrusion 646 and the second positioning protrusion 647 are both distributed in the locking section 649, and the second positioning protrusion 647 is arranged adjacent to the entering section 648. That is, the second positioning protrusion 647 is closer to the entering section 648 than the first positioning protrusion 646.

Further, the second positioning member 630 includes a pin 650 rotatably connected to a body portion of the tray 11. The pin 650 is capable of being inserted into the positioning groove 640. Specifically, the pin 650 includes two flat surfaces 651 and two concave surfaces 652. The two flat surfaces 651 are opposite each other and are spaced apart, the two concave surfaces 652 are opposite each other and are distributed spaced apart, and the two flat surfaces 651 link the two concave surfaces 652. Further, the two flat surfaces 651 are distributed in parallel, and the two concave surfaces 652 are V-shaped and symmetrically distributed. Certainly, in other embodiments, an included angle between extending surfaces of the two flat surfaces 651 may be 1°, 2°, etc., and the two concave surfaces 652 are U-shaped, or the two concave surfaces 652 are V-shaped and U-shaped respectively, which is not specifically defined herein.

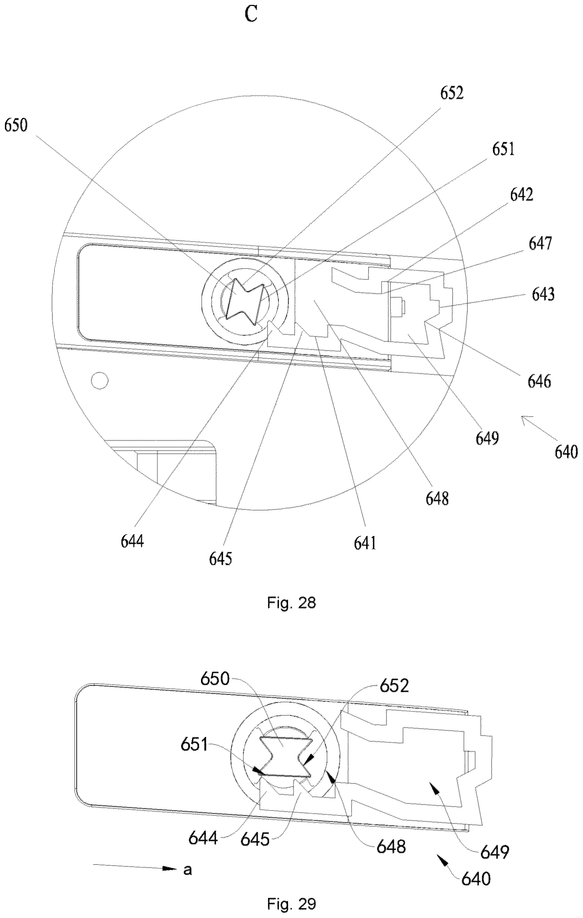

With reference to Figs. 28-32, any one of the concave surfaces 652 or the flat surfaces 651 abuts against at least one of the first leveling protrusion 644 and the second leveling protrusion 645 under a condition that the tray 11 moves to the fixed position, such that the pin 650 rotates in the entering section 648 until either one of the two flat surfaces 651 coincides with the first direction a, i.e., either one of the two flat surfaces 651 is parallel or substantially parallel to the first direction a, which enables the pin 650 to slide into the locking section 649.

When the pin 650 slides in the positioning groove 640, specifically, when the pin 650 slides in the locking section 649, one of the two concave surfaces 652 abuts against the first positioning protrusion 646, and the tray 11 moves in a direction away from the fixed position (i.e. a direction of the locking section 649 pointing to the entering section 648) under the elastic force of the elastic member 610 such that the other concave surface 652 abuts against the second positioning protrusion 647, and the pin 650 rotates relative to a main body of the tray 11 under a blocking effect of the second positioning protrusion 647. When the pin 650 is rotated so that one of the two flat surfaces 651, at its two ends, of the pin 650 abuts against the bottom wall 641 and the top wall 642 and corresponding concave surface 652 still abuts against the second positioning protrusion 647, the pin 650 is positioned in the positioning groove 640, and the tray 11 is locked at the fixed position.

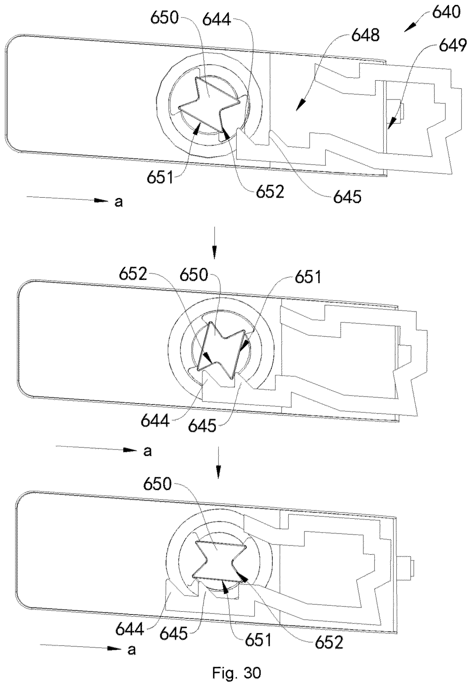

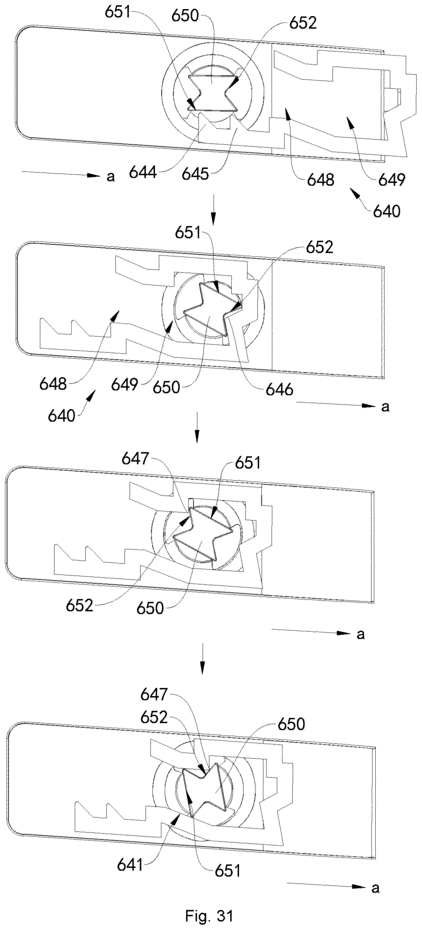

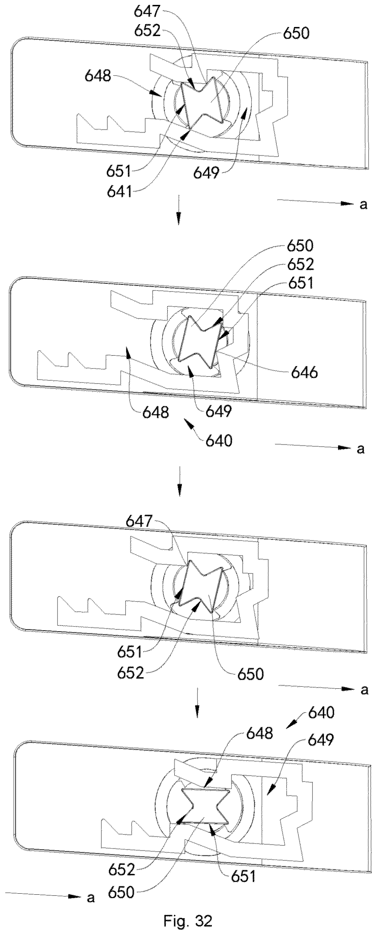

Specifically, the process that the tray 11 moves towards the fixed position includes the following cases:
a) with reference to Figs. 28 and 29, when the pin 650 moving synchronously with the tray 11 enters the positioning groove 640 in a process that the tray 11 moves towards the fixed position, one of the two flat surfaces 651 abuts against the first leveling protrusion 644, and the pin 650 rotates relative to a main body of the tray 11, under a blocking effect of the first leveling protrusion 644, while moving with the tray 11 in the first direction a, and the corresponding flat surface 651 is rotated to coincide with the first direction a when the pin 650 enters the entering section 648. That is, the corresponding flat surface 651 is parallel or substantially parallel to the first direction a. That is, one of the two flat surfaces 651 abuts against the first leveling protrusion 644 when the tray 11 moves towards the fixed position, such that the pin 650 rotates in the entering section 648 to cause either one of the two flat surfaces 651 to coincide with the first direction a. In this case, the pin 650 does not abut against any one of the first leveling protrusion 644 and the second leveling protrusion 645. That is, the pin 650 moves from the entering section 648 to the locking section 649 without being interfered.
b) With reference to Fig. 30, when the pin 650 moving synchronously with the tray 11 enters the positioning groove 640 in a process that the tray 11 moves towards the fixed position, one of the two concave surfaces 652 abuts against the first leveling protrusion 644. Under a blocking effect of the first leveling protrusion 644, the pin 650 rotates relative to the main body of the tray 11 while moving with the tray 11 in the first direction a, and one of the two flat surfaces 651 abuts against the second leveling protrusion 645 when the pin 650 enters the entering section 648. Under a blocking effect of the second leveling protrusion 645, the pin 650 continues to rotate relative to the tray 11 while moving with the tray 11 in the first direction a, and the corresponding flat surface 651 is rotated to coincide with the first direction a before the pin 650 moves from the entering section 648 into the locking section 649 such that the pin 650 enters the locking section 649 without being interfered by any one of the protrusions.
c) With reference to Fig. 31, in a process that the tray 11 moves towards the fixed position, either one of the two flat surfaces 651 coincides with the first direction a, and the pin 650 does not abut against any one of the first leveling protrusion 644 and the second leveling protrusion 645 in a process of synchronous movement of the pin 650 with the tray 11. That is, the pin 650 is able to be directly inserted into the entering section 648 of the positioning groove 640 without being interfered, and moves synchronously with the tray 11 to enter the locking section 649 of the positioning groove 640.
   Regardless of the situation described above for the tray 11, the pin 650 enters the locking section 649 when any flat surface 651 of the pin 650 coincides with the first direction a. With reference to Fig. 31, after the pin 650 enters the locking section 649, one of the two concave surfaces 652 abuts against the first positioning protrusion 646. In this case, the tray 11 moves away from the fixed position under the elastic force of the elastic member 610 such that the other concave surface 652 abuts against the second positioning protrusion 647, and the pin 650 rotates relative to the tray 11 under a blocking effect of the second positioning protrusion 647. When the pin 650 is rotated such that the pin 650 abuts against the bottom wall 641 and the corresponding concave surface 652 still abuts against the second positioning protrusion 647, the tray 11 is locked at the fixed position.
d) With reference to Fig. 32, when the tray 11 locked at the fixed position moves towards the first positioning protrusion 646, for example, a force in a direction from the entering section 648 to the locking section 649 is applied to the tray 11 to move the tray 11 towards the first positioning protrusion 646, one of the two flat surfaces 651 abuts against the first positioning protrusion 646. Due to presence of the elastic member 610, the tray 11 moves away from the fixed position under the elastic force of the elastic member 610, such that the other flat surface 651 abuts against the second positioning protrusion 647. Under a interfering effect of the second positioning protrusion 647, the pin 650 rotates relative to the main body of the tray 11 until either one of the two flat surfaces 651 coincides with the first direction a such that the tray 11 is unlocked at the fixed position, and the pin 650 moves from the locking section 649 to the entering section 648, and leaves the positioning groove 640 through entering section 648.

It should be noted that, the width of the pin 650, in a direction perpendicular to the flat surface 651, is smaller than the diameter of the junction of the locking section 649 and the entering section 648 of the positioning groove 640, so as to ensure that the pin 650 is able to enter the locking section 649 when the flat surface 651 coincides with the first direction a.

For the embodiments described above, in some application scenes, the bottom wall 641 is provided with no second leveling protrusion 645; and in some other application scenes, the bottom wall 641 is provided with no first leveling protrusion 644 and no second leveling protrusion 645.

It should be noted that on the basis of the above embodiments, in a process of mounting the tray 11, the tray 11 with the release film 27 moves in the first direction a and the mounting seat 16 is moved in the second direction b, such that when the tray 11 reaches the fixed position and the mounting seat 16 reaches the preset position, the film tightening member 18 makes contact with the release film 27 and tensions the release film 27. The tray 11 is locked at the fixed position by fit between the first positioning member 620 and the second positioning member 630, thereby further locking tighteningthe tray 11 and tightening the film in one step. In addition, after the tray 11 reaches the fixed position, the measurement assembly 802 of the liquid level measuring mechanism cooperates with the processing assembly 803 and is electrically connected to the processing assembly 803, so as to be in an open working state. Moreover, the identifier on the tray 11 is aligned with an identification mechanism mounted on a main body of the 3D printer, and the identification mechanism directly obtains relevant information in the identifier. That is, multiple operation functions of the tray 11 are achieved in one step, thereby greatly facilitating use by the user, and improving use efficiency.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is any of powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate the printing material for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment includes components in the 3D printer in the embodiment described above, and also does not include the above components, which is not defined herein.

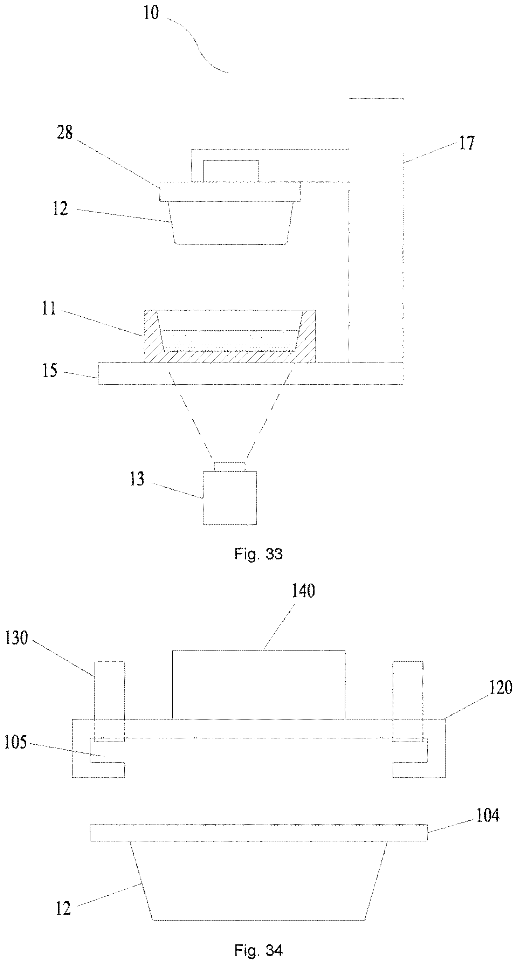

Further, with reference to Figs. 33-38, in the embodiment, the forming platform 12 includes a platform body 101, a first sliding connecting portion 104 and a restricting portion 102. Furthermore, the 3D printer 10 further includes a platform connecting mechanism 28. The platform connecting mechanism 28 includes a connecting seat 103, a limiting member 130, and a connecting member 140.

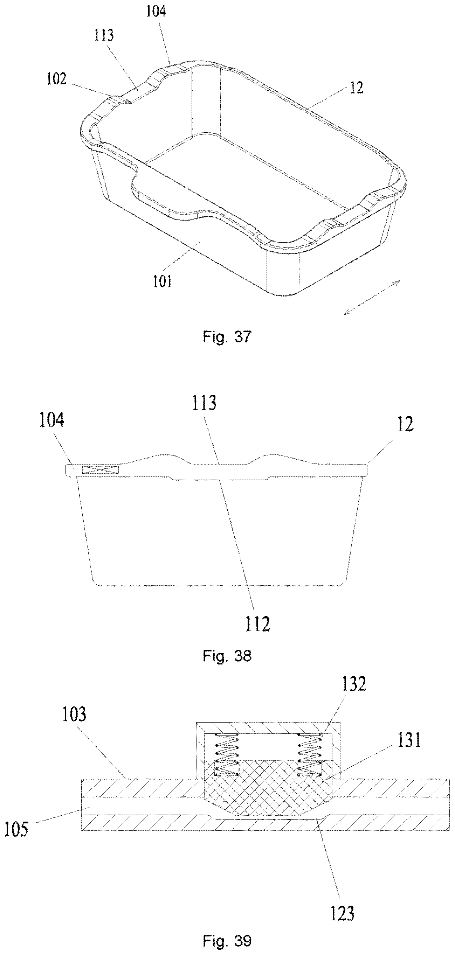

The first sliding connecting portion 104 is connected to the platform body 101, and the restricting portion 102 is arranged on the first sliding connecting portion 104. The first sliding connecting portion 104 is configured to be slidably connected to the connecting seat 103 (a sliding direction of the forming platform 12 is shown by an arrow in Fig. 37), and the restricting portion 102 is configured to be in fit with the connecting seat 103 when the platform body 101 reaches a predetermined position relative to the connecting seat 103, so as to restrict sliding of the forming platform 12 relative to the connecting seat 103, thereby locking the forming platform 12.

The connecting seat 103 is provided with a second sliding connecting portion 105, and the first sliding connecting portion 104 is configured to be in sliding fit with the second sliding connecting portion 105. The second sliding connecting portion 105 is a sliding block or a sliding groove. The limiting member 130 is connected to the connecting seat 103, and the limiting member 130 is configured to be in fit with the restricting portion 102 when the platform body 101 reaches the predetermined position relative to the connecting seat 103, and limit sliding of the platform body 101 relative to the connecting seat 103. The connecting member 140 is connected to the connecting seat 103 and is configured to be connected to a lifting mechanism 17, so as to connect the platform connecting mechanism 28 and the forming platform 12 to the lifting mechanism 17.

It should be noted that firstly, in the embodiment, the forming platform 12 is integrally formed; secondly, in the embodiment, the forming platform 12 being a non-porous platform is described, but in other embodiments, the forming platform 12 is a porous platform.

With reference to Figs. 33-38, in a forming process of the 3D printer 10, the forming platform 12 connected to the connecting seat 103 is driven by the lifting mechanism 17 to move relative to the tray 11, so as to adjust a position of the forming platform 12 relative to the tray 11, such that the forming platform 12 moves into the tray 11 or out of the tray 11.

The forming platform 12 is mounted in such a way to slidably connect to the connecting seat 103, so that the position of the forming platform 12 relative to the connecting seat 103 is adjusted conveniently, thereby simplifying disassembly and assembly steps of the forming platform 12 with respect to the connecting seat 103, and further simplifying operation of mounting the forming platform 12 on the 3D printer 10.

Moreover, in a process of mounting the forming platform 12, after the forming platform 12 is aligned with the platform connecting mechanism 28, only the forming platform 12 needs to be pushed. In the process, the first sliding connecting portion 104 is in sliding fit with the second sliding connecting portion 105. When the forming platform 12 slides to the predetermined position relative to the connecting seat 103, sliding of the forming platform 12 relative to the connecting seat 103 is restricted by means of fit between the restricting portion 102 and the connecting seat 103. Therefore, the forming platform 12 is locked and positioned quickly by means of such an arrangement mode, and the mounting step of the forming platform 12 is completed quickly. That is, a user is able to mount and lock the forming platform 12 by only one step of pushing action, which is able to greatly simplify operation steps of the user, greatly improve mounting efficiency of the forming platform 12, and reduce work intensity of the user compared with two-step or multi-step operation of firstly placing the forming platform 12 at the predetermined position and then locking the forming platform 12 by using a locking mechanism by means of pushing, pulling, etc. in the related art. Moreover, since no complex operation is required, such an arrangement mode is able to further improve mounting accuracy of the forming platform 12. Furthermore, it is ensured that the position of the forming platform 12 relative to the lifting mechanism 17 remains unchanged when the lifting mechanism 17 drives the forming platform 12 connected to the connecting seat 103 to move relative to the tray 11, thereby improving forming accuracy of the 3D printer 10, reducing working intensity of the user, and improving working efficiency of the 3D printer 10.

It should be noted that in the embodiment, in a process that the lifting mechanism 17 drives the connecting seat 103 and the forming platform 12 to move, in this case, since an external force applied by the user to the forming platform 12 and intended to make the forming platform 12 slide relative to the connecting seat 103 disappears, sliding of the forming platform 12 at the predetermined position relative to the connecting seat 103 is restricted under the restriction effect of the limiting member 130 in this case, thereby ensuring that the position of the forming platform 12 relative to the lifting mechanism 17 remains unchanged. When the forming platform 12 needs to be taken out from the connecting seat 103, the user may apply and increase the external force to the forming platform 12 such that the forming platform 12 overcomes the restriction effect of the limiting member 130 to slide relative to the connecting seat 103, so as to take the forming platform 12 out from the connecting seat 103. Therefore, in the embodiment, the restriction effect of the limiting member 130 on the forming platform 12 relative to the connecting seat 103 needs to satisfy the following conditions: 1) when the external force of the user disappears, the position of the forming platform 12 relative to the connecting seat 103 is able to remain unchanged; and 2) the forming platform 12 is able to overcome the restriction effect of the limiting member 130 to slide relative to the connecting seat 103 under the external force of the user.

Furthermore, it should further be noted that in the embodiment, the forming platform 12 may be manufactured by injection molding when the forming platform 12 is manufactured in order to reduce manufacturing cost, such that the forming platform 12 is disposable and is discarded after printing once. Thus, the user does not need to maintain the forming platform 12, and after printing, the user is able to directly discard the forming platform 12 after taking down the print, thereby greatly reducing maintenance cost of the forming platform 12. Specifically, the user is able to directly separate a product formed on the forming platform 12 from a supporting structure or cut the product from the supporting structure with nozzle pliers. Moreover, in order to conveniently transfer and store the forming platforms 12, a plurality of forming platforms 12 are stacked. That is, the platform body 101 of each of the plurality of forming platforms 12 is accommodated in the platform body 101 of another forming platform 12, thereby reducing a space occupied by the plurality of forming platforms 12 by means of such a mode.

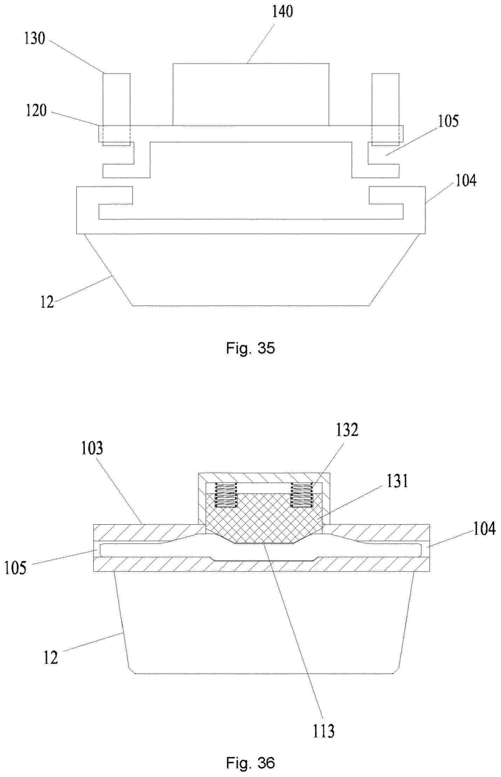

Further, in the embodiment, the forming platform 12 is provided with a first sliding connecting portion 104, the connecting seat 103 is provided with a second sliding connecting portion 105, and the first sliding connecting portion 104 is configured to be in sliding fit with the second sliding connecting portion 105, thereby allowing slidably connecting the forming platform 12 to the connecting seat 103. A plurality of configurations are provided to achieve sliding fit between the first sliding connecting portion 104 and the second sliding connecting portion 105. In the embodiment, one of the first sliding connecting portion 104 and the second sliding connecting portion 105 is a sliding groove, and the other one is a sliding block. Furthermore, in order to slidably connect the forming platform 12 to the connecting seat 103, the first sliding connecting portion 104 and the second sliding connecting portion 105 are be configured in various ways. As shown in Fig. 34, the first sliding connection portion 104 is located on an inner side of the second sliding connecting portion 105. As shown in Fig. 35, the second sliding connecting portion 105 is located on an inner side of the first sliding connecting portion 104. The corresponding arrangement mode is specifically selected according to actual situations, which is not defined herein.

In order to position the forming platform 12 when the forming platform 12 slides to the predetermined position in a process that the forming platform 12 slides relative to the connecting seat 103, a surface of the first sliding connecting portion 104 configured to make contact with the second sliding connecting portion 105 is provided with a first positioning portion 112, a surface of the second sliding connecting portion 105 configured to make contact with the first sliding connecting portion 104 is provided with a second positioning portion 123, and the first positioning portion 112 is configured to be in fit with the second positioning portion 123 when the forming platform 12 slides to the predetermined position relative to the connecting seat 103. Specifically, one of the first positioning portion 112 and the second positioning portion 123 is a positioning protrusion, and the other one is a positioning recess. That is, in the embodiment, the forming platform 12 is positioned in such a mode in which the surface of the first sliding connecting portion 104 configured to make contact with the second sliding connecting portion 105 is provided with a positioning protrusion and the surface of the second sliding connecting portion 105 configured to make contact with the first sliding connecting portion 104 is provided with a positioning recess. In some embodiments, the forming platform 12 is positioned in such a mode in which the surface of the first sliding connecting portion 104 configured to make contact with the second sliding connecting portion 105 is provided with a positioning recess and the surface of the second sliding connecting portion 105 configured to make contact with the first sliding connecting portion 104 is provided with a positioning protrusion.

It should be noted that when the forming platform 12 slides to the predetermined position, the first positioning portion 112 is in fit with the second positioning portion 123, and in order to avoid the situation that the first positioning portion 112 and the second positioning portion 123 are difficult to be separated in this case, two ends of the positioning protrusion and the positioning recess, i.e. two ends of the first positioning portion 112 and two ends of the second positioning portion 123, are each provided with a first cambered transition surface in a sliding direction of the forming platform 12 relative to the connecting seat 103. That is, under the external force of the user, the forming platform 12 is able to overcome the restriction effect of the limiting member 130 and a snapping force of the first positioning portion 112 and the second positioning portion 123 to slide relative to the connecting seat 103, so as to take the forming platform out.

Further, with reference to Figs. 33 to 39, Fig. 36 shows a structure of an elastic member in an embodiment of the present invention. In the embodiment, the limiting member 130 includes a limiting block 131 movably connected to the connecting seat 103, and the restricting portion 102 is a limiting groove 113. The limiting block 131 is configured to be in fit with the limiting groove 113 when the forming platform 12 slides to the predetermined position relative to the connecting seat 103. That is, a position of the limiting block 131 relative to the connecting seat 103 is adjusted such that the limiting block 131 is able to be in fit with the limiting groove 113 when the forming platform 12 slides to the predetermined position relative to the connecting seat 103, and the limiting block 131 is able to be disengaged from the limiting groove 113 when the forming platform 12 slides and leaves the predetermined position relative to the connecting seat 103.

In order to maintain a fitting state of the limiting block 131 and the limiting groove 113 to improve use stability of the platform connecting mechanism 28, the limiting member 130 further includes an elastic element 132 connected to the connecting seat 103. The elastic element 132 is connected to the limiting block 131 and is configured such that the limiting block 131 has a tendency to move towards the forming platform 12, so as to maintain the fitting state of the limiting block 131 and the limiting groove 113.

It should be noted that when the forming platform 12 slides to the predetermined position, the limiting block 131 is in fit with the limiting groove 113 in this case. In order to avoid the situation that the limiting block 131 and the limiting groove 113 are difficult to be separated in this case, two ends of the limiting block 131 and the limiting groove 113, i.e. two ends of the limiting member 130 and two ends of the restricting portion 102, are each provided with a second cambered transition surfaces in a sliding direction of the forming platform 12 relative to the connecting seat 103. That is, under the external force of the user, the forming platform 12 is able to overcome a snapping force between the limiting block 131 and the limiting groove 113 and overcome a snapping force between the first positioning portion 112 and the second positioning portion 123 to slide relative to the connecting seat 103, so as to take the forming platform out.

It should be noted that in this way, the user is able to enable the positioning protrusion to be disengaged from the positioning recess at transition of the first cambered transition surface by only one step, for example, by pulling, and moreover, the limiting block 131 is disengaged from the limiting groove 113 at transition of the second cambered transition surface, such that the forming platform 12 is disengaged from the platform connecting mechanism 28. Compared with the mode of unlocking of the forming platform 12, and then taking down the forming platform 12 in the related art, operation steps of the user are simplified, disassembly efficiency of the forming platform is greatly improved, and work intensity of the user is reduced.

In an embodiment, the restricting portion 102 includes a movable block movably connected to the platform body 101. The movable block abuts against the connecting seat 103 when the forming platform 12 slides to the predetermined position relative to the connecting seat 103, thereby positioning and locking the forming platform 12.

With reference to Figs. 33-40, Fig. 40 shows a structure of an elastic member in another embodiment. In the embodiment, the limiting member 130 further includes an elastic sheet 133 connected to a connecting seat 103, and a restricting portion 102 is the limiting groove 113. The elastic sheet 133 has a shape adapted to the limiting groove 113, so as to be in fit with the limiting groove 113 when the forming platform 12 slides to the predetermined position relative to the connecting seat 103. That is, when the forming platform 12 slides to the predetermined position relative to the connecting seat 103, the elastic sheet 133 is connected to the limiting groove 113 in a snap-fit manner under the action of an elastic force. When the forming platform 12 overcomes an elastic force of the elastic sheet 133 and elastically deforms the elastic sheet 133 under the action of the external force of the user, the elastic sheet 133 is disengaged from the limiting groove 113, and the forming platform 12 is taken out.

With reference to Figs. 33-41, Fig. 41 shows a structure of an elastic member in another embodiment. In the embodiment, a limiting member 130 includes a first magnetic member 134, and the restricting portion 102 includes a second magnetic member 135 and a third magnetic member 136. The first magnetic member 134 is connected to a connecting seat 103. The second magnetic member 135 and the third magnetic member 136 are sequentially connected to the platform body 101 in a sliding direction of the forming platform 12 relative to the connecting seat 103. When the forming platform 12 slides to a position spaced from the predetermined position relative to the connecting seat 103, the first magnetic member 134 and the second magnetic member 135 repel each other. When the forming platform 12 slides to the predetermined position relative to the connecting seat 103, the first magnetic member 134 and the third magnetic member 136 attract to each other. An objective purpose of such an configuration mode is that sliding of the forming platform 12 at the predetermined position relative to the connecting seat 103 is limited by means of a magnetic force between the first magnetic member 134 and the third magnetic member 136, and the user is prompted that the forming platform 12 does not reach the predetermined position by means of a magnetic force between the first magnetic member 134 and the second magnetic member 135 when the forming platform 12 slides and leaves the predetermined position. It should be noted that the first magnetic member 134 is a permanent magnet or an electromagnet. When the first magnetic member 134 is an electromagnet, a sensor (or a travel switch) is further arranged on the connecting seat 103 and is configured to detect position information of the forming platform 12, such that when the forming platform 12 reaches the predetermined position, electromagnetic power is applied to automatically control the 3D printer 10.

Further, with reference to Figs. 33-41, in the embodiment, the forming platform 12 is further provided with an identifier. The identifier includes, but not limited to, a matrix code (two-dimensional code), a bar code, a character, a chip, a near-field communication (NFC) electronic tag, a radio frequency identification device (RFID) electronic tag, etc. The identifier is configured to transmit or store a plurality of pieces of production information, such as the printing material and production time used for the 3D printed object, related user information, and related printer. Moreover, the identifier is further configured to transmit other production information, such as the cleaning machine process parameters, curing machine process parameters and printing parameters that match the 3D printed object. The printing parameters include a slice file of the printed object and the control parameters of the printer.

Before printing, the printing parameters are loaded into the identifier of the forming platform 12 in advance. After the user mounts the forming platform 12 to the platform connecting mechanism 28 of the 3D printer 10, a reader on the 3D printer 10 is able to read information associated with the identifier to obtain the printing parameters, and the 3D printer 10 automatically starts printing operation according to the printing parameters. Thus, the user does not need to perform excessive manual operation on the 3D printer 10.

In the embodiment, in order to facilitate arrangement of the first positioning portion 112, the second positioning portion 123 and the limiting member 130, the first sliding connecting portion 104 is a protruding edge protruding from the forming platform 12, the second sliding connecting portion 105 is a sliding groove, and the protruding edge is configured to be in fit with the sliding groove. Moreover, in order to improve sliding stability of the forming platform 12, two sides of the forming platform 12 are each provided with a protruding edge in a width direction of the forming platform 12, and two sides of the connecting seat 103 are each provided with a sliding groove. When providing the first positioning portion 112, the second positioning portion 123 and the limiting member 130, the first positioning portion 112, the second positioning portion 123 and the limiting member 130 are arranged at one side of the forming platform 12 in the width direction of the forming platform 12. In some embodiments, the first positioning portion 112, the second positioning portion 123 and the limiting member 130 are arranged on each side of the forming platform 12.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate the printing material, and the printing material is configured for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment may include components in the 3D printer in the embodiment described above, and may not include the above components, which is not defined herein.

In the embodiment, the forming platform 12 is provided with a forming surface 125, and the forming surface 125 is configured to adhere a 3D print formed of a photocuring material subjected to exposure curing. In some embodiments, the forming platform is made of a modified plastic material. A adhesive force between a forming surface and a printing layer formed of the printing material subjected to exposure curing is significantly increased by optimizing and modifying the plastic material. Compared with the forming platform of plastic that is not modified, formed by injection molding, the adhesive force is able to satisfy a requirement of no less than 1.5N per square centimeter, while a adhering force of the conventional forming platform of plastic that is not modified, formed by injection molding is generally less than 1.5N. Furthermore, the plastic material is optimized and modified by the solution of the present invention, such that test data actually enables the adhering force between the forming surface and the printing layer formed of the photocuring material subjected to exposure curing to reach no less than 3N per square centimeter, and even to reach 4N, 5N, 6N or 7N or more. Thus, the adhering force between the forming surface and the initial printing layer of the print is effectively increased, the probability of plate falling is reduced, and a printing success rate is improved.

A base material of the forming platform is at least one of modified acrylonitrile butadiene styrene (ABS), polycarbonate (PC), polypropylene (PP), polyformaldehyde (POM), polyamide (PA), polystyrene (PS), polybutylece terephthalate (PBT), acrylonitrile-styrene resin (AS), polyethylene terephthalate (PET), poly vinyl chloride (PVC), polyether-ether-ketone (PEEK), polyphenylsulphone (PPSU), styrene-acrylonitrile copolymer (SAN), PE, triphenyl phosphate (TPE), PTFE, polyether sulfone (PES) or polyvinyl acetate (PVA). Modification treatment includes at least one of graft modification, blending modification, inorganic reinforcement modification (particle/fiber modification), morphological structure control modification or crosslinking modification.

In some embodiments, a forming platform is made of a modified ABS material. Raw materials of the modified ABS material includes 70wt%-80wt% of ABS resin, 5wt%-20wt% of methacrylic resin, 5wt%-10wt% of reinforcing fiber, and 1wt%-5wt% of coupling agent in percentage by mass.

It should be noted that the forming platform obtained by injection molding of the modified ABS resin prepared from the ABS resin, the methacrylic resin (polymethyl methacrylate (PMMA) resin), the reinforcing fiber and the coupling agent is able to increase the adhering force between the printed object and the forming surface of the forming platform, thereby further reducing a risk of plate falling, and improving a printing success rate.

Specifically, mass fraction of the ABS resin may be, for example, 70%, 72%, 74%, 76%, 78%, 80%; mass fraction of the methacrylic resin may be, for example, 5%, 10%, 15%, 20%; mass fraction of the reinforcing fiber may be, for example, 5%, 6%, 7%, 8%, 9%, 10%; and mass fraction of the coupling agent may be, for example, 1%, 2%, 3%, 4%, 5%.

The ABS resin used as a basic material of the modified ABS material has excellent impact resistance, heat resistance, low temperature resistance, chemical resistance and electrical performance; on one hand, blending of the PMMA resin is able to improve heat resistance of ABS plastic and processing fluidity, and on the other hand, compatibility between the PMMA and urethane acrylate in the printing material is desirable such that a adhering force of the forming platform to the printed object is effectively improved; further, since ABS is soft, the reinforcing fiber is able to enhance strength of the ABS to improve flat surfaceness (0.1-0.15) of the forming surface, enhance roughness of the surface, and further increase the adhesive force. Blending of the reinforcing fiber is able to effectively improve rigidity and heat resistance of the ABS plastic and reduce a shrinkage rate of the material. The smaller shrinkage rate is able to ensure size accuracy and flat surfaceness of the forming platform obtained by injection molding, and the higher rigidity is able to reduce deformation of the forming platform in a stripping process, thereby improving a success rate of printing; furthermore, the coupling agent is able to effectively improve compatibility of the ABS, the PMMA resin and the glass fiber, improve the yield of an injection molded finished product and uniformity of a mixed material, and avoid agglomeration and sedimentation.

In some embodiments, raw materials include 73wt%-78wt% of ABS resin, 10wt%-15wt% of methacrylic resin, 6wt%-9wt% of reinforcing fiber and 2wt%-4wt% of coupling agent. By optimizing the dosage of each component, the adhesive force of the forming surface of the forming platform obtained by injection molding of the modified ABS resin to the print is able to be further improved favorably.

The methacrylic resin is selected from at least one of methyl methacrylate, Polymethyl Methacrylate(PMMA), polyurethane methacrylate or n-butyl methacrylate. The reinforcing fiber is selected from at least one of glass fiber, ceramic fiber, silica fiber or boron fiber. All the above reinforcing fibers are able to effectively improve the rigidity and heat resistance of the ABS plastic, and further reduce the shrinkage rate of the material. The couple agent is selected from at least one of silane monomers, styrene monomers or titanate monomers, and may be a common coupling agent. For example, the coupling agent includes, but not limited to, vinyltrimethoxysilane (VTMS), vinyltriethoxysilane (VTES), 3-methacryloxypropyltrimethoxysilane (VMMS), γ-aminopropyl triethoxysilane (KH-550) or γ-(methacryloxypropyl) trimethoxysilane (KH-570), etc.

It should be noted that when the modified ABS material of the above embodiment is prepared, the ABS resin, the PMMA resin, the reinforcing fiber and the coupling agent are used as raw materials according to a formula of the modified ABS material and are blended in proportion. The modified ABS material is processed by using a common plastic forming apparatus and method. For example, a single screw extruder is used for blending extrusion, and an extruded product is cut to a suitable size for subsequent injection molding as the forming platform.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate the printing material, and the printing material is configured for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment may include components in the 3D printer in the embodiment described above, and may not include the above components, which is not defined herein.

Further, in the embodiment, a base material (particularly, a side surfaceof the base material as a forming surface) of the forming platform is subjected to surface treatment when a forming platform is manufactured, thereby obtaining the forming platform having the forming surface through the surface treatment. In this way, an adhesive force between the forming surface and a printed object is improved, and occurrence of a platform falling risk is significantly reduced.

It should be noted that the base material in the embodiment is a base material conventionally used in the forming platform, or is a modified plastic material in the embodiment described above.

The mode of the surface treatment is unlimited and includes at least one of spraying, sandblasting, frosting, carving, electroplating, coating film, printing, texturing, polishing, paint spraying, oil applying, ion plating, laser treatment, sandy finish, electrosparking, oil spraying, silk screen printing, laser carving, water transfer printing, machining fine carving, film pasting, chemical corrosion or wiredrawing.

In some embodiments, with reference to Fig. 61, the mode of the surface treatment is spraying, and raw materials used by the spraying include 100 parts of light-cured resin, 80-150 parts of diluent and 0.05-2 parts of initiator in parts by mass, the light-cured resin is selected from at least one of acrylics, allyl ethers or vinyl ethers, and the light-cured resin has number-average molecular weight ranging from 4,000 to 100,000.

Specifically, acrylic light-cured resin has a structural formula of 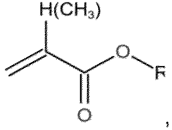 allyl ether light-cured resin has a structural formula of 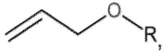 and vinyl ether light-cured resin has a structural formula of

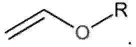

Acrylate in the printing material is (methy) acrylate having a structural formula of

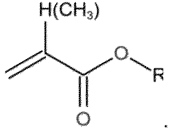

In 3D printing engineering, double bonds in modified coating are crosslinked and cured integrally with double bonds in the (methy) acrylate in the printing material, such that an original coating layer is integrated with an initial cured layer of the print, an adhesive force is better, and a plate is not prone to falling. A reaction principle between the double bonds in the modified coating and the double bonds of the (methy) acrylate in the printing material is as follows:

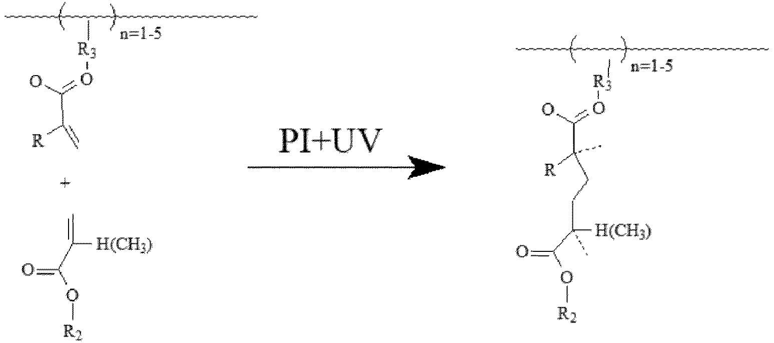

Furthermore, the coating is easy to be tacked free by controlling molecular weight of the light-cured resin, thereby facilitating storage of the forming platform.

Specifically, when the light-cured resin is used in an amount of 100 parts, a diluent may be used, for example, in an amount of 80 parts, 100 parts, 120 parts, 140 parts, 150 parts; and the initiator may be used, for example, in an amount of 0.05 part, 0.1 part, 0.5 part, 1.0 part, 1.5 parts, 2.0 parts.

In some embodiments, the coating includes 100 parts of light-cured resin, 100-130 parts of diluent and 0.2-0.5 part of initiator in parts by mass. By optimizing dosage of each component in the coating, a surface drying rate is further improved, and an adhesive force of the coating layer to the print is improved.

In some embodiments, light-cured resin includes 50 parts-90 parts of first resin and 10 parts-50 parts of second resin. The first resin has number-average molecular weight ranging from 4000 to 20000 and the second resin has number-average molecular weight ranging from 4W to 10W; and a combination of macromolecular resin and small molecular resin can effectively control leveling and prevent wiredrawing during spraying.

Further, the first resin is selected from at least one of RA3081, RA3083, RA3091, 6071, 6175-3 and SD7508; and the second resin is selected from at least one of SD1000 and SWA20.

In some embodiments, the diluent is selected from at least one of water and an organic solvent. The water as the solvent is environmentally friendly, but if the water is used as the solvent, a drying temperature is high, and energy consumption is large. From the aspect, it is proper to use an organic solvent, such as at least one of ethyl acetate, butyl acetate or propylene glycol methyl ether acetate. Considering toxicity of solvent, it is proper to use a solvent having small toxicity and easier to dry, such as a mixed solvent formed by ethyl acetate, butyl acetate and propylene glycol methyl ether acetate.

In some embodiments, an initiator is selected from at least one of TPO, 819 or TPO-L, and the initiator is a common photocuring initiator, but is not limited to the above.

In some embodiments, 0.05 part-1 part of an auxiliary agent is further included, such as 0.05 part, 0.1 part, 0.2 part, 0.4 part, 0.6 part, 0.8 part and 1.0 part. A surface drying rate can be further increased by adding the auxiliary agent. A type of the auxiliary agent is, but not limited to, at least one of CAB 551-0.01, CAB 551-0.2, CAB 381-0.1 and CAB 381-0.5 (all of which are cellulose acetate butyrate).

Further, a thickness of a dry film formed by the coating on the forming platform is 20µm-30µm, such as 20µm, 25µm and 30µm.

It should be noted that 3D printing is carried out through the forming platform 12. In a printing process, photocuring is carried out by ultraviolet light, such that the forming platform and the printing material are firmly adhered together, which as shown in Fig. 1.

In some embodiments, the surface treatment is sandblasting, and the forming surface of the forming platform obtained after sandblasting has roughness Ra ranging from 0.1µm to 5µm, such as 0.1µm, 1.0µm, 2.0µm, 3.0µm, 4.0µm and 5.0µm.

An abrasive used by the sand blasting is a hard sand material having an angle, such as at least one of white corundum, brown corundum, glass sand and steel sand.

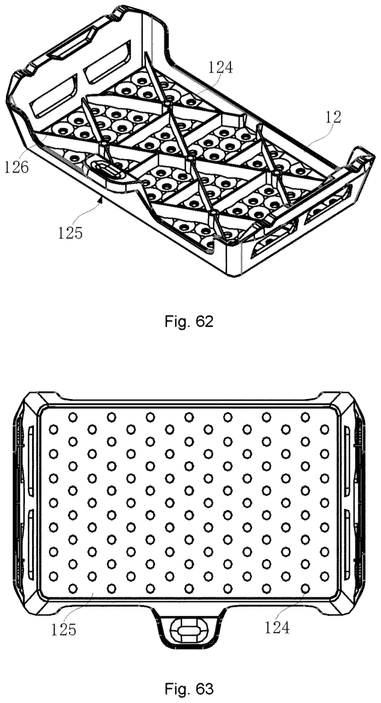

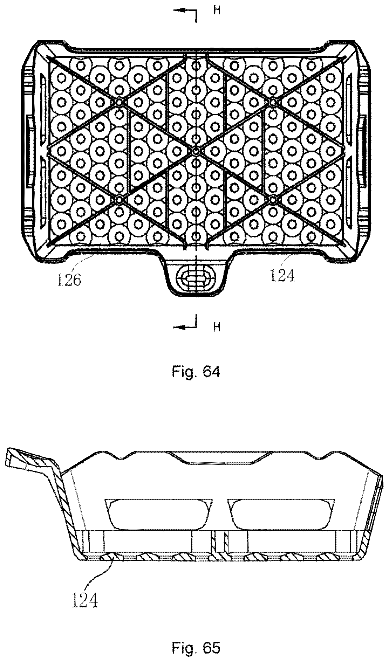

In an embodiment, with reference to Figs. 62-65, the forming platform 12 is a platform having holes, and a plurality of through holes 124 extend through the forming surface and a back surface 126 opposite the forming surface, such that the holes facilitate ventilation of the forming platform 12 in a 3D printing process, and moreover, several portions of a printing material passing through the holes, after curing, is able to provide an upside-down force, thereby further increasing an adhesive force between a printed object and the forming platform 12.

In some embodiments, hole diameters of through holes 124 are gradually increased from the forming surface 125 to the back surface 126, and the plurality of through holes 124 are alternately provided. A hole diameter of the forming platform 12 is designed in a manner that it is smaller on a forming surface 125 side and larger on a back surface 126 side, i.e. the hole is a shape of an inverted truncated cone such that an upside-down force of the printed object is increased, thereby improving an adhesive force between the print and the forming platform 12, further reducing the probability of formplate falling, and improving a printing success rate.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate the printing material, and the printing material is configured to manufacture a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is bonded to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment may include components in the 3D printer in the embodiment described above, and may not include the above components, which is not defined herein.

In the field of 3D printing, the printing material has certain requirements for a printing environment. For example, in some cases, light from a non-working light source needs to be avoided, or proper temperature and humidity are needed. Moreover, a printing compartment of the 3D printer should try to avoid foreign matter (such as dust) from entering to prevent the foreign matter from affecting printing quality. Furthermore, printing requires that a light source is not able to be irradiated to a user, and moreover, the light source should be dustproof and waterproof, and therefore it is necessary to improve tightness of the printer. However, an existing 3D printer is often not reasonable enough in structure setting, resulting in poor airtightness of the 3D printer. For example, when a photocuring printer in the related art is loaded into or taken out of the tray or the forming platform, a shell needs to be detached or opened, such that a printing compartment has excessive gas circulation with an external environment, and an environment suitable for storing the printing material in the printing compartment or suitable for printing operation is easy to destroy, and foreign matter such as dust is likely to enter the printing compartment. Therefore, the existing photocuring printer has poor sealing performance, which undoubtedly affects printing quality.

In order to improve poor sealing performance of the 3D printer in the related art, in the 3D printer of the embodiment, an opening is provided on the shell, and a window is blocked by using a closing door capable of being automatically closed or the forming platform 12 and the tray 11 such that exchange between gases inside and outside the printing compartment is effectively reduced, and the sealing performance of the printer is improved, thereby ensuring the printing quality.

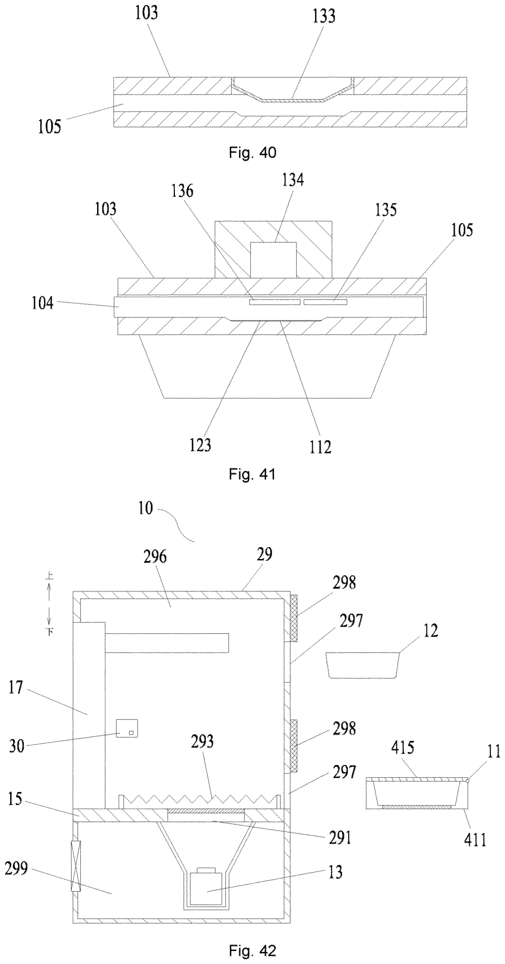

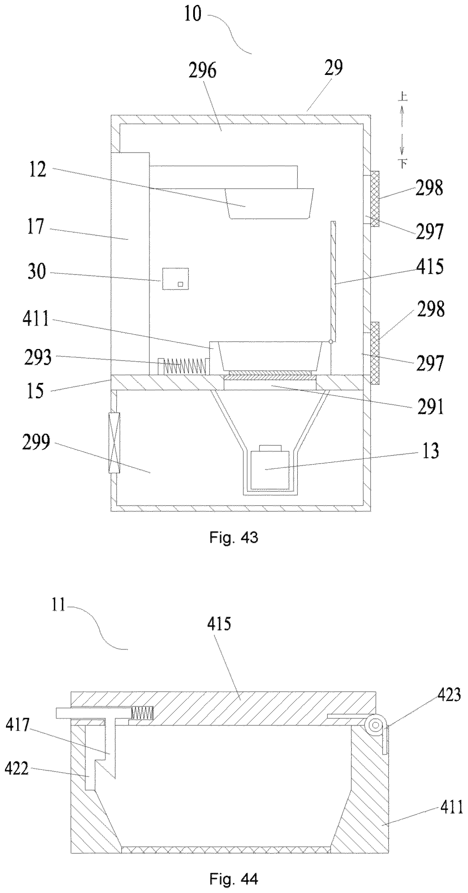

With reference to Figs. 42 and 43, in an embodiment, the 3D printer 10 includes a shell 29, an inner cavity of the shell 29 is partitioned into a printing compartment 296 and an electrical equipment compartment 299 by a rack 15, the forming platform 12 and the tray 11 are arranged in the printing compartment 296, and the light source 13 is arranged in the electrical equipment compartment 299. A light channel 291 is arranged on the rack 15, and light from the light source 13 is able to irradiate the printing compartment 296 by means of the light channel 291. A bottom of the tray 11 is transparent, such that the light from the light source 13 is able to irradiate a printing material in the tray 11 when the bottom of the tray 11 covers the light channel 291.

In an embodiment, at least one window 297 configured for taking out or putting into the forming platform 12 and the tray 11 is arranged on the shell 29, a closing door 298 is arranged on the shell 29, and the closing door 298 is able to automatically close the window 297. The window 297 is in communication an interior and exterior of the printing compartment 296, and the window 297 allows putting or taking out the tray 11 as well as the forming platform 12, or the tray 11 and the forming platform 12 are put or taken out by means of one window 297. Specifically, two windows 297 are arranged on the shell 29, and the two windows 297 are spaced apart in a vertical direction and are configured for putting and taking out the tray 11 and the forming platform 12 respectively. In other embodiments, the tray 11 and the forming platform 12 are also connected as a whole. For example, the forming platform 12 seals the tray 11, such that the printing material is stored in a sealed environment and protected, and the tray 11 and the forming platform 12 are separated by a mechanism (such as an unsealing mechanism) inside the shell 29 during printing.

In the embodiment, the closing door 298 is electrically driven to open or close the window 297. Specifically, the 3D printer 10 includes a driving mechanism (not shown) and a first detection mechanism (not shown), the driving mechanism is connected to the closing door 298 in a transmission manner, the first detecting mechanism is configured to detect whether the forming platform 12 and the tray 11 have been put into the printing compartment 296 or taken out from the printing compartment 296, and the driving mechanism is configured to drive the closing door 298 to close the window 297 under a condition that the forming platform 12 and the tray 11 have been put into or taken out from the shell. In the embodiment, the driving mechanism drives the closing door 298 to close the window 297 after the forming platform 12 and the tray 11 are put or taken out, such that air exchange between the interior and exterior of the printing compartment 296 is timely prevented to prevent external dust from entering the printing compartment 296, and moreover, environmental parameters such as temperature and humidity inside the printing compartment 296 are maintained at an optimal level. In an embodiment, the closing door 298 is able to automatically close the window 297 after the tray 11 or the forming platform 12 leaves an interior of the shell 29, and the closing door 298 is also able to be automatically closed after the tray 11 or the forming platform 12 enters the interior of the shell 29. Thus, relative sealing performance of the 3D printer is ensured in an operation process that the tray 11 or the forming platform 12 enters and leaves the shell 29.

Specifically, the first detection mechanism is a photoelectric sensor, and determines whether the forming platform 12 and the tray 11 have been put into or taken out from the shell by detecting whether an object blocks a light path at the window 297. For example, in a process that the forming platform 12 and the tray 11 are loaded or taken out, the first detection mechanism detects that a light path of the first detection mechanism is blocked, it is determined that the forming platform 12 and the tray 11 have not been loaded or taken out yet. When the light path of the first detection mechanism is changed from blocked to unblocked and keeps unblocked for a preset duration, it is determined that the forming platform 12 and the tray 11 have been mounted or taken out. The driving mechanism may be a stepping motor.

In an embodiment, the driving mechanism is also configured to drive the closing door 298 to open the window 297 when an opening condition is satisfied. For example, the closing door 298 is automatically opened when the forming platform 12 and the tray 11 are about to be loaded into the printing compartment 296. In an embodiment, the 3D printer 10 further includes a second detection mechanism. The second detection mechanism is configured to detect whether the forming platform 12 and the tray 11 is close to the closing door 298, and an opening condition is the second detection mechanism detecting that the forming platform 12 and the tray 11 are close to the closing door 298. In other words, when the second detection mechanism detects that the forming platform 12 or the tray 11 approaches the closing door 298, it means that the forming platform 12 or the tray 11 need to pass through the window 297. Therefore it is determined that the opening condition is satisfied, and the driving mechanism drives the closing door 298 to open the window 297, such that the forming platform 12 or the tray 11 pass. In the embodiment, the forming platform 12 and the tray 11 approaching the closing door 298 means that a distance between the forming platform 12 and the tray 11 and the closing door 298 in an upward direction of the window 297 is less than a preset distance. In this case, the second detection mechanism includes at least one of a photoelectric sensor, an ultrasonic ranging sensor, etc., capable of detecting whether an object approaches. The sensors are able to send out corresponding electrical signals when the distance between the forming platform 12 or the tray 11 and the closing door 298 is less than the preset distance.

In some other embodiments, an opening condition is the second detection mechanism identifying the forming platform 12 and the tray 11 as verified. For example, the second detection mechanism includes a reader. The forming platform 12 and the tray 11 are provided with identifiers, and the opening condition is the second detection mechanism identifying the identifiers on the forming platform 12 and the tray 11 as verified identifiers. The identifiers include, but not limited to, a matrix code (two-dimensional code), a bar code, a character, a chip, a NFC electronic tag, a RFID electronic tag, etc. Thus, the window 297 is limited to the forming platform 12 and the tray 11 to pass, and the closing door 298 is not triggered by other external events to open the window 297. In the embodiment of the present invention, the second detection mechanism is arranged near the window 297 on an outer side of the shell 29 such that the closing door 298 is able to be automatically opened when a user tries to load the forming platform 12 and the tray 11 from the window 297; the second detection mechanism is able to also be arranged near the window 297 on an inner side of the shell 29 such that the closing door 298 is able to be automatically opened when the forming platform 12 and the tray 11 are delivered outwards. In some embodiments, second detection mechanisms are arranged inside and outside the shell 29. In an embodiment, an opening condition requires both the forming platform 12 and the tray 11 approaching the closing door 298 and the second detection mechanism identifying identifiers on the forming platform 12 and the tray 11 as verified identifiers.

According to the 3D printer 10 of the embodiment of the present invention, the window 297 on the shell 29 of the 3D printer allows the forming platform 12 and the tray 11 to pass such that the forming platform 12 and the tray 11 is able to be put or taken out. Compared with opening the shell 29 or detaching the shell 29 in the related art, gas exchange between the interior and exterior of the printing compartment 296 is reduced, and the printing compartment 296 is kept in an environment suitable for storing the printing material or printing. The closing door 298 is able to automatically close the window 297, or the forming platform 12 and the tray 11 is able to block the window 297, thereby reducing gas exchange between the interior and exterior of the printing compartment 296, and preventing external dust from entering the printing compartment 296 to affect a printing effect. Furthermore, an environment adjusting apparatus 30 is able to adjust an air pressure of the printing compartment 296 to be slightly higher than an air pressure of the external environment. In this case, even if the window 297 is opened, external impurities also do not easily enter the printing compartment 296 to affect an environment of the printing compartment 296. In the embodiment of the present invention, a shielding member 293 is able to shield a light path after the tray 11 is taken out, thereby preventing the user from being harmed by light of the light source 13.

With reference to Fig. 1, the present invention provides a 3D printer 10. In an embodiment, the 3D printer 10 is configured to print and form a 3D model. In other words, the 3D printer 10 is able to process a printing material, such that the printing material is formed into a specified 3D shape. It should be noted that the printing material is powder, liquid or a solid-liquid mixture, such as a photocurable printing material; and in some embodiments of the present invention, a photosensitive resin is used as the printing material.

The 3D printer 10 includes a tray 11, a forming platform 12 and a light source 13. The forming platform 12 is located on a top side of the tray 11. The tray 11 is configured to accommodate a printing material, and the printing material is configured for manufacturing a 3D object. The light source 13 is arranged at a bottom side of the tray 11, and a bottom of the tray 11 is transparent. The light source 13 is configured to project light towards the tray 11, such that the printing material located between the forming platform 12 and the bottom of the tray 11 is polymerized into a cured sheet, and the cured sheet is adhered to the forming platform 12. Then, the forming platform 12 moves away from the bottom of the tray 11, and the light source 13 interruptedly or uninterruptedly projects light towards the bottom of the tray 11, such that the cured sheets stacked on the forming platform 12 layer by layer are ultimately formed into the 3D object.

It should be noted that the 3D printer in the embodiment may include components in the 3D printer in the embodiment described above, and may not include the above components, which is not defined herein.

The tray 11 for 3D printing is essentially an optical element. Before use, it is optimal to ensure that a bottom of the tray 11 is clean to preventing fine particles, such as dust, from affecting printing quality. If resin is pre-placed in the tray 11, it is not desirable that environmental factors such as external light, temperature and humidity that are not from light sources of the printer affect properties of the printing material. After the tray 11 is used, the tray 11 contains unused resin possibly. The resin needs to be properly stored.

With reference to Fig. 44, in the embodiment, the tray 11 includes a cover body 415 and a tray body 411. A second fitting member 417 is arranged on the cover body 415. The tray body 411 is of a barrel-shaped structure having aopeningn opening, and a first fitting member 422 for fitting with the second fitting member 417 is arranged on the tray body 411. The cover body 415 has a closed position in which it covers the openingopening of the tray body 411 to seal the tray body 411, and an open position in which it exposes the openingopening of the tray body 411. The second fitting member 417 and the first fitting member 422 are in fit with each other to lock the cover body 415 and the tray body 411 to maintain the closed position when the cover body 415 is at the closed position. Further, the tray 11 further includes an elastic supporting member 423. The elastic supporting member 423 is arranged between the cover body 415 and the tray body 411 and is configured to provide an elastic force for the cover body 415 to maintain the open position.

Specifically, the elastic supporting member 423 of the tray 11 is able to keep the cover body 415 and the tray body 411 unlocked by means of the elastic force; and the second fitting member 417 and the first fitting member 422 are in fit with each other to lock the cover body 415 and the tray body 411 to maintain the closed position. That is, the second fitting member 417, the first fitting member 422 and the elastic supporting member 423 collaboratively are in fit with each other to ensure that the tray 11 is maintained at the open position to achieve the task of loading and unloading material, or is maintained at the closed position to achieve the task of sealing resin. Compared with the related art in which the cover body 415 needs to be manually closed and the cover body 415 needs to be manually opened, the tray 11 is able to significantly reduce workload of an operator by means of the elastic force of the elastic supporting member 423 and fit between the second fitting member 417 and the first fitting member 422, and has the characteristics of saving time and labor and being convenient to operate.

In the embodiment, the second fitting member 417 is connected to the first fitting member 422 in a snap-fit manner when the cover body 415 is at the closed position. It should be noted that in other embodiments, the second fitting member 417 and the first fitting member 422 may be fastened to each other, magnetically attracted to each other, or screwed to each other, etc. when the cover body 415 is located at a closed position, as long as the second fitting member 417 and the first fitting member 422 are in fit with each other to lock the cover body 415 and the tray body 411, which is only an example and is not limitative.

It is seen from the figure that the second fitting member 417 and the first fitting member 422 are both provided with inclined surfaces. When the cover body 415 moves from the open position to the closed position, the inclined surface of the second fitting member 417 abuts against the inclined surface of the first fitting member 422 to be connected to the first fitting member 422 in a snap-fit smoothly.

Further, the cover body 415 is pivotably arranged at one end of the tray body 411 to open or close the openingopening of the tray body 411. Pivotable connection has the characteristics of a simple structure and convenient processing, and is able to facilitate opening and closing of the cover body 415 under a condition of ensuring the largest opening of the tray body 411. Understandably, in other embodiments, the cover body 415 and the tray body 411 are further connected by means of a lead screw, slidably connected, etc., as long as the cover body 415 is conveniently opened, which is only an example and not defined.

To sum up, the tray 11 and the 3D printer 10 according to the embodiments of the present invention have at least the following advantages: the tray 11 of the solution is able to automatically open a cover and automatically seal the cover body 415. Such an opening mode of the cover body 415 is able to significantly reduce labor consumption of the operator and save time and labor, and is convenient and fast to operate, thereby being conducive to improvement in operation efficiency and increase in an amount of work per unit time, such that economical benefits are significant. The 3D printer 10 of the solution has flexible operation and a high degree of automation, is able to be adapted to production having more closely linked steps, further has convenient and fast use, saves time and labor, and has prominent progress.

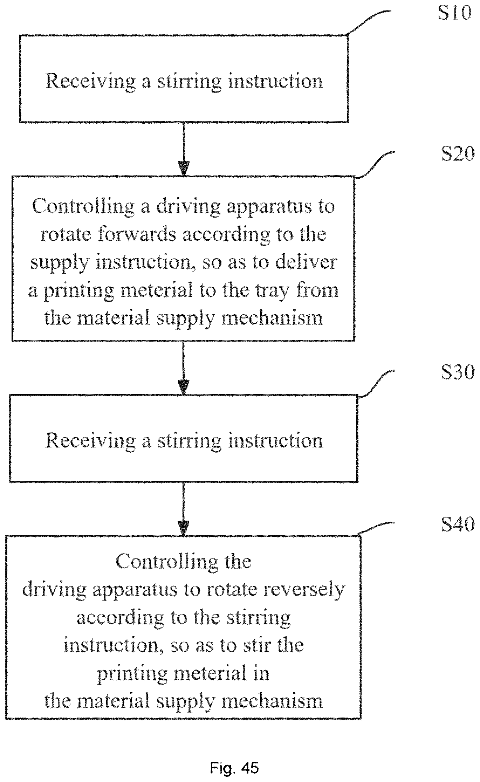

With reference to Fig. 45, the present invention provides a 3D printing method. The 3D printing method is applied to, but not limited to, the 3D printer in the embodiment described above.

In an embodiment, the 3D printing method is configured to improve in the related art that a printing material is inconvenient to add. Specifically, it is seen in combination with Fig. 46 that the 3D printing method is executed by a control unit 19 to control a driving apparatus 20. The driving apparatus 20 is configured to be in transmission connection with the transmission assembly 200 in the embodiment described above, such that the driving apparatus 20 conveniently drives a conveying member 120 to rotate under a condition of operation. The control unit 19 is electrically connected to the driving apparatus 20 to control the driving apparatus 20 to adjust a rotation speed or a rotation direction.

It should be noted that the control unit 19 receives a control instruction sent by a user to control the driving apparatus 20 to adjust the rotation speed or the rotation direction. The control instruction includes a supply instruction and a stirring instruction. The control unit 19 controls a material supply mechanism 14 to supply a printing material to a tray 11 according to the supply instruction. The control unit 19 controls the material supply mechanism 14 to stir the printing material in a storage cavity 111 according to the stirring instruction.

Specifically, the 3D printing method includes:
S10, receiving a supply instruction.

The user sends the supply instruction by means of an intelligent terminal, a remote controller, etc. In some embodiments, the user also sends the supply instruction by pressing or touching a control button arranged on a 3D printer 10. In some embodiments, the supply instruction is also sent by means of triggering under a condition that an amount of the printing material detected by a sensor arranged in the tray 11 is reduced to a preset threshold.

S20, controlling the driving apparatus 20 to rotate forwards according to the supply instruction.

Under the condition that the control unit 19 receives the supply instruction, it is indicated that the printing material needs to be added in the tray 11. On this basis, the control unit 19 controls the driving apparatus 20 to rotate forwards, such that the material supply mechanism 14 adds the printing material to the tray 11, thereby achieving the purpose of timely adding the printing material to the tray 11.

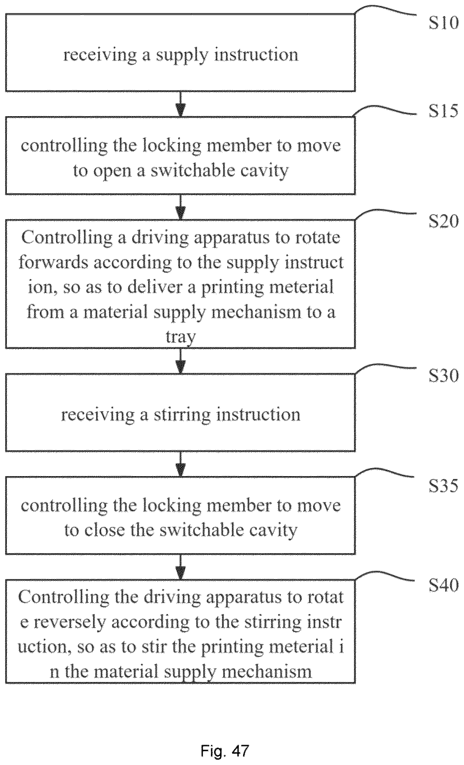

With reference to Fig. 47, in an embodiment, an output assembly 300 includes a housing 330 and a locking assembly 340. After S10, the 3D printing method further includes:
S15, controlling a locking member 341 to move to open a switchable cavity 3421.

In other words, the locking member 341 needs to be controlled to move by means of the control unit 19, so as to open the switchable cavity 3421. In this case, the printing material is guided out of the switchable cavity 3421 and a discharge cavity 3422 by means of forward rotation of the conveying member 120, such that the printing material is added into the tray 11. In addition, after opening the switchable cavity 3421, S20 is executed, thereby effectively adding the printing material.

It should be noted that the mode in which the control unit 19 controls the locking member 341 to open is as follows: the control unit 19 controls the driving apparatus 20 to drive the locking member 341 to rotate to implement "unlocking", and then drives the locking member 341 to move along the switchable cavity 3421 to establish communication between a first channel 34211 and a second channel 34212. Certainly, in some other embodiments, the locking assembly 340 is already "unlocked" when the material supply mechanism 14 is mounted in the 3D printer 10, and in this case, execution of S15 may be limited.

With reference to Fig. 45, in another embodiment, since a discharge channel 311 of a discharge member 310 is internally provided with a switching member 320, in order to conveniently convey the printing material, S20 includes: controlling the driving apparatus 20 to rotate forwards at an operation speed greater than or equal to a preset speed according to the supply instruction. On this basis, under the condition that the driving apparatus 20 rotates forwards at the operation speed greater than or equal to the preset speed, the conveying member 120 rotates forwards at a rotation speed greater than or equal to the preset speed, such that a pressure applied by the printing material to the switching member 320 is greater than or equal to a preset pressure, and the switching member 320 opens a discharge channel 311, thereby allowing to convey the printing material into the tray 11.

S30, receiving a stirring instruction.

The user sends the stirring instruction by means of an intelligent terminal, a remote controller, etc. In some embodiments, the user also sends the stirring instruction by pressing or touching a control button arranged on the 3D printer 10. In some embodiments, the stirring instruction is also sent by means of triggering under the condition that duration for which the printing material stands in the storage cavity 111 detected by a sensor provided in the storage cavity 111 exceeds a preset threshold.

S40, controlling the driving apparatus 20 to rotate reversely according to the stirring instruction.

The control unit 19 controls the driving apparatus 20 to rotate reversely under the condition that the control unit 19 receives the stirring instruction. In this case, the driving apparatus 20 drives the conveying member 120 to rotate reversely, such that the printing material in the storage cavity 111 is stirred by means of the conveying member 120, so as to improve precipitation formed in the printing material.

In some embodiments, with reference to Fig. 47, in an embodiment of the present invention, under a condition that the output assembly 300 is formed by the housing 330 and the locking assembly 340, after S30, the 3D printing method further includes:
S35, controlling the locking member 341 to move to close the switchable cavity 3421.

In other words, when the material supply mechanism 14 needs to be stirred, the switchable cavity 3421 needs to be closed by means of the locking member 341, so as to prevent the printing material from being conveyed out from the switchable cavity 3421 and the discharge cavity 3422. It should be understood that if it is detected that the locking member 341 is currently in a state of closing the switchable cavity 3421 under the condition of receiving the stirring instruction in S30, execution of step S35 is limited.

After the switchable cavity 3421 is closed, the driving apparatus 20 is controlled to rotate forwards to stir the printing material. Under the condition that the switchable cavity 3421 is closed by the locking member 341, the printing material is not able to be conveyed from the switchable cavity 3421 and the discharge cavity 3422. On this basis, the printing material is able to be stirred by controlling the conveying member 120 to rotate forwards. It should be understood that in other embodiments, the conveying member 120 is controlled to rotate reversely to stir the printing material under the condition of closing the switchable cavity 3421.

With reference to Fig. 45, in another embodiment, since the switching member 320 enables opening when it withstands a certain pressure, after S30 of receiving the stirring instruction, the 3D printing method further includes: control the driving apparatus 20 to rotate forwards according to the stirring instruction at an operation speed less than a preset speed. The conveying member 120 rotates forwards at the rotation speed less than the preset speed under the condition that the driving apparatus 20 rotates forwards at the operation speed less than the preset speed, such that a pressure applied by the printing material to the switching member 320 is less than a preset pressure, and the switching member 320 closes the discharge channel 311, thereby stopping conveying the printing material into the tray 11. Similarly, the conveying member 120 rotates reversely under the condition that the driving apparatus 20 rotates reversely, such that the pressure applied by the printing material to the switching member 320 is less than the preset pressure, and the switching member 320 closes the discharge channel 311, thereby stopping conveying the printing material into the tray 11. Moreover, the conveying member 120 provides a stirring effect for the printing material in the storage cavity 111 while rotating, thereby improving precipitation of the printing material in the storage cavity 111.

It should be noted that S10 and S30 described above do not have a sequential order. Operation of step S20 is executed under the condition that the control unit 19 receives the supply instruction, and operation of S40 is executed under the condition that the control unit 19 receives the stirring instruction.

In summary, according to the 3D printing method, the control unit 19 controls the driving apparatus 20 to rotate forwards at the operation speed greater than or equal to the preset speed under the condition of receiving the supply instruction, such that the pressure applied by the printing material to the switching member 320 is greater than or equal to the preset pressure, thereby enabling the switching member 320 to open the discharge channel 311 to add the printing material into the tray 11. Correspondingly, the control unit 19 controls the driving apparatus 20 to rotate forwards at the operation speed less than the preset speed, or controls the driving apparatus 20 to rotate reversely under the condition of receiving the stirring instruction, such that the pressure applied by the printing material to the switching member 320 is less than the preset pressure. Therefore, the switching member 320 closes the discharge channel 311. In this case, the printing material in the storage cavity 111 is stirred by means of rotation of the conveying member 120, thereby stirring the printing material, and preventing precipitation from appearing in the printing material. Therefore, the 3D printing method is able to not only satisfy the requirements of the 3D printer 10 to timely add the printing material, but also prevent precipitation from being generated in the printing material.

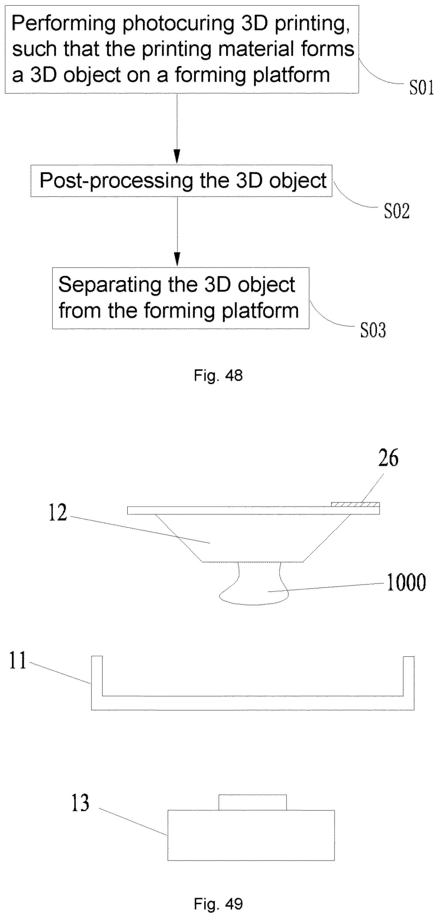

In addition, the present invention further provides a 3D printing method. In an embodiment, with reference to Fig. 48, the 3D printing method includes:
S01, performing light-curing 3D printing by the 3D printer, such that the printing material forms a 3D object 1000 on a forming platform 12.

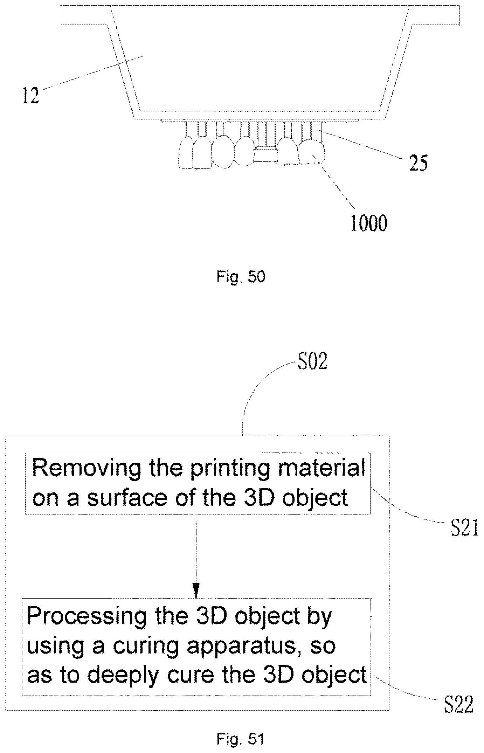

Fig. 49 is a scene diagram corresponding to S01 in the 3D printing method according to the embodiment. In the embodiment, the 3D object 1000 is directly adhered to the forming platform 12. Understandably, in other embodiments, with reference to Fig. 50, the printing material is used to form a supporting structure 25 on the forming platform 12 before the 3D object 1000 is formed according to requirements, such that the subsequently formed 3D object 1000 is connected to the forming platform 12 by means of the supporting structure 25. That is, two ends of the supporting structure 25 are connected to the forming platform 12 and the 3D object 1000 respectively.

The forming platform 12 used in the 3D printing method according to the embodiment is a disposable member. Specifically, the forming platform 12 is at least one of a plastic member, a straw member or a metal member and is integrally formed, thereby being conducive to reduction in cost of the forming platform 12. A manufacturing method for the forming platform includes, but not limited to, injection molding, 3D printing, blister forming, blow forming and extrusion forming. In some embodiments, the forming platform 12 has a thickness ranging from 1mm to 5mm, thereby reducing cost of the forming platform 12 as much as possible on the premise of ensuring reliable mechanical properties of the forming platform 12.

In the embodiment, the forming platform 12 is the plastic member integrally formed, and surface treatment is carried out on the plastic member, such that a surface of the manufactured forming platform 12 is provided with fine texture, or surface roughness of the forming platform 12 is increased, and an adhesive force between the surface of the forming platform 12 and the 3D object 1000 is increased, thereby avoiding the phenomenon that the 3D object 1000 falls off from the surface of the forming platform 12. In some embodiments, surface treatment is carried out on the plastic member by using at least one of spraying, sandblasting, frosting, carving, electroplating, coating film, printing, texturing, polishing, paint spraying, oil applying, ion plating, laser treatment, sandy finish, electrosparking, oil spraying, silk screen printing, laser carving, water transfer printing, machining fine carving, film pasting, chemical corrosion or wiredrawing.

Since the forming platform 12 is a disposable member, after printing is completed and the forming platform is separated from the 3D object 1000, the user is able to directly discard the forming platform 12 without subsequent maintenance or cleaning of the forming platform 12, and a state of the forming platform 12 is not damaged. Moreover, it is unnecessary to perform any adaptive treatment on the forming platform 12 for replacing the material. For example, it is unnecessary to clean the forming platform 12.

In the embodiment, the forming platform 12 is of a bowl-shaped structure. Understandably, in other embodiments, a structural form of the forming platform 12 is also specifically configured according to requirements. For example, the forming platform 12 is configured into a flat plate shape, a cup shape, or a disc shape.

S02, post-processing the 3D object 1000.

After printing of the 3D object 1000 is completed, the 3D object 1000 is post-processed. Since the 3D object 1000 is not separated from the forming platform 12 in this case, the forming platform 12 moves along with the 3D object 1000 when the 3D object 1000 is post-processed. That is, the forming platform 12 and the 3D object 1000 are post-processed together, and a printed object is removed after post-processing is completed, such that operation is convenient.

Thus, in a process of post-processing, the forming platform 12 is used as a carrier for subsequent operations of the 3D object 1000. For example, a user is able to transfer the 3D object 1000 by directly taking the forming platform 12, and use the forming platform 12 as a connecting structural member between a post-processing apparatus and the 3D object 1000. That is, the 3D object 1000 is connected to the post-processing apparatus by means of connection between the post-processing apparatus and the forming platform 12. Further, deformation or damage of the 3D object 1000 in post-processing and transfer processes is prevented. Moreover, a jig or locking mechanism of each post-processing apparatus is configured as a universal member, thereby saving research and development time to some extent.

Fig. 51 is a sub-step diagram of S02 in a 3D printing method according to an embodiment. Specifically, in the embodiment, S02 includes:
S21, removing the printing material on a surface of a 3D object 1000.

The printing material on the surface of the 3D object 1000 is removed in at least one of centrifugal treatment, spray treatment or ultrasonic treatment. Understandably, the removal mode is not limited herein.

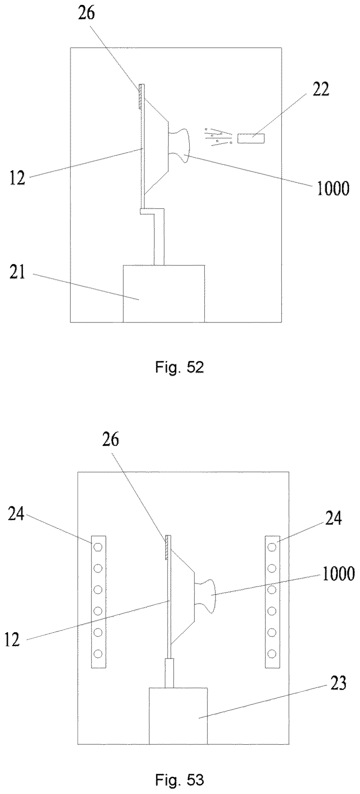

Fig. 52 is a schematic diagram of a scene when S21 is performed in a 3D printing method according to an embodiment. In the embodiment, the printing material on the surface of the 3D object 1000 is removed in a mode of centrifugal shaking. Specifically, the printing material on the surface of the 3D object 1000 is liquid photosensitive resin. The step specifically includes:
connecting the forming platform 12 to a centrifuging apparatus 21, and driving the forming platform 12 to rotate by means of the centrifuging apparatus 21. In this case, the 3D object 1000 rotates synchronously with the forming platform 12, so as to shake off the printing material adhered to the 3D object 1000. Moreover, a cleaning solution is sprayed onto the 3D object 1000 on the forming platform 12 before the centrifuging apparatus 21 drives the forming platform 12 to rotate, or in a process of rotation. Specifically, after the forming platform 12 is connected to the centrifuging apparatus 21, a spraying apparatus 22 is arranged at one side of the forming platform, and thus the cleaning solution is sprayed onto the 3D object 1000 by means of the spraying apparatus 22. In some embodiments, the cleaning solution is a solvent capable of dissolving the printing material, such that viscosity of the printing material is reduced, and the printing material is easily shaken off.

S22, processing the 3D object 1000 through a curing apparatus to further cure the 3D object 1000.

In the embodiment, the 3D object 1000 is processed through the curing apparatus such that the 3D object is rapidly and further cured. Understandably, in other embodiments, the 3D object 1000 is also further cured in a mode such as drying without the curing apparatus.

Fig. 53 is a schematic diagram of a scene when S22 is performed in a 3D printing method according to an embodiment. In the embodiment, the curing apparatus includes a curing lamp 24. The curing lamp 24 irradiates the 3D object 1000, such that the 3D object 1000 is further cured, thereby improving mechanical properties of the 3D object 1000. Moreover, the forming platform 12 and the 3D object 1000 on the forming platform rotate relative to the curing lamp 24 under the condition that the curing lamp 24 irradiates the 3D object 1000, such that the curing lamp 24 irradiates all portions of the 3D object 1000, curing is uniform, and the effect is desirable.

In the embodiment, the curing apparatus further includes a rotating apparatus 23. The forming platform 12 is connected to the rotating apparatus 23, such that the forming platform 12 is driven to rotate relative to the curing lamp 24 by means of the rotating apparatus 23, and the 3D object 1000 on the forming platform 12 rotates relative to the curing lamp 24 accordingly.

It should be noted that in this embodiment, relative rotation between the forming platform 12 and the curing lamp 24 is achieved by means of rotation of the forming platform 12. Understandably, in other embodiments, relative rotation between the forming platform 12 and the curing lamp 24 is achieved by means of rotation of the curing lamp 24 driven by the rotating apparatus 23 and the stationary forming platform 12. Alternatively, the forming platform 12 and the curing lamp 24 are both configured to rotate, but rotation speeds or rotation directions of the forming platform and the curing lamp are different.

In some embodiments, a plurality of curing lamps 24 are arranged, and the plurality of curing lamps 24 are distributed around a rotation axis of the forming platform 12. That is, the plurality of curing lamps 24 are arranged around the forming platform 12 and the 3D object 1000. In the embodiment, two curing lamps 24 are arranged. Understandably, in other embodiments, the number of curing lamps 24 is specifically configured according to requirements, such as three and four.

It should be noted that a specific structure of the curing apparatus is not defined herein. Understandably, in other embodiments, the structure of the curing apparatus is also configured according to requirements. For example, the curing apparatus is configured to further include a thermal curing apparatus (e.g., an oven, which allows curing the 3D object 1000 in a light-heat dual curing mode. In some embodiments, the curing apparatus is configured to further include a humidifying apparatus, which allows curing the 3D object 1000 in a light-moisture dual curing mode.

In the embodiment, the forming platform 12 is provided with an identifier 26. Production data is stored in the identifier 26, and is stored by means of one or more of a two-dimensional code, a character code, a digital code, a bar code, a special pattern, a NFC tag, a RFID tag or an electronic chip. Understandably, in other embodiments, the identifier is also provided on the forming platform 12 in other modes capable of being storaged and being identified in the related art.

In some embodiments, the production data in the identifier 26 includes at least one of a type of the printing material, printing parameters of the 3D object 1000, or process parameters of a post-processing apparatus. That is, the process parameters of post-processing is directly obtained by obtaining the identifier 26, or the corresponding process parameters of the post-processing is also determined according to the type of the printing material in the production data, the printing parameters of the 3D object 1000, etc. The process parameters of the post-processing include a type of the post-processing, control parameters of corresponding cleaning, control parameters of the curing apparatus, etc.

In the embodiment, the production data stored in the identifier 26 on the forming platform 12 further includes process parameters for post-processing the 3D object. Thus, after the identifier 26 is identified and obtained, the process parameters of the post-processing, such as a composition of a sprayed cleaning solution and irradiation time of the curing lamp 24, are determined according to the identifier 26, thereby conveniently controlling the corresponding post-processing apparatus to perform corresponding operations according to the process parameters.

Further, the identifier 26 further includes printing parameters, etc. The printing parameters include a slice file of the 3D object 1000 and control parameters of a printer. Specifically, printing parameters are loaded into the identifier 26 of the forming platform 12 in advance before 3D printing, and data stored in the identifier 26 is read in a process of printing or before printing to obtain the printing parameters, and printing operation is performed according to the printing parameters, so as to allow a high degree of automation.

The control parameters during cleaning may include: a centrifugal rotation speed of the centrifuging apparatus 21, a nozzle pressure and spraying time of the spraying apparatus 22, the number of times of centrifugal rotations and spraying, a flow sequence, etc. The control parameters of the curing apparatus include: curing time, a rotation speed, stop time, a stop angle, a rotation angle, etc.

It should be noted that a data type in the identifier 26 is not limited herein. Understandably, in other embodiments, the identifier also includes other production data, such as production time of the 3D object 1000, a user to which the 3D object belongs, and a printer with which the 3D object is associated. It should be noted that the identifier 26 in the embodiment further has features and functions of the identifier on the forming platform 12 in the above embodiment. Reference is made to the above embodiment for related details, which will not be repeated herein.

S03, separating the 3D object 1000 from the forming platform 12.

Fig. 54 is a schematic diagram of a scene when S03 is performed in a 3D printing method according to the embodiment. In the embodiment, the 3D object 1000 is directly adhered to the forming platform 12, and thus the 3D object 1000 may be directly removed from the forming platform 12.

Moreover, in the embodiment, the step of separating the 3D object 1000 from the forming platform 12 is performed after S02. Thus, in a process of performing S02, the 3D object 1000 and the forming platform 12 are always transferred simultaneously such that the forming platform 12 is used as a bearing member of the 3D object 1000 in the process of performing S02. Moreover, since the forming platform 12 is a disposable member, the forming platform 12 is discarded after the 3D object 1000 is separated from the forming platform 12, such that the problem that various processes in the post-processing cause damage to the forming platform 12 is not considered. Moreover, mechanical properties of the 3D object 1000 have been further enhanced when the 3D object 1000 is separated from the forming platform 12, thereby being conducive to avoidance of possible deformation and breakage of the 3D object 1000 after the 3D object 1000 is separated from the forming platform 12. Understandably, in other embodiments, S03 is also performed before S02 according to requirements.

It should be noted that when a supporting structure 25 (such as a structure shown in Fig. 50) is provided between the 3D object 1000 and the forming platform 12, the 3D object 1000 is separated from the forming platform 12 by destroying the supporting structure 25. At least part of the destroyed supporting structure 25 remains connected to the forming platform 12 (as shown in Fig. 55), and then the forming platform 12 and the supporting structure 25 connected to the forming platform are discarded, such that operation is convenient.

To sum up, the 3D printing method according to the present invention uses the disposable forming platform 12, such that it is unnecessary to adaptively process the platform when the printing material is replaced. For example, it is unnecessary to clean the platform. In other words, subsequent maintenance, maintenance and cleaning operations on the forming platform 12 are avoided. Moreover, since new forming platforms 12 are used for 3D printing, it is unnecessary to use old forming platforms that cause certain losses, thereby ensuring printing quality and stability. Moreover, since it is unnecessary to consider the problems such as damage and corrosion of the forming platform 12 during post-processing, the forming platform 12 is used as a bearing member in a whole post-processing process to carry the 3D object 1000 for operation after printing, and the 3D object 1000 is taken down after post-processing is completed, such that it is convenient to take, place and fix the 3D object. Moreover, the deformation and damage of the 3D object 1000 which is caused by separating the 3D object 1000 from the forming platform 12 before post-processing can be improved. Furthermore, the forming platform 12 is further provided with an identifier 26, production information of the 3D object 1000 is recorded by means of the identifier 26, and process parameters of a printing process and post-processing process of the 3D object 1000 are given, such that a production process is intelligent, thereby being conducive to improvement in production efficiency and production quality.

The 3D printer in the present invention includes a plurality of forming platforms 12. The plurality of forming platforms 12 are all disposable members, and are used in a manufacturing process of the 3D object 1000 according to the 3D printing method described above, and the printing material is pre-stored in the tray 11 for manufacturing the 3D object 1000. The tray 11 is used for a predetermined number of times according to an amount of a photocuring material pre-stored in the tray 11. That is, the predetermined number of 3D objects 1000 is manufactured. The tray 11 is discarded after the predetermined number of 3D objects 1000 are manufactured. That is, the tray 11 is also regarded as a disposable member. The number of the forming platforms 12 is adapted to the preset number of the 3D objects 1000, thereby ensuring that the number of the forming platforms 12 is able to satisfy use requirements of the tray 11. That is, the number of the forming platforms 12 is greater than or equal to the preset number of the 3D objects 1000.

Thus, when the 3D object 1000 is manufactured, corresponding consumable components are selected according to the number of 3D objects 1000 to be manufactured. For example, consumable components of two 3D objects 1000 corresponding to the amount of printing material pre-stored in the tray 11 are selected under the condition that two 3D objects 1000 need to be manufactured. Thus, after manufacturing of the required number of 3D objects 1000 is completed, the printing material pre-stored in the tray 11 is consumed, and the tray 11 is directly discarded, such that the printing material does not need to be used for a next time, and the deterioration of the printing material is avoided, such that the problem of quality of the 3D object 1000 caused by deterioration of the printing material is also improved.

On the basis of each embodiment described above, in an embodiment, a 3D printer includes a tray 11, a control unit 19 and a liquid level measuring mechanism. The liquid level measuring mechanism includes a measurement assembly 802 and a processing assembly 803. The measurement assembly 802 is arranged on the tray 11 and is configured to extend into a liquid storage area of the tray 11. The processing assembly 803 is connected to the control unit 19 and is detachably connected to the measurement assembly 802.

In an embodiment, a 3D printer includes a tray 11, a rack 15 and a film tightening member 18. The film tightening member 18 is configured to be arranged on the rack 15. The tray 11 includes a release film 27, is configured to be in sliding fit with the rack 15 and has a fixed position, the release film 27 is configured to gradually approach the film tightening member 18 in a process that the tray 11 moves relative to the rack 15 in a first direction a, and the release film 27 is tensioned by the film tightening member 18 when the tray 11 moves to the fixed position.

In an embodiment, a 3D printer includes a lifting mechanism 17, a platform connecting mechanism 28 and a forming platform 12. The platform connecting mechanism 28 is connected to the lifting mechanism 17, and the forming platform 12 includes a platform body 101, a first sliding connecting portion 104 and a restricting portion 102. The first sliding connecting portion 104 is connected to the platform body 101 and is configured to be slidably connected to the platform connecting mechanism 28. The restricting portion 102 is arranged on the first sliding connecting portion 104 and is configured to be in fit with the platform connecting mechanism 28 when the platform body 101 slides to a predetermined position relative to the platform connecting mechanism 28, so as to limit sliding of the forming platform 12.

In an embodiment, a 3D printer includes a tray 11 and a forming platform 12. The forming platform 12 is located at one side of the tray 11 and is configured to adhering cured sheets formed by curing a printing material layer by layer to obtain a 3D object 1000, and the forming platform 12 is a disposable member.

In an embodiment, a 3D printer includes a shell 29 and a forming assembly. The shell 29 is provided with a window 297, and the window 297 allows the forming assembly to be taken out or put into the shell 29. A closing door 298 is arranged on the shell 29, and the closing door 298 is able to automatically close the window 297. Alternatively, the window 297 is closed by the forming assembly after the forming assembly is mounted within the shell 29.

In an embodiment, a 3D printer includes a tray 11. The tray 11 includes a tray body 411, a cover body 415 and an elastic supporting member 423. The tray body 411 is provided with a opening and is provided with a first mating member 422. The cover body 415 is provided with a second fitting member 417 in fit with the first fitting member 422, and has a closed position in which it covers the tray body 411 to seal the opening, and an open position in which it opens the opening. When the cover body 415 is at the closed position, the second fitting member 417 and the first fitting member 422 are in fit with each other to lock the cover body 415 and the tray body 411 to maintain the closed position. The elastic supporting member 423 is arranged between the cover body 415 and the tray body 411, and is configured to provide an elastic force for the cover body 415 to maintain the open position.

In an embodiment, a 3D printer includes a forming platform 12. The forming platform 12 is provided with a forming surface 125, and the forming surface 125 is configured for adhering a 3D printed object formed of a photocuring material subjected to exposure curing. The forming platform is made of a modified plastic material, and an adhesive force between the forming surface 125 and a printing layer formed of the photocuring material subjected to exposure curing is not less than 1.5N or 3N per square centimeter.

In an embodiment, a 3D printer includes a forming platform 12. The forming platform 12 is made of a plastic material and has a forming surface 125 processed by surface treatment, and the forming surface 125 is configured for adhering a 3D printed object formed of a photocuring material subjected to exposure curing.

The surface treatment includes at least one of spraying, sandblasting, frosting, carving, electroplating, coating film, printing, texturing, polishing, paint spraying, oil applying, ion plating or laser treatment.

The surface treatment is spraying, and raw materials used by the spraying include 100 parts of light-cured resin, 80-150 parts of diluent and 0.05-2 parts of initiator in parts by mass, the light-cured resin is selected from at least one of acrylics, allyl ethers or vinyl ethers, and the light-cured resin has number-average molecular weight ranging from 4000 to 100,000.

In an embodiment, a 3D printing method includes: performing, photocuring 3D printing by a 3D printer, such that the printing material forms a 3D object 1000 on a forming platform 12; post-processing the 3D object 1000; and separating the 3D object 1000 from the forming platform 12; and the forming platform 12 is a disposable member.

It should be noted that the terms used herein are merely for describing the detailed description of embodiments and are not intended to limit exemplary embodiments according to the present invention. As used herein, a singular form is also intended to include a plural form unless otherwise clearly indicated in the context. In addition, it should be understood that terms "include" and/or "comprise" indicate the presence of features, steps, operations, apparatus, components, and/or combinations of the foregoing when used in the description.

It should be noted that the terms "first", "second", etc. in the description and claims of the present invention and in the accompanying drawings described above, are used to distinguish similar objects, and not necessarily to describe a particular order or sequential order. It should be understood that data used in this way can be interchanged under appropriate circumstances, such that the embodiment of the present invention described herein can be implemented in a sequence other than those illustrated or described herein.

What are described above are merely the specific embodiments of the present invention and are not intended to limit the present invention, and various changes and modifications can be made to the present invention by those skilled in the art. Any modification, equivalent substitution, improvement, etc. made within the spirit and principles of the present invention shall fall within the scope of protection of the present invention.

## Claims

1. A material supply mechanism, configured to add a printing material to a tray (11) of a 3D printer, **characterized in that**, comprising:
a conveying assembly (100) comprising a storage body (110) and a conveying member (120), the storage body (110) is internally provided with a storage cavity (111) for storing the printing material, and the conveying member (120) is arranged in the storage cavity (111);
a transmission assembly (200) connected to the conveying member (120) in a transmission manner and configured to drive the conveying member (120) to move in the storage cavity (111) when driven; and
an output assembly (300) connected to the storage body (110) and configured to deliver the printing material to the tray (11);
a liquid level measuring mechanism is arranged on the tray (11), the liquid level measuring mechanism is configured to measure an amount of the printing material in the tray (11), and the material supply mechanism is configured to convey or stop conveying the printing material to the tray (11) based on a measurement result from the liquid level measuring mechanism.

2. The material supply mechanism as claimed in claim 1, **characterized in that**, the output assembly (300) comprises:
a housing (330) connected to the storage body (110) and having an accommodating space; and
a locking assembly (340) arranged in the accommodating space and comprising:
a locking body (342) arranged in the accommodating space and having a switchable cavity (3421) and a discharge cavity (3422) that are in communication with each other, the switchable cavity (3421) is in communication with the storage cavity (111), and the discharge cavity (3422) is configured for delivering the printing material out; and
a locking member (341) movably arranged in the switchable cavity (3421) to selectively establish or cut off a communication between the switchable cavity (3421) and the storage cavity (3422).

3. The material supply mechanism as claimed in claim 2, **characterized in that**, the switchable cavity (3421) comprises a first channel (34211) and a second channel (34212) that are in communication with each other, an inner diameter of the first channel (34211) is greater than an inner diameter of the second channel (34212), one of the first channel (34211) and the second channel (34212) is in communication with the discharge cavity (3422), and the other one of the first channel and the second channel is in communication with the storage cavity (111); and
the locking member (341) has a first blocking portion (3411), and the first blocking portion (3411) is movably arranged in the switchable cavity (3421), and is configured to block the second channel (34212) when at least partially entering the second channel (34212), and is further configured to enter the first channel (34211) to establish a communication between the first channel (34211) and the second channel (34212).

4. The material supply mechanism as claimed in claim 3, **characterized in that**, the first channel (34211) comprises:
an adjustable area (301) located at one end of the second channel (34212) in an axial direction and having a radial size same to the inner diameter of the second channel (34212); and
a flow guide area (302) arranged around the adjustable area (301).

5. The material supply mechanism as claimed in claim 4, **characterized in that**, the locking body (342) comprises a restriction portion (303), the restriction portion (303) is arranged in the flow guide area (302) and is configured to abut against a periphery of the first blocking portion (3411) after the first blocking portion (3411) enters the first channel (34211), so as to restrict the first blocking portion (3411) in the adjustable area (301).

6. The material supply mechanism as claimed in claim 3, **characterized in that**, the locking body (342) comprises a first limiting portion (304), the first limiting portion (304) is located at one end of the second channel (34212) away from the first channel (34211) and is configured to abut against the first blocking portion (3411), so as to restrict the first blocking portion (3411) in the switchable cavity (3421).

7. The material supply mechanism as claimed in claim 3, **characterized in that**, the switchable cavity (3421) further comprises a third channel (34213), the third channel (34213) is arranged at one side of the locking body (342) away from the storage cavity (111), and one of the first channel (34211) and the second channel (34212), in communication with the discharge cavity (3422), is in communication with the third channel (34213); and
the locking member (341) further has a second blocking portion (3412) spaced from the first blocking portion (3411), and the second blocking portion (3412) is slidably arranged in the third channel (34213) and is configured for closing the third channel (34213).

8. The material supply mechanism as claimed in claim 7, **characterized in that**, the locking member (341) further comprises an operation portion (3414), the operation portion (3414) is connected to one side of the second blocking portion (3412) away from the first blocking portion (3411), and is exposed outside the housing (330) from one side of the locking body (342) away from the storage body (110), and is configured to drive the first blocking portion (3411) and the second blocking portion (3412) to move in the switchable cavity (3421) after receiving an acting force.

9. The material supply mechanism as claimed in claim 2, **characterized in that**, the locking body (342) comprises an engaging member (3424), the engaging member (3424) is arranged in the discharge cavity (3422); the locking member (341) comprises a snapping member (3415) adapted to the engaging member (3424), the snapping member (3415) is configured to be connected to the engaging member in a snap-fit manner (3424) to prevent the locking member (341) from opening the switchable cavity (3421); and
the locking member (341) is further configured to rotate when the switchable cavity (3421) is closed, so as to connect the snapping member (3415) to the engaging member (3424) in a snap-fit manner, or release the snap-fit connection between the snapping member (3415) and the engaging member (3424).

10. The material supply mechanism as claimed in claim 9, **characterized in that**, the engaging member (3424) comprises an engaging portion (34242) and a first connecting portion (34241), one end of the first connecting portion (34241) is connected to an inner wall of the discharge cavity (3422), the first connecting portion (34241) extends in an extending direction of the switchable cavity (3421), the engaging portion (34242) is connected to the other end of the first connecting portion (34241), and the engaging portion (34242) is arranged at an included angle relative to the first connecting portion (34241); and
the locking member (341) further comprises a connecting body (3413), and the snapping member (3415) comprises a snapping portion (34152) and a second connecting portion (34151), one end of the second connecting portion (34151) is connected to the connecting body (3413), and the snapping portion (34152) is connected to the other end of the second connecting portion (34151), and is arranged at an included angle relative to the second connecting portion (34151), and is configured to be connected to the engaging portion (34242) in a snap-fit manner.

11. The material supply mechanism as claimed in claim 9, **characterized in that**, the locking body (342) further comprises a second limiting portion (305), the second limiting portion (305) is arranged in the switchable cavity (3421) and protrudes from an inner peripheral wall of the switchable cavity (3421), and the second limiting portion (305) is configured to abut against the snapping member (3415) to restrict a movement of the locking member (341) when the locking member (341) opens the switchable cavity (3421).

12. The material supply mechanism as claimed in claim 2, **characterized in that**, a guide-out portion (3423) protrudes from the locking body (342); the guide-out portion (34231) is provided with a guide groove (3423), and the guide groove (34231) is in communication with the discharge cavity (3422); the housing (330) is provided with an outlet (331); and the guide-out portion (3423) intends through the housing (330), through the outlet (331), to guide the printing material out.

13. The material supply mechanism as claimed in claim 1, **characterized in that**, the output assembly (300) comprises a discharge member (310) and a switching member (320), the discharge member (310) is connected to the storage body (110) and has a discharge channel (311) in communication with the storage cavity (111), and the switching member (320) is connected to the discharge member (310) and is configured to open the discharge channel (311) when the switching member bears a pressure applied by the printing material greater than or equal to a preset pressure, and to close the discharge channel (311) when the switching member bears the pressure applied by the printing material less than the preset pressure.

14. The material supply mechanism as claimed in claim 1, **characterized in that**, the conveying member (120) further comprises a transmission shaft (121) and a conveying portion (122), the conveying portion (122) is formed at a periphery of the transmission shaft (121) along a spiral path, the transmission shaft (121) extends out of the storage body (110), and an end portion of the transmission shaft extending out of the storage body (110) is connected to the transmission assembly (200), so as to be in transmission fit with the transmission assembly (200).

15. The material supply mechanism as claimed in claim 1, **characterized in that**, further comprising a control unit (19) and a driving apparatus (20), the driving apparatus (20) is connected to the transmission assembly (200) in a transmission manner and is configured to drive the transmission assembly (200) to rotate, and the control unit (19) is electrically connected to the driving apparatus (20) and is configured to control the driving apparatus (20) to adjust a rotation direction or a rotation speed according to a received control instruction.

16. The material supply mechanism as claimed in claim 15, **characterized in that**, the liquid level measuring mechanism is electrically connected to the control unit (19), and the control unit (19) is further configured to control the driving apparatus (20) to convey the printing material to the tray (11) when the liquid level measuring mechanism measures that the amount of the printing material in the tray (11) is lower than a preset amount.

17. The material supply mechanism as claimed in claim 15, **characterized in that**, the liquid level measuring mechanism comprises:
a measurement assembly (802) arranged on the tray (11) and configured to extend into a liquid storage area of the tray (11); and
a processing assembly (803) connected to the control unit (19) and detachably connected to the measurement assembly (802).

18. The material supply mechanism as claimed in claim 17, **characterized in that**, the measurement assembly (802) comprises:
a measurement chip (8021) arranged on the tray (11) or arranged on other components, apart from the tray (11), of the 3D printer; and
a plurality of measurement components (8022), each of the plurality of measurement components (8022) is detachably connected or fixedly connected to the measurement chip (8021), and each of the plurality of measurement components (8022) extends into the liquid storage area of the tray (11).

19. A material supply mechanism, configured to add a printing material to a tray (11) of a 3D printer, **characterized in that**, comprising:
a conveying assembly (100) comprising a storage cavity (111) for storing the printing material and a conveying member (120), the conveying member (120) is arranged in the storage cavity (111) and is configured to rotate when driven, so as to stir the printing material; and
an output assembly (300) configured to selectively convey the printing material from the storage cavity (111) to the tray (11) or to stop conveying.

20. A material supply mechanism, configured to add a printing material to a tray (11) of a 3D printer, **characterized in that**, comprising:
a conveying assembly (100) comprising a storage cavity (111) for storing the printing material and a conveying member (120), the conveying member (120) is arranged in the storage cavity (111) and is configured to rotate when driven, so as to stir the printing material; and
an output assembly (300) comprising a discharge channel (311) and a switching member (320), the discharge channel (311) is in communication with the tray (11) and the storage cavity (111), and the switching member (320) is located in the discharge channel (311) and is configured to open the discharge channel (311) when the switching member bears a pressure applied by the printing material from the storage cavity (111) greater than or equal to a preset pressure, so as to deliver the printing material to the tray (11), and to close the discharge channel (311) when the switching member bears the pressure applied by the printing material less than the preset pressure.

21. A tray assembly, **characterized in that**, comprising a tray (11) and the material supply mechanism as claimed in any one of claims 1-20, and the material supply mechanism is detachably or non-detachably connected to the tray (11).

22. The tray assembly as claimed in claim 21, **characterized in that**, further comprising a liquid level measuring mechanism, the liquid level measuring mechanism is arranged on the tray (11) and is configured to measure a liquid level of the printing material in the tray (11).

23. A 3D printer, **characterized in that**, comprising:
a tray (11) for storing a printing material; and
a material supply mechanism (14) connected to the tray (11) and configured to add the printing material to the tray (11), the material supply mechanism (14) is configured as the material supply mechanism (14) as claimed in any of claims 1-20;
or, comprising the tray assembly as claimed in any one of claims 21-22.

24. The 3D printer as claimed in claim 23, **characterized in that**, further comprising:
a rack (15); and
a film tightening member (18) arranged on the rack (15),
the tray (11) comprises a release film (27), and is configured to be in sliding fit with the rack (15), and has a fixed position, the release film (27) is configured to gradually approach the film tightening member (18) during a movement of the tray (11) in a first direction (a) relative to the rack (15), and the release film (27) is tightened by the film tightening member (18) when the tray (11) reaches the fixed position.

25. The 3D printer as claimed in claim 24, **characterized in that**, further comprising a guiding part (700), the guiding part (700) is arranged on the rack (15) and is configured to guide the tray (11) to move relative to the rack (15).

26. The 3D printer as claimed in claim 24, **characterized in that**, further comprising a mounting seat (16), the film tightening member (18) is arranged on the mounting seat (16), and the mounting seat (16) is slidable in a second direction (b) relative to the rack (15) and has a preset position; the first direction (a) is at an angle with respect to the second direction (b);
a spacing between the tray (11) and the mounting seat (16) is gradually reduced in a process that the tray (11) slides in the first direction (a) and the mounting seat (16) slides in the second direction (b); and
the release film (27) is tightened by the film tightening member (18) when the tray (11) is located at the fixed position and the mounting seat (16) is located at the preset position.

27. The 3D printer as claimed in claim 26, **characterized in that**, further comprising a stopper (600),
the stopper (600) is connected to the mounting seat (16), and in a process that the tray (11) moves in the first direction (a), one end of the tray (11) abuts against the stopper (600), so as to push the stopper (600) and the mounting seat (16) to move synchronously; or
the stopper (600) is connected to the tray (11), and in the process that the tray (11) moves in the first direction (a), the tray (11) drives the stopper (600) to move synchronously and enables the stopper (600) to drive the mounting seat (16) to move synchronously.

28. The 3D printer as claimed in claim 26, **characterized in that**, further comprising an elastic member (610), the elastic member (610) is configured to apply a force to the mounting seat (16) in a direction opposite the second direction (b) when the mounting seat (16) is located at the preset position or the mounting seat (16) moves towards the preset position in the second direction (b), such that the mounting seat (16) tends to move away from the preset position.

29. The 3D printer as claimed in claim 28, **characterized in that**, further comprising a first positioning member (620), the first positioning member (620) is arranged on the rack (15); the tray (11) comprises a second positioning member (630); and the second positioning member (630) is in fit with the first positioning member (620) to lock the tray (11) at the fixed position when the tray (11) reaches the fixed position.

30. The 3D printer as claimed in claim 29, **characterized in that**, the first positioning member (620) is provided with a positioning groove (640), and comprises a bottom wall (641) and a top wall (642) that define the positioning groove (640) and are oppositely distributed, and a connecting wall (643) connected between the bottom wall (641) and the top wall (642), the connecting wall (643) is provided with a first positioning protrusion (646), and the top wall (642) is provided with a second positioning protrusion (647);
the second positioning member (630) comprises a rotatable pin (650), the pin (650) comprises two flat surfaces (651) and two concave surfaces (652), and the two flat surfaces (651) are opposite each other and are distributed spaced apart, the two concave surfaces (652) are opposite each other and are distributed spaced apart, and the two flat surfaces (651) are linked by the two concave surfaces (652);
when the pin (650) enters the positioning groove (640), one of the two concave surfaces (652) abuts against the first positioning protrusion (646), and the tray (11) moves in a direction away from the fixed position under an action of an elastic force of the elastic member (610), such that the other one of the two concave surfaces (652) abuts against the second positioning protrusion (647), and the pin (650) is rotated such that two ends of one of the two flat surfaces (651) abut against the bottom wall (641) and the top wall (642) respectively under a blocking effect of the second positioning protrusion (647), and the other one of the two concave surfaces (652) abuts against the second positioning protrusion (647), such that the tray (11) is locked at the fixed position; and
when the tray locked at the fixed position (11) moves in a direction close to the first positioning protrusion (646), the other one of the two flat surfaces (651) abuts against the first positioning protrusion (646), and under the action of the elastic force of the elastic member (610), the tray (11) moves in a direction away from the fixed position, such that one of the two flat surfaces (651) abuts against the second positioning protrusion (647), and under the blocking effect of the second positioning protrusion (647), the pin (650) is rotated such that either one of the two flat surfaces (651) coincides with the first direction (a), and the pin (650) is allowed to withdraw from the positioning groove (640).

31. The 3D printer as claimed in claim 30, **characterized in that**, the positioning groove (640) comprises an entering section (648) and a locking section (649) that are in communication with each other, the first positioning protrusion (646) and the second positioning protrusion (647) are both arranged in the locking section (649), the bottom wall (641) is provided with a first leveling protrusion (644), and the first leveling protrusion (644) is located in the entering section (648); and
one of the two flat surfaces (651) abuts against the first leveling protrusion (644) under a condition that the tray (11) moves towards the fixed position, such that the pin (650) rotates in the entering section (648) to enable either one of the two flat surfaces (651) to coincide with the first direction (a), and the pin (650) is allowed to enter the locking section (649) from the entering section (648).

32. The 3D printer as claimed in claim 31, **characterized in that**, the bottom wall (641) is further provided with a second leveling protrusion (645) located in the entering section (648) and spaced from the first leveling protrusion (644), and the second leveling protrusion (645) is located at one side of the first leveling protrusion (644) proximate to the locking section (649); and
one of the two concave surfaces (652) abuts against the first leveling protrusion (644) under the condition that the tray (11) moves towards the fixed position, such that the pin (650) rotates to enable one of the two flat surfaces (651) to abut against the second leveling protrusion (645), and rotates in the entering section (648) to enable either one of the two flat surfaces (651) to coincide with the first direction (a), and the pin (650) is allowed to enter the locking section (649) from the entering section (648).

33. The 3D printer as claimed in claim 23, **characterized in that**, further comprising:
a lifting mechanism (17);
a platform connecting mechanism (28) connected to the lifting mechanism (17); and
a forming platform (12) comprising:
a platform body (101);
a first sliding connecting portion (104) connected to the platform body (101) and configured to be slidably connected to the platform connecting mechanism (28); and
a restricting portion (102) arranged on the first sliding connecting portion (104) and configured to be in fit with the platform connecting mechanism (28) when the platform body (101), slidable relative to the platform connecting mechanism (28), reaches a predetermined position, so as to restrict a sliding of the forming platform (12).

34. The 3D printer as claimed in claim 33, **characterized in that**, the restricting portion (102) comprises a movable block removably connected to the platform body (101), the movable block is configured to abut against the platform connecting mechanism (28) when the forming platform (12), slidable relative to the platform connecting mechanism (28), reaches the predetermined position.

35. The 3D printer as claimed in claim 33, **characterized in that**, the platform connecting mechanism (28) comprises:
a connecting seat (103) having a second sliding connecting portion (105), the second sliding connecting portion (105) is configured to be in sliding fit with the first sliding connecting portion (104), the second sliding connecting portion (105) is a sliding block or a sliding groove, and the first sliding connecting portion (104) is the sliding groove or the sliding block;
a limiting member (130) connected to the connecting seat (103) and configured to be in fit with the restricting portion (102) and restrict the sliding of the forming platform (12) relative to the connecting seat (103) when the forming platform (12) sliding relative to the connecting seat (103) reaches the predetermined position; and
a connecting member (140) connected to the connecting seat (103) and configured to be connected to the lifting mechanism (17) of the 3D printer.

36. The 3D printer as claimed in claim 35, **characterized in that**, a surface of the first sliding connecting portion (104) configured to be in contact with the second sliding connecting portion (105) is provided with a first positioning portion (112), a surface of the second sliding connecting portion (105) configured to be in contact with the first sliding connecting portion (104) is provided with a second positioning portion (123), and the first positioning portion (112) is configured to be in fit with the second positioning portion (123) when the forming platform (12) sliding relative to the connecting seat (103) reaches the predetermined position; and one of the first positioning portion (112) and the second positioning portion (123) is a positioning protrusion, and the other one of the first positioning portion and the second positioning portion is a positioning recess.

37. The 3D printer as claimed in claim 36, **characterized in that**, two ends of the positioning protrusion and two ends of the positioning recess are each provided with a first cambered transition surface in a sliding direction of the forming platform (12) relative to the connecting seat (103).

38. The 3D printer as claimed in claim 35, **characterized in that**, the limiting member (130) comprises a limiting block (131) removably connected to the connecting seat (103), and the restricting portion (102) is a limiting groove (113); and
the limiting block (131) is configured to be in fit with the limiting groove (113) when the forming platform (12) sliding relative to the connecting seat (103) reaches the predetermined position.

39. The 3D printer as claimed in claim 38, **characterized in that**, two ends of the limiting block (131) and two ends of the limiting groove (113) are each provided with a second cambered transition surface in a sliding direction of the forming platform (12) relative to the connecting seat (103).

40. The 3D printer as claimed in claim 35, **characterized in that**, the limiting member (130) comprises an elastic sheet (133) connected to the connecting seat (103); the restricting portion (102) is a limiting groove (113); and
the elastic sheet (133) is configured to be in fit with the limiting groove (113) when the forming platform (12) sliding relative to the connecting seat (103) reaches the predetermined position.

41. The 3D printer as claimed in claim 35, **characterized in that**, the limiting member (130) comprises a first magnetic member (134), and the restricting portion (102) comprises a second magnetic member (135) and a third magnetic member (136);
the second magnetic member (135) and the third magnetic member (136) are sequentially connected to the forming platform (12) in a sliding direction of the forming platform (12) relative to the connecting seat (103);
the first magnetic member (134) and the second magnetic member (135) repel each other when the forming platform (12) slides to a position spaced from the predetermined position relative to the connecting seat (103); and
the first magnetic member (134) and the third magnetic member (136) attract each other when the forming platform (12) slides to the predetermined position relative to the connecting seat (103).

42. The 3D printer as claimed in claim 23, **characterized in that**, further comprising a forming platform (12), the forming platform (12) is located at one side of the tray (11) and is configured for adhering a cured sheet formed by curing the printing material layer by layer to form a 3D object (1000), and the forming platform (12) is a disposable member.

43. The 3D printer as claimed in claim 42, **characterized in that**, a plurality of forming platforms (12) are provided, and the number of the forming platforms (12) is adapted to the preset number of the 3D objects (1000) to be printed.

44. The 3D printer as claimed in claim 42, **characterized in that**, the forming platform (12) is at least one of a plastic member, a straw member or a metal member, and is integrally formed.

45. The 3D printer as claimed in claim 42, **characterized in that**, the forming platform (12) is provided with an identifier (26), and the identifier (26) is configured to store a production data.

46. The 3D printer as claimed in claim 45, **characterized in that**, the production data stored in the identifier (26) comprises process parameters of post-processing or printing parameters of the 3D object (1000).

47. The 3D printer as claimed in claim 46, **characterized in that**, the identifier (26) is at least one of a two-dimensional code, a character code, a digital code, a bar code, a special pattern, a NFC tag, a RFID tag or an electronic chip.

48. The 3D printer as claimed in claim 23, **characterized in that**, further comprising:
a forming assembly; and
a shell (29) having a window (297), the window (297) allows the forming assembly to be taken out from or put into the shell (29);
a closing door (298) is arranged on the shell (29), and the closing door (298) is capable of automatically closing the window (297); or the window (297) is blocked by the forming assembly after the forming assembly is mounted in the shell (29).

49. The 3D printer as claimed in claim 48, **characterized in that**, the closing door (298) is arranged on the shell (29), and the closing door (298) automatically closes the window (297); and the 3D printer further comprises a driving mechanism and a first detection mechanism, the driving mechanism is connected to the closing door (298) in a transmission manner, the first detection mechanism is configured to detect whether the forming assembly has been put into the shell (29) or taken out from the shell (29), and the driving mechanism is configured to drive the closing door (298) to close the window (297) under a condition that the forming assembly has been put into or taken out from the shell, and to drive the closing door (298) to open the window (297) when an opening condition is satisfied.

50. The 3D printer as claimed in claim 49, **characterized in that**, further comprising a second detection mechanism, the second detection mechanism is configured to detect whether the forming assembly is close to the closing door (298), and the opening condition comprises a condition that the second detection mechanism detects that the forming assembly is close to the closing door (298); and/or
the second detection mechanism comprises a reader, an identifier is arranged on the forming assembly, and the opening condition comprises a condition that the second detection mechanism identifies the identifier on the forming assembly as a verified identifier.

51. The 3D printer as claimed in claim 48, **characterized in that**, further comprising a forming platform (12), and the forming assembly comprises the tray (11) and/or the forming platform (12).

52. The 3D printer as claimed in claim 23, **characterized in that**, the tray (11) comprises:
a tray body (411) having an opening and being provided with a first fitting member (422);
a cover body (415) provided with a second fitting member (417) in fit with the first fitting member (422), and the cover body (415) has a closed position in which it covers the tray body (411) to seal the opening, and an open position in which it exposes the opening; the second fitting member (417) and the first fitting member (422) are in fit with each other to lock the cover body (415) and the tray body (411) to maintain the closed position when the cover body (415) is located at the closed position; and
an elastic supporting member (423) arranged between the cover body (415) and the tray body (411) and configured to provide an elastic force for keeping the cover body (415) at the open position.

53. The 3D printer as claimed in claim 52, **characterized in that**, the cover body (415) is pivotably arranged at one end of the tray body (411), so as to open or close the opening of the tray body (411).

54. The 3D printer as claimed in claim 23, **characterized in that**, further comprising a forming platform (12), the forming platform (12) is provided with a forming surface (125), and the forming surface (125) is configured for adhering a 3D printed object formed of a photocuring material subjected to exposure curing, the forming platform is made of a modified plastic material, and an adhesive force between the forming surface (125) and a printing layer formed of the photocuring material subjected to exposure curing is no less than 1.5 N or 3 N per square centimeter.

55. The 3D printer as claimed in claim 54, **characterized in that**, the forming platform is made of a modified acrylonitrile butadiene styrene (ABS) material, and raw materials of the modified ABS material comprise 70wt%-80wt% of ABS resin, 5wt%-20wt% of methacrylic resin, 5wt%-10wt% of reinforcing fiber, and 1wt%-5wt% of coupling agent.

56. The 3D printer as claimed in claim 23, **characterized in that**, further comprising a forming platform (12), the forming platform (12) is made of plastic and is provided with a forming surface (125) obtained by surface treatment, and the forming surface (125) is configured for adhering a 3D printed object formed of a photocuring material subjected to exposure curing.

57. The 3D printer as claimed in claim 56, **characterized in that**, the surface treatment comprises at least one of spraying, sandblasting, frosting, carving, electroplating, coating film, printing, texturing, polishing, paint spraying, oil applying, ion plating or laser treatment.

58. The 3D printer as claimed in claim 56, **characterized in that**, the surface treatment is spraying, and raw materials used by the spraying comprise 100 parts of light-cured resin, 80-150 parts of diluent and 0.05-2 parts of initiator in parts by mass;
the light-cured resin is selected from at least one of acrylics, allyl ethers or vinyl ethers, and the light-cured resin has a number-average molecular weight ranging from 4,000 to 100,000.

59. The 3D printer as claimed in claim 58, **characterized in that**, the light-cured resin comprises 50-90 parts of first resin and 10-50 parts of second resin, and the first resin has a number-average molecular weight ranging from 4,000 to 20,000, the second resin has a number-average molecular weight ranging from 40,000 to 100,000;
the first resin is selected from at least one of RA3080, RA3081, RA3083, RA3091, 6071, 6175-3, or SD7508, and
the second resin is selected from at least one of SD1000 and SWA20.

60. The 3D printer as claimed in claim 56, **characterized in that**, the surface treatment is sandblasting, and the forming surface (125) after the sandblasting has a roughness Ra ranging from 0.1 µm to 5µm.

61. The 3D printer as claimed in claim 23, **characterized in that**, further comprising a forming platform (12), the forming platform is provided with a forming surface (125) and a back surface (126) opposite to the forming surface (125), and the forming platform further comprises a plurality of through holes (124) extending through the forming surface (125) and the back surface (126), and hole diameters of the plurality of through holes (124) are gradually increased from the forming surface (125) to the back surface (126).

62. A 3D printing method, **characterized in that**, applied to the material supply mechanism as claimed in any one of claims 1-20, or the tray assembly as claimed in any one of claims 21-22, or the 3D printer as claimed in any one of claims 23-61, the 3D printer comprises a driving apparatus, and the driving apparatus is connected to the material supply mechanism (14); and the 3D printing method comprises:
receiving a supply instruction;
controlling the driving apparatus (20) to rotate forwards according to the supply instruction, so as to convey the printing material to the tray (11) from the material supply mechanism (14); and/or receiving a stirring instruction; and
controlling the driving apparatus (20) to rotate reversely according to the stirring instruction, so as to stir the printing material in the material supply mechanism (14).

63. The 3D printing method as claimed in claim 62, **characterized in that**, an output assembly (300) comprises a locking body (342) and a locking member (341), the locking body (342) is provided with a discharge cavity (3422) and a switchable cavity (3421) that are in communication with each other, the discharge cavity (3422) is configured for delivering the printing material, the switchable cavity (3421) is in communication with the storage cavity (111), and the locking member (341) is movably arranged in the switchable cavity (3421);
after receiving a supply instruction, and before controlling the driving apparatus (20) to rotate forwards, the 3D printing method further comprises:
controlling the locking member (341) to move to open the switchable cavity (3421); and/or
after receiving a stirring instruction, and before controlling the driving apparatus (20) to rotate reversely, the 3D printing method further comprises:
controlling the locking member (341) to move to close the switchable cavity (3421).

64. The 3D printing method as claimed in claim 62, **characterized in that**, an output assembly (300) comprises a discharge member (310) and a switching member (320), the discharge member (310) is provided with a discharge channel (311) in communication with a storage cavity (111) of a storage body (110);
controlling the driving apparatus (20) to rotate forwards according to the supply instruction comprises:
according to the supply instruction, controlling the driving apparatus (20) to rotate forwards at an operation speed greater than or equal to a preset speed, so as to enable a pressure applied by the printing material to the switching member (320) to be greater than or equal to a preset pressure to open the discharge channel (311); and/or
after the receiving a stirring instruction, the 3D printing method further comprises:
according to the stirring instruction, controlling the driving apparatus (20) to rotate forwards at an operation speed less than the preset speed, so as to enable a pressure applied by the printing material to the switching member (320) to be less than a preset pressure to close the discharge channel (311).

65. The 3D printing method as claimed in claim 62, **characterized in that**, the 3D printer further comprises a forming platform (12), and the 3D printing method further comprises:
performing photocuring 3D printing by the 3D printer, such that the printing material forms a 3D object (1000) on the forming platform (12);
post-processing the 3D object (1000); and
separating the 3D object (1000) from the forming platform (12);
the forming platform (12) is a disposable member.

66. The 3D printing method as claimed in claim 65, **characterized in that**, the post-processing the 3D object (1000) precedes the separating the 3D object (1000) from the forming platform (12).

67. The 3D printing method as claimed in claim 65, **characterized in that**, the performing photocuring 3D printing by the 3D printer, such that the printing material forms the 3D object (1000) of on the forming platform (12) comprises:
performing photocuring 3D printing by the 3D printer to form a supporting structure (25) on the forming platform (12) by using the printing material and form the 3D object (1000) on the supporting structure (25); and
the separating the 3D object (1000) from the forming platform (12) comprises:
breaking the supporting structure (25) to separate the 3D object (1000) from the forming platform (12), and retaining at least part of the supporting structure (25) on the forming platform (12).

68. The 3D printing method as claimed in claim 65, **characterized in that**, the forming platform (12) is a plastic member integrally formed, and the forming platform (12) is subjected to surface treatment of at least one of sandy finish, electrosparking, sandblasting, electroplating, oil spraying, silk screen printing, laser carving, water transfer printing, texturing, machining fine carving, film pasting, chemical corrosion or wiredrawing.

69. A 3D printing method, **characterized in that**, applied to a 3D printer comprising the material supply mechanism as claimed in claim 19, and the 3D printer further comprises a liquid level measuring mechanism; and the 3D printing method comprises:
receiving a signal sent by the liquid level measuring mechanism that a liquid level of the printing material in the tray (11) is lower than a preset liquid level;
controlling the conveying member (120) to rotate, and controlling the output assembly (300) to deliver the printing material from the storage cavity (111) to the tray (11);
receiving a signal sent by the liquid level measuring mechanism that the liquid level of the printing material in the tray (11) is equal to or higher than the preset liquid level; and
controlling the output assembly (300) to stop delivering the printing material from the storage cavity (111) to the tray (11).

70. A 3D printing method, **characterized in that**, applied to a 3D printer comprising the material supply mechanism as claimed in claim 20, and the 3D printing method comprises:
receiving a supply instruction;
controlling the conveying member (120) to rotate according to the supply instruction, so that a pressure applied by the printing material to the switching member (320) is greater than or equal to a preset pressure, and the switching member (320) opens the discharge channel (311) to convey the printing material to the tray (11); and/or
receiving a stirring instruction; and
controlling the conveying member (120) to rotate according to the stirring instruction, so that the pressure applied by the printing material to a switching member (320) is less than the preset pressure, and the switching member (320) closes the discharge channel (311) to stir the printing material.
